(19) Europäisches Patentamt
European Patent Office
Office européen des brevets

(11) **EP 2 492 001 A1**

(12) **EUROPEAN PATENT APPLICATION**
published in accordance with Art. 153(4) EPC

(43) Date of publication:
**29.08.2012 Bulletin 2012/35**

(21) Application number: **10825079.6**

(22) Date of filing: **18.10.2010**

(51) Int Cl.:
**B01D 69/10** (2006.01)   **D21H 13/10** (2006.01)
**D21H 15/02** (2006.01)

(86) International application number:
**PCT/JP2010/068791**

(87) International publication number:
**WO 2011/049231 (28.04.2011 Gazette 2011/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2009   JP 2009242112**
**25.01.2010   JP 2010013073**
**25.01.2010   JP 2010013074**
**25.01.2010   JP 2010013072**
**01.03.2010   JP 2010044424**
**04.03.2010   JP 2010047271**
**19.03.2010   JP 2010064625**
**13.07.2010   JP 2010158390**
**22.07.2010   JP 2010165203**
**11.08.2010   JP 2010179989**

(71) Applicant: **Mitsubishi Paper Mills Limited**
**Tokyo 100-0005 (JP)**

(72) Inventors:
• **YOSHIDA, Mitsuo**
**Tokyo 100-0005 (JP)**
• **TAKAYAMA, Kazuhiko**
**Tokyo 100-0005 (JP)**
• **KIMURA, Kaoru**
**Tokyo 100-0005 (JP)**
• **TAKEUCHI, Tsunekatsu**
**Tokyo 100-0005 (JP)**
• **FUJIKI, Hitoshi**
**Tokyo 100-0005 (JP)**
• **FUKUDA, Motomichi**
**Tokyo 100-0005 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **SEMIPERMEABLE MEMBRANE SUPPORTING BODY, SPIRAL-WOUND SEMIPERMEABLE MEMBRANE ELEMENT, AND METHOD FOR PRODUCING SEMIPERMEABLE MEMBRANE SUPPORTING BODY**

(57)     A semipermeable membrane supporting material formed of a non-woven fabric comprising two or more main synthetic fibers having different fiber diameters and a binder synthetic fiber and having a semipermeable membrane application surface and a non-application surface having a semipermeable membrane application surface:non-application surface smoothness ratio of from 5.0:1.0 to 1.1:1.0, a semipermeable membrane supporting material formed of a non-woven fabric comprising a main synthetic fiber and a binder synthetic fiber, having an average breaking length of less than 4.0 km in the machine direction (MD) and the cross direction (CD) at an elongation by 5 % and having a dimensional change ratio, measured under heat in the cross direction (CD), of -0.3 to +1.0 %, a spiral-type semipermeable membrane element including the above semipermeable membrane supporting material, and a process for producing a semipermeable membrane supporting material.

Fig. 1

(A)   (B)

(C)

(D)

◐ Metal      ◓ Metal, Cotton or Elastic
◕ Cotton or Elastic

EP 2 492 001 A1

## Description

Technical Field

This invention relates to a semipermeable membrane supporting material, a spiral type semipermeable element and a method for producing a semipermeable membrane supporting material.

Background Art

1 In the fields of seawater desalination, water clarification, food concentration, wastewater treatment and production of ultrapure water for medical use typified by blood filtration and for the cleaning of semiconductors, semipermeable membranes are widely used. Semipermeable membranes are composed of synthetic resins such as a cellulose resin, a polysulfone resin, a polyacrylonitrile resin, a fluorine resin, a polyester resin, a polyamide resin and a polyimide resin. Since, however, a single semipermeable membrane is poor in mechanical strength, it is used in the form of an embodiment in which the semipermeable membrane is provided on one surface ("semipermeable membrane application surface" hereinafter) of a semipermeable membrane supporting material composed of a nonwoven fabric or woven fabric.

With regard to an embodiment in which a semipermeable membrane supporting material is provided with a semipermeable membrane, there is widely employed a method in which a synthetic resin such as the above polysulfone resin, or the like, is dissolved in an organic solvent to prepare a semipermeable membrane solution and then the semipermeable membrane solution is applied to a semipermeable membrane supporting material. And, for implementing effective filtering, a spiral type semipermeable membrane element is formed, and further, a semipermeable membrane module is assembled (for example, see Patent Document 1).

For obtaining high filter flux and filter performances, the semipermeable membrane is required to have a surface roughness decreased, the formation of the semipermeable membrane is required to be free from the occurrence of any curving in the cross direction or creasing, and the semipermeable membrane having a uniform thickness is required to be formed on a semipermeable membrane supporting material. For this purpose, the semipermeable application surface of the semipermeable membrane supporting material is required to have excellent smoothness. For attaining excellent filter performances, further, the semipermeable membrane and the semipermeable membrane supporting material are also required to have excellent adhesion. Further, when a semipermeable membrane module is assembled, there is the step of attaching the surface ("non-application surface" hereinafter) opposed to the semipermeable membrane application surface to the non-application surface of another semipermeable membrane supporting material with an adhesive, so that these non-application surfaces are also required to be excellent in adhesion. Further, the semipermeable membrane solution is required not to strike through onto the non-application surface. That is because when the striking-through takes place, there is caused a problem that the thickness of the semipermeable membrane becomes non-uniform or that the adhesion between the non-application surfaces is decreased.

For a semipermeable membrane supporting material, there is proposed a non-woven fabric which contains a main fiber and a binder fiber and which is produced by a wet sheet making method and is treated under heat and pressure. For example, there is proposed a semipermeable membrane supporting material composed of a non-woven fabric having a multiple-layered structure based on a dual structure of a surface layer (thick fiber layer) using a thick fiber and having a large surface roughness and a densely structured reverse surface layer (fine fiber layer) using a fine fiber (for example, see Patent Document 2). Specifically, it describes a semipermeable membrane supporting material having a thick fiber layer as a semipermeable membrane application surface and a fine fiber layer as a non-application surface and a semipermeable membrane supporting material which is formed by sandwiching a fine fiber layer with thick fiber layers and which uses the thick fiber layers as a semipermeable membrane application surface and a non-application surface. Since, however, a thick fiber is used in the semipermeable membrane application surface, the semipermeable membrane application surface has low smoothness although the semipermeable membrane and the semipermeable membrane supporting material are improved in adhesion. Further, since a thick fiber is used, the semipermeable membrane solution is infiltrated into the semipermeable membrane supporting material, and there has been a problem that a large amount of the semipermeable membrane solution is required for obtaining a desired semipermeable membrane thickness. In the former case, further, a fine fiber is used in the non-application surface, so that there is a problem that the adhesion between the non-application surfaces is poor.

There is also disclosed a semipermeable membrane supporting material composed of a single-layered structure nonwoven fabric having a semipermeable membrane application surface of which the surface roughness is made larger than that of the non-application surface. However, this semipermeable membrane supporting material has a problem on the smoothness of the semipermeable membrane application surface, the uniformity of the semipermeable membrane and adhesion between non-application surfaces (for example, see Patent Document 3). In the semipermeable membrane supporting material in Patent document 3, the tensile strength ratio in the sheet making direction (machine direction, MD) and the width direction (cross direction, CD) is defined, and this is defined for the purpose of preventing a semipermeable membrane from curving in the width direction when it is formed. For bringing the tensile strength ratio in the sheet making direction and the width direction into a specified range, it is required to adjust the concentration of dispersion of mixed raw materials, the flow rate, the rate of wire of inclined wire cloth, the inclination angle, etc., in the sheet-making step. Further, even when the tensile strength ratio in the sheet making flow direction and the width direction is adjusted, it is difficult to control the shrinking of the semipermeable membrane supporting material in the width direction which shrinking takes place in the steps of washing with hot water and drying when the semipermeable membrane is formed, and the occurrence of creasing and curving caused by shrinking in the width direction has not been overcome yet. Further, Patent Document 3 describes that when the content of a binder fiber is increased, the smoothness of the semipermeable membrane supporting material is improved, while the gas permeability is decreased to excess, and there is caused a problem that the filter flux during filtering is decreased.

Further, Patent Document 3 proposes a method of adjusting the gas permeability and pore size of the semipermeable membrane supporting material for improving the adhesion between the semipermeable membrane and the semipermeable membrane supporting material and preventing the striking-through. The above gas permeability according to JIS L1096 is calculated on the basis of an amount of air that passes an inside of a semipermeable membrane supporting material from one surface thereof to the other surface thereof, and it does not accurately reflect the striking-through of a semipermeable membrane solution applied on the semipermeable membrane application surface onto the non-application surface. When a semipermeable membrane solution is applied to a semipermeable membrane supporting material having gas permeability in the range shown in Patent Document 3, therefore, the semipermeable membrane solution strikes through the semipermeable membrane supporting material to the non-application surface thereof. When a semipermeable membrane module is made by attaching non-application surfaces of the semipermeable membrane supporting materials, the adhesive strength is decreased, and there is caused a problem that the filtering performance is greatly decreased. Further, there is proposed a method of decreasing the gas permeability of a supporting material in which the fiber diameter of a fiber constituting the semipermeable membrane supporting material is decreased. In this case, however, the smoothness of a non-application surface is also increased, and there has been a problem that the adhesion of non-application surfaces is decreased.

In Patent Document 3, an average pore size by a bubble point method according to JIS K3832 is determined by a method in which a gas in a pressed state is ejected from the lower surface of a semipermeable membrane supporting material filled with a liquid of which the surface tension is known, and the pore size is determined on the basis of a change in pressure of the gas when the gas is passed on the upper surface of the semipermeable membrane supporting material. This does not accurately reflect the striking-through of the semipermeable membrane solution applied on the semipermeable membrane application surface onto the non-application surface, either. When a semipermeable membrane solution is applied to the semipermeable membrane supporting material having a pore size in the range shown in Patent Document 3, therefore, it is difficult to prevent the striking-through completely.

As a semipermeable membrane supporting material that prevents the striking-through of a semipermeable membrane solution to improve the adhesion between a semipermeable membrane and a semipermeable membrane supporting material and that can be inexpensively supplied, there has been proposed a double-layer-structured semipermeable membrane supporting material containing a fiber for paper making (pulp) (for example, see Patent Document 4). Since, however, the layer of a semipermeable membrane application surface is structurally denser than the surface of a non-application surface, the semipermeable membrane supporting material has had a problem in uniformity and smoothness of the semipermeable membrane application surface and adhesion between non-application surfaces. Further, when pulp is used, molds and fungi proliferate, so that the semipermeable membrane supporting material has a crucial problem that no clean water can be produced.

Unlike the semipermeable membrane supporting materials described in Patent Documents 2 to 4, there is proposed a semipermeable membrane supporting material in which the density of a non-application surface is lower than the density of a semipermeable membrane application surface and the semipermeable membrane application surface is smoother than the non-application surface (for example, see Patent Document 5). However, a semipermeable membrane is provided such that it reaches the concave portion that a semipermeable membrane supporting material has in a non-application surface, or a semipermeable membrane is provided such that it reaches a non-application surface through pores formed in a semipermeable membrane application surface, so that there is a problem that the thickness of the semipermeable membrane cannot be uniform. As a method of preventing the striking-through of a semipermeable membrane solution onto a non-application surface, further, Patent Document 5 also discloses a method in which the average density of a region that occupies up to 50 % of the total thickness from a non-application surface is adjusted to a range of 5 to 90 % of the average density of a region that occupies up to 50 % of the total thickness from an application surface. However, the above method has a problem that the striking-through of a semipermeable membrane solution cannot be prevented in a semipermeable membrane supporting material having a characteristic feature that the absolute value of average density of a region that occupies up to 50 % of the total thickness from the semipermeable membrane application surface is low.

As a semipermeable membrane supporting material which is improved in dimensional stability when a tensile stress is exerted, which has a smooth semipermeable membrane application surface and is free from the striking-through and which is excellent in adhesion of a semipermeable membrane, there is proposed a semipermeable membrane supporting material formed of a non-woven fabric having a breaking length average value of 4.0 km or more in the machine direction (MD) and the cross direction (CD) when it is extended by 5 % and having an air permeability of 0.2 to 10.00 cc/cm$^2$·second (see, for example, Patent Document 6). The above semipermeable membrane supporting material is a non-woven fabric having high strength and elongation that is small. For producing the above semipermeable membrane supporting material, therefore, it is required to use a polyester fiber having a high birefringence (Δn) and a specific heat-shrinking stress. Further, for improving the breaking length, it is required to increase the heat and pressure that are applied to the non-woven fabric in the step of treatment under heat and pressure, and although there is produced an effect that the nonuniformity of the non-woven fabric caused by partial non-uniform elongation/shrinkage of a fiber depending upon a tensile stress or a heat is overcome, the heat and pressure are exerted on the entire thickness direction of the non-woven fabric to excess, and there are still a problem that a binder fiber contained in the non-woven fabric is melted to excess to decrease voids to excess or that a creasing takes place when a semipermeable membrane is formed by applying a coating solution. The smoothness of the semipermeable membrane application surface requires a further improvement. In particular, in Patent Document 6, since a semipermeable membrane supporting material is produced such that the semipermeable application surface and the non-application surface are rendered equivalent in smoothness, there is a problem that it is difficult to make compatible the smoothness of the semipermeable membrane application surface and the adhesion between the semipermeable membrane and the semipermeable membrane supporting material, and there has been further a remaining problem with the adhesion between non-application surfaces.

For improving the adhesion between a semipermeable membrane and a semipermeable membrane supporting material, there is proposed a semipermeable membrane supporting material formed by incorporating a fiber having a morphologically different cross-section into a semipermeable membrane application surface layer. However, when a fiber having a morphologically different cross-section is incorporated into a semipermeable membrane supporting material, a fiber is caught in convex or concave portions formed in the fiber having morphologically different cross-section and entangled when the fiber is dispersed in water in a wet paper making step, and there has been a problem that the fiber cannot be uniformly dispersed (for example, see Patent Document 7).

There is proposed the technique of improving the adhesion between a semipermeable membrane and a semipermeable membrane supporting material by incorporating a polyacrylonitrile synthetic fiber into the semipermeable membrane supporting material since the polyacrylonitrile synthetic fiber is dissolved in a solvent used in a semipermeable membrane solution (for example, see Patent Document 8). In some solvents used in a semipermeable membrane solution, however, it is not dissolved therein. Further, even when a solvent in which it is dissolved is used, no improvement in adhesion can be expected since the time period from the contact of the semipermeable membrane solution to the semipermeable membrane supporting material to the start of a washing step with water is very short. Further, there is also a remaining problem that the fluffing of a semipermeable membrane supplication surface occurs to decrease the smoothness of the semipermeable membrane application surface.

For the purpose of improving the uniformity of a semipermeable membrane supporting material to prevent the striking-through, in the step of wet sheet making from a fiber slurry obtained by dispersing a synthetic fiber in water to produce a nonwoven fabric, there is proposed a sheet making method in which the content of a fiber in the above fiber slurry in the sheet making is adjusted to 0.01 to 0.1 mass%, and 3 to 15 mass%, based on the fiber content, of a water-soluble polymer having a molecular weight of 5,000,000 or more as a polymer thickener is incorporated into the above fiber slurry (for example, see Patent Document 9). Since, however, the polymer thickener is added to excess, uniformity is improved, but the viscosity of the fiber slurry on a forming fabric is increased, and there is possibly caused a problem that the drainability from the forming fabric is decreased which keeps the speed of production from increasing. There has been also a problem that the polymer thickener remains on the surface of the fiber that forms a semipermeable membrane supporting material after the sheet-making.

There is also proposed a semipermeable membrane supporting material obtained by incorporating two binder fibers having different melting points and employing different temperatures for drying and treating under heat and pressure in a wet sheet-making method. This seeks to easily produce a semipermeable membrane supporting material by a wet sheet-making method, while nothing has been taken into consideration with regard to the adhesion between a semipermeable membrane and the semipermeable membrane supporting material, the adhesion between non-application surfaces, the smoothness of a semipermeable membrane application surface and the prevention of striking-through (for example, see Patent Documents 10 and 11).

The smoothness and thickness uniformity of the semipermeable membrane supporting material are adjusted by treatment under heat and pressure (for example, see Patent Documents 2 to 11). For the treatment under heat and pressure, a combination of a metal roll with a metal roll, a combination of a metal roll with an elastic roll and a method of carrying out heat treatment first and then carrying out pressing treatment are described. Further, there is proposed a method of calendering at a glass transition temperature of a synthetic fiber constituting a semipermeable membrane supporting material up to a temperature obtained by adding 20˚C to the glass transition temperature (for example, see Patent Document 12). However, the combination of rolls and the temperature are adjusted, only to cause a problem that the semipermeable membrane supporting material has the variance of the entire thickness and uniformity to bring many portions that are weak in the adhesion between the semipermeable membrane and the semipermeable membrane supporting material and the adhesion between non-application surfaces. Further, there is also caused a problem that a pinhole and damage occur in that portion of a semipermeable membrane which has the occurrence of fluffing, to degrade the filtering performance.

As is described above, there has been obtained no semipermeable membrane supporting material that is well-balanced in satisfying the performances of the smoothness of a semipermeable membrane application surface, the adhesion between a semipermeable membrane and the semipermeable membrane supporting material, the adhesion between non-application surfaces, the prevention of the striking-through, and the prevention of curving in the cross direction and creasing during the formation of the semipermeable membrane.

Prior Art Documents

Patent Documents

Patent Document 1: JP2001-252543A
Patent Document 2: JP60-238103A
Patent Document 3: JP2002-95937A (US Patent Application Publication No. 2002/0056535)
Patent Document 4: JP2009-178915A
Patent Document 5: JP2003-245530A (International Publication No. 2003/049843, US Patent Application Publication No. 2005/0087070)
Patent Document 6: JP10-225630A (International Publication No. 2000/09246, European Patent No. 1044719)
Patent Document 7: JP11-347383A
Patent Document 8: JP2001-79368A (US Patent Application Publication No. 2005/0176330)
Patent Document 9: JP2008-238147A
Patent Document 10: US Patent No. 5,851,355
Patent Document 11: US Patent No. 6,156,680
Patent Document 12: JP60-251904A

Summary of the Invention

Problems to be Solved by the Invention

It is an object of this invention to provide a semipermeable membrane supporting material that is excellent in smoothness of a semipermeable membrane application surface and free of the striking-through of a semipermeable membrane solution, that permits the uniform application of a semipermeable membrane and is free of the occurrence of curving in the cross direction and creasing during the formation of the semipermeable membrane and that has high peel strength between the semipermeable membrane and the semipermeable membrane supporting material and also has excellent in adhesion between non-application surfaces, a spiral type semipermeable membrane element formed from such a semipermeable membrane supporting material, and a method for producing a semipermeable membrane supporting material.

Means to Solve the Problems

For achieving the above object, the present inventors have made diligent studies and have found the following inventions.

(1) A semipermeable membrane supporting material formed of a non-woven fabric comprising two or more main synthetic fibers having different fiber diameters and a binder synthetic fiber and having a semipermeable membrane application surface and a non-application surface having a semipermeable membrane application surface:non-application surface smoothness ratio of from 5.0:1.0 to 1.1:1.0.
(2) A semipermeable membrane supporting material as recited in (1), wherein the main synthetic fibers have an average fiber diameter of 20.0 $\mu$m or less.
(3) A semipermeable membrane supporting material as recited in (1) or (2), wherein all of the main synthetic fibers have a fiber diameter of 20.0 $\mu$m or less.

(4) A semipermeable membrane supporting material as recited in any one of (1) to (3), which contains at least one fiber having a fiber diameter of 10.0 $\mu$m or less as a main synthetic fiber.

(5) A semipermeable membrane supporting material as recited in any one of (1) to (4), which contains, as main synthetic fibers, a thick fiber having an aspect ratio of 200 to 1,000 and a fiber diameter of 20 $\mu$m or less and a fine fiber having a smaller fiber diameter than the thick fiber and having an aspect ratio of 200 to 2,000.

(6) A semipermeable membrane supporting material as recited in any one of (1) to (5), wherein the main synthetic fibers and the binder synthetic fiber have different fiber diameters.

(7) A semipermeable membrane supporting material as recited in any one of (1) to (6), which further comprises a fibrillated organic fiber.

(8) A semipermeable membrane supporting material as recited in any one of (1) to (7), wherein the non-woven fabric has a multiple-layered structure.

(9) A semipermeable membrane supporting material as recited in (8), wherein the main synthetic fibers contained in a semipermeable membrane application surface layer have an average fiber diameter smaller than an average fiber diameter of the main synthetic fibers contained in a non-application surface layer.

(10) A semipermeable membrane supporting material as recited in any one of (1) to (9), wherein the semipermeable membrane application side surface has a surface roughness arithmetic mean (Ra) of 5.0 to 15.0 $\mu$m.

(11) A semipermeable membrane supporting material as recited in any one of (1) to (10), wherein the semipermeable membrane application side surface has a surface ten-point average roughness (Rz) of 150 $\mu$m or less.

(12) A semipermeable membrane supporting material as recited in any one of (1) to (11), wherein the semipermeable membrane application side surface has an absorption coefficient of 5 to 100 ml/m$^2\cdot$msec$^{1/2}$ when measured with a Bristow tester using a solution of a polysulfone resin having a solid concentration of 15 mass% in n-methylpyrrolidone at 25°C-60 %RH.

(13) A semipermeable membrane supporting material as recited in any one of (1) to (12), wherein the semipermeable membrane application side surface has a dynamic liquid transition amount of 5 to 30 ml/m$^2$ for a contact time period of 0.2 second when measured with a Bristow tester using a solution of a polysulfone resin having a solid concentration of 15 mass% in n-methylpyrrolidone at 25°C-60 %RH.

(14) A semipermeable membrane supporting material formed of a non-woven fabric comprising a main synthetic fiber and a binder synthetic fiber, having an average breaking length of less than 4.0 km in the machine direction (MD) and the cross direction (CD) at an elongation by 5 % and having a dimensional change ratio, measured under heat in the cross direction (CD), of -0.3 to +1.0 %.

(15) A semipermeable membrane supporting material as recited in (14), which has a semipermeable membrane application surface having smoothness higher than that of a non-application surface.

(16) A semipermeable membrane supporting material as recited in (14) and (15), wherein the main synthetic fiber has an elongation percentage (JIS L1013 2010) of 25 to 150 % and has a tensile strength of 0.08 to 0.8 N/tex.

(17) A spiral type semipermeable membrane element comprising the semipermeable membrane supporting material recited in any one of (1) to (16).

(18) A process for producing the semipermeable membrane supporting material recited in any one of (1) to (16), which comprises bringing a single-layered wet sheet produced by means of one paper machine selected from the group consisting of a Fourdrinier machine, a cylinder machine and an inclined-wire machine or a multilayer-structured wet sheet produced by means of a combination paper machine that is a combination of the same or different machines selected from the said group into intimate contact with a heated roll to dry it under heat and pressure, and processing said sheet under heat and pressure.

(19) A process for producing a semipermeable membrane supporting material as recited in (18), wherein the roll used for processing under heat and pressure is an induction heated metal roll.

(20) A process for producing a semipermeable membrane supporting material as recited in (18) or (19), wherein the roll used for processing under heat and pressure is a jacket roll.

(21) A process for producing a semipermeable membrane supporting material as recited in any one of (18) to (20), wherein a roll having a surface temperature of -50°C to +10°C relative to a melting point of the binder synthetic fiber is brought into contact with a semipermeable membrane application surface in the processing under heat and pressure.

(22) A process for producing a semipermeable membrane supporting material as recited in any one of (18) to (21), wherein the processing under heat and pressure comprises passing the sheet through a first heat and pressure roll nip and a second heat and pressure roll nip, the sheet being moved past the second heat and pressure roll nip within 60 seconds after it moves past the first heat and pressure roll nip.

(23) A process for producing a semipermeable membrane supporting material as recited in any one of (18) to (22), wherein the processing under heat and pressure comprises passing the sheet through a first heat and pressure roll nip and a second heat and pressure roll nip, and further comprises the step of heating the sheet with a heating apparatus between the first heat and pressure roll nip and the second heat and pressure roll nip.

(24) A process for producing a semipermeable membrane supporting material as recited in (23), wherein the heating apparatus is a roll-shaped heating apparatus.

(25) A process for producing a semipermeable membrane supporting material as recited in (18), wherein a single-layered wet sheet produced by means of one paper machine selected from the group consisting of a Fourdrinier machine, a cylinder machine and an inclined-wire machine or a multilayer-structured wet sheet produced by means of a combination paper machine that is a combination of the same or different machines selected from the said group is brought into intimate contact with a heated roll and dried under heat and pressure to produce a sheet, and then said sheet is processed under heat and pressure within 10 minutes.

Effect of the Invention

The first feature of this invention is that the semipermeable membrane supporting material is formed of a non-woven fabric comprising two or more main synthetic fibers having different fiber diameters and a binder synthetic fiber and having a semipermeable membrane application surface:non-application surface smoothness ratio of from 5.0:1.0 to 1.1:1.0. Owing to a three-dimensional network formed by stepwise mixing fibers having different fiber diameters and the smoothness ratio of from 5.0:1.0 to 1.1:1.0 that the semipermeable membrane application surface and the non-application surface have, there can be produced a semipermeable membrane supporting material through which a semipermeable membrane solution strikes with difficulty, which is also excellent in the smoothness of a semipermeable membrane application surface, which permits the uniform application of a semipermeable membrane thereon, which has excellent adhesion between a semipermeable membrane and the semipermeable membrane supporting material and which is also excellent in adhesion between non-application surfaces.

The second feature of this invention is that the semipermeable membrane supporting material is formed of a non-woven fabric comprising main synthetic fibers and a binder synthetic fiber, having a breaking length average value of less than 4.0 km in the machine direction (MD) and the cross direction (CD) at an elongation by 5 %, and having a dimensional change ratio of -0.3 to +1.0 % when measured under heat in the cross-direction (CD). A non-woven fabric having a dimensional change ratio of -0.3 to +1.0 % when measured under heat in the cross-direction (C) is used for the semipermeable membrane supporting material while keeping the breaking length low as described above, so that there can be produced a semipermeable membrane supporting material that is free of curving in the cross direction and creasing during the formation of a semipermeable membrane.

Brief Description of Drawings

Fig. 1 shows schematic drawings of combinations and arrangements of rolls used for processing under heat and pressure and states in which sheets are passed in this invention.
Fig. 2 shows schematic drawings of combinations and arrangements of rolls used for processing under heat and pressure and states in which sheets are passed in this invention.
Fig. 3 shows schematic drawings of combinations and arrangements of rolls used for processing under heat and pressure and states in which sheets are passed in this invention.
Fig. 4 shows schematic drawings of combinations and arrangements of rolls used for processing under heat and pressure and states in which sheets are passed in this invention.
Fig. 5 shows schematic drawings of combinations and arrangements of rolls used for processing under heat and pressure and states in which sheets are passed in this invention.
Fig. 6 shows schematic drawings of combinations and arrangements of rolls used for processing under heat and pressure and states in which sheets are passed in this invention.
Fig. 7 shows schematic drawings of combinations and arrangements of rolls used for processing under heat and pressure and states in which sheets are passed in this invention.

Preferred Embodiments of the Invention

"The semipermeable membrane supporting material formed of a non-woven fabric comprising two or more main synthetic fibers having different fiber diameters and a binder synthetic fiber and having a semipermeable membrane application surface:non-application surface smoothness ratio of from 5.0:1.0 to 1.1:1.0" as the first feature of this invention will be explained.

The main synthetic fibers are synthetic fibers that form a network of a semipermeable membrane supporting material without being fused or bonding at a low temperature. For example, they include polyolefin, polyamide, polyacryl, vinylon, vinylidene, polyvinyl chloride, polyester, benzoate, polychlarl and phenolic fibers, while a polyester fiber having high heat resistance is more preferred. Further, semisynthetic fibers such as acetate, triacetate and promix and regenerated fibers such as rayon, cupra and lyocell fiber may be incorporated so long as they do not impair performances.

When a fiber having one fiber diameter as a main synthetic fiber and two or more fibers having different fiber diameters as binder fibers are incorporated, the binder synthetic fibers maintain fiber forms during wet sheet making and play a role in forming a complicated fiber structure, while they are softened or melted due to a drying step or the processing under heat and pressure to change the fiber form, so that they finally have difficulty in contributing to the fiber network of the semipermeable membrane supporting material. When two or more main synthetic fibers having different fiber diameters are incorporated like this invention, a complicated fiber structure is formed, and there is produced an effect that the semipermeable membrane application surface has high smoothness and fewer concavoconcave shapes and is excellent in adhesion between the semipermeable membrane and the semipermeable membrane supporting material. And, there is produced an effect that the non-application surface has high adhesion to another non-application surface. Further, since a semipermeable membrane solution infiltrates into spaces between complicatedly entangled fibers, the striking-through can be also inhibited. A main synthetic fiber having a large fiber diameter will be described as "thick fiber", and a main synthetic fiber having a small fiber diameter, as "fine fiber".

The aspect ratio (fiber length/fiber diameter) of the thick fiber is preferably 200 to 1,000, more preferably 220 to 900, still more preferably 280 to 800. When the aspect ratio is less than 200, the dispersibility of the fiber is good, but the fiber sometimes comes off a forming fabric during sheet making, or the fiber is caught in a forming fabric and its separability from the forming fabric is sometimes deteriorated. When it exceeds 1,000, it contributes to the formation of three-dimensional network of the fiber, while the fiber is entwined or entangled to sometimes cause a detrimental effect on the uniformity of a non-woven fabric or the smoothness of a semipermeable membrane application surface.

The fiber diameter of the thick fiber is preferably 20.0 $\mu$m or less, more preferably 2.0 to 20.0 $\mu$m, still more preferably 5.0 to 20.0 $\mu$m, particularly preferably 10.0 to 20.0 $\mu$m. When it is less than 2.0 $\mu$m, the adhesion between non-application surfaces is sometimes poor. When the fiber diameter of the thick fiber exceeds 20.0 $\mu$m, the smoothness of a semipermeable membrane application surface sometimes becomes low, or the striking through of a semipermeable membrane solution sometimes takes place. The surface of the non-woven fabric is liable to have a fluffing.

The fiber length of the thick fiber is not specially limited, and it is preferably 1 to 12 mm, more preferably 3 to 10 mm, still more preferably 3 to 6 mm, particularly preferably 4 to 6 mm. The cross-sectional form of the thick fiber is preferably circular, while fibers having special cross-sectional forms such as T-form, Y-form and the form of a triangle can be incorporated for prevention of the striking-through, surface smoothness and adhesion between the non-application surfaces so long as they do not impair other properties.

The content of the thick fiber in the non-woven fabric is preferably 10 to 80 mass%, more preferably 20 to 70 mass%, still more preferably 30 to 60 mass%. When the content of the thick fiber is less than 10 mass%, the hardness of the non-woven fabric may be insufficient. When it exceeds 80 mass%, the non-woven fabric may break due to insufficient strength.

The fine fiber refers to a fiber having a smaller fiber diameter than the thick fiber and is preferably a fiber having an aspect ratio greater than that of the thick fiber. The aspect ratio (fiber length/fiber diameter) of the fine fiber is preferably 200 to 2,000, more preferably 300 to 1,500, still more preferably 400 to 1,000. When the aspect ratio is less than 200, the fiber has good dispersibility, while the fiber sometimes comes off a forming fabric during sheet making, or the fiber is caught in a forming fabric and its separability from the forming fabric is sometimes deteriorated. When it exceeds 2,000, the fine fiber contributes to the formation of three-dimensional network of the fiber, while the fiber is entwined or entangled to sometimes cause a detrimental effect on the uniformity of the non-woven fabric or the smoothness of the semipermeable membrane application surface.

The fine fiber plays a role in filling itself in spaces of the semipermeable membrane network that the thick fiber has formed, to form a uniform and complicated three-dimensional network. Further, it exhibits the effect of controlling hollow spaces to improve the smoothness. Therefore, the fiber diameter of the fine fiber is not specially limited so long as it is smaller than that of the thick fiber. It is preferably 2.0 to 15.0 $\mu$m, more preferably 3.0 to 13.0 $\mu$m, still more preferably 5.0 to 10.0 $\mu$m. That is, as a main synthetic fiber, preferably, a fiber having a fiber diameter of 10.0 $\mu$m or less is at least incorporated. For improving the smoothness of the semipermeable membrane application surface, it is important that the fine fiber is free of a crimping.

The fiber length of the fine fiber is not specially limited, while it is preferably 1 to 12 mm, more preferably 3 to 10 mm, still more preferably 3 to 6 mm, particularly preferably 4 to 6 mm. The cross-sectional form of the fine fiber is preferably circular, while fibers having special cross-sectional forms such as T-form, Y-form and the form of a triangle can be incorporated for prevention of the striking-through, surface smoothness and adhesion between the non-application surfaces so long as they do not impair other properties.

The content of the fine fiber in the non-woven fabric is preferably 10 to 80 mass%, more preferably 20 to 70 mass%, still more preferably 30 to 60 mass%. When the content of the fine fiber is less than 10 mass%, the formation may be deteriorated. Further, when it exceeds 80 mass%, the hardness of the non-woven fabric may be insufficient, or the non-woven fabric may break due to insufficient strength.

One thick fiber and one fine fiber may be selected for use, or a plurality of thick fibers and one fine fiber may be combined, or one thick fiber and a plurality of fine fibers may be combined, as required.

In this invention, the average fiber diameter of the main synthetic fibers is determined on the basis of the following expression. N is a positive integer.

Average fiber diameter = (fiber diameter ($\mu$m) of main synthetic fiber 1 x mass% of the main synthetic fiber 1 + fiber diameter ($\mu$m) of main synthetic fiber 2 x mass% of the main synthetic fiber 2 + fiber diameter ($\mu$m) of main synthetic fiber 3 x mass% of the main synthetic fiber 3 + ... + fiber diameter ($\mu$m) of main synthetic fiber N x mass% of the main synthetic fiber N)/(mass% of the main synthetic fiber 1 + mass% of the main synthetic fiber 2 + mass% of the main synthetic fiber 3 + ... + mass% of the main synthetic fiber N)

The average fiber diameter of the main synthetic fibers is preferably 20.0 $\mu$m or less. When the average fiber diameter of the main synthetic fibers is over 20.0 $\mu$m, the application of a semipermeable membrane onto the semipermeable membrane supporting material sometimes fails to give a semipermeable membrane having a uniform thickness. Further, the fiber diameters of all of the main synthetic fibers contained in the semipermeable membrane supporting material are preferably 20.0 $\mu$m or less. In this case, the smoothness of the semipermeable membrane application surface is improved, which hence improves the uniformity of thickness of the semipermeable membrane.

The binder synthetic fiber refers to a fiber that is to be melted to bond when the step of increasing the temperature to a softening point or melting temperature (melting point) or higher is incorporated into the step of producing the semipermeable membrane supporting material, and it improves the mechanical strength of the semipermeable membrane supporting material. For example, the semipermeable membrane supporting material is produced by a wet sheet making method, and the binder fiber can be softened or melted by the subsequent drying step or the subsequent processing under heat and pressure.

The binder synthetic fiber includes composite fibers such as a core-sheath fiber (core-shell type), a parallel fiber (side by side type) and a radially divided fiber and a non-drawn fiber. More specifically, it includes a combination of polypropylene (core) and polyethylene (sheath), a combination of polypropylene (core) and ethylene vinyl alcohol (sheath), a combination of a high-melting-point polyester (core) and a low-melting-point polyester and a non-drawn fiber of polyester. The composite fiber has difficulty in forming a coating film, and hence can improve the mechanical strength of the semipermeable membrane supporting material while maintaining spaces thereof. Monofilaments (entirely meltable) composed of only low-melting-point resins such as polyethylene and polypropylene and hot-water-soluble binders such as polyvinyl alcohol are liable to form coating films in the step of drying the semipermeable membrane supporting material, while they may be used so long as they impair the properties. In this invention, a combination of a high-melting-point polyester (core) and a low-melting-point polyester (sheath) and a non-drawn fiber of polyester can be preferably used since they serve to exhibit the strength when a non-woven fabric is formed by a wet sheet making method and since the strength in the second stage can be exhibited during the processing under heat and pressure.

The fiber diameter of the binder synthetic fiber is not specially limited, while it is preferably 2.0 to 20.0 $\mu$m, more preferably 5.0 to 15.0 $\mu$m, still more preferably 7.0 to 12.0 $\mu$m. Further, it preferably has a smaller fiber diameter than the thick fiber. Further, having a different fiber diameter from those of the main synthetic fibers, the binder synthetic fiber plays a role in improving the mechanical strength of the semipermeable membrane supporting material, and besides this, it also play a role in forming a uniform three-dimensional network together with the main synthetic fibers. Further, in the step of increasing the temperature up to a softening temperature or melting temperature or higher of the binder synthetic fiber, the smoothness of the semipermeable membrane supporting material can be improved, and a pressure that is being exerted in the above step is more effective.

The aspect ratio (fiber length/fiber diameter) of the binder synthetic fiber is preferably 200 to 1,000, more preferably 300 to 800, still more preferably 400 to 700. When the aspect ratio is less than 200, the fiber has good dispersibility, while the fiber sometimes comes off a forming fabric during sheet making, or the fiber is caught in a forming fabric and its separability from the forming fabric is sometimes deteriorated. When it exceeds 1,000, the binder synthetic fiber contributes to the formation of a three-dimensional network, while the fiber is entwined or entangled to sometimes cause a detrimental effect on the uniformity of the non-woven fabric or the smoothness of the semipermeable membrane application surface.

The fiber length of the binder synthetic fiber is not specially limited, while it is preferably 1 to 12 mm, more preferably 3 to 10 mm, still more preferably 3 to 6 mm, particularly preferably 4 to 6 mm. The cross-sectional form of the binder synthetic fiber is preferably circular, while fibers having special cross-sectional forms such as T-form, Y-form and the form of a triangle can be incorporated for prevention of the striking-through, smoothness of the semipermeable membrane application surface and adhesion between the non-application surfaces so long as they do not impair other properties.

The content of the binder synthetic fiber in the non-woven fabric of the semipermeable membrane supporting material of this invention is preferably 10 to 60 mass%, more preferably 15 to 50 mass%, still more preferably 20 to 45 mass%. When the content of the binder synthetic fiber is less than 10 mass%, the non-woven fabric may break due to insufficient strength. When it exceeds 60 mass%, the capability of passing a liquid through it may be decreased.

The smoothness ratio of the semipermeable membrane application surface and the non-application surface is 5.0:1.0 to 1.1:1.0, more preferably 4.0:1.0 to 1.3:1.0, still more preferably 3.0:1.0 to 1.1:1.0. The smoothness can be measured with a BEKK smoothness tester according to JIS P 8119. When the smoothness ratio of the semipermeable membrane application surface and the non-application surface exceeds 5.0:1.0, undesirably, curling and creasing take place in the step of applying the semipermeable membrane, and the adhesion between the semipermeable membrane and the semipermeable membrane supporting material is decreased. When the smoothness ratio of the semipermeable membrane application surface and the non-application surface is less than 1.1:1.0, undesirably, it is difficult to satisfy both the adhesion between the semipermeable membrane and the semipermeable membrane supporting material and the adhesion between the non-application surfaces.

The smoothness ratio of the semipermeable membrane application surface and the non-application surface can be adjusted to 5.0:1.0 to 1.1:1.0 by

(A) using the semipermeable membrane application surface as a surface that comes in contact with a heated roll when a wet sheet is brought into intimate contact with the heated roll of a Yankee dryer to dry it under heat and pressure,

(B) employing a two-layer or more multiple-layered structure as a structure of a non-woven fabric and using one fiber content in a layer that constitutes a semipermeable membrane application surface (to be referred to as "semipermeable membrane application surface" hereinafter) and another fiber content in a layer that constitutes a non-application surface (to be referred to as "non-application surface" hereinafter),

(C) employing different time periods and temperatures between the semipermeable membrane application surface and the non-application surface during the processing with a heated roll under heat and pressure, or

(D) using a combination of different rolls such as a combination of a metal roll and a resin roll or a combination of a metal roll and a cotton roll and using the semipermeable membrane application surface as a surface that comes in contact with the metal roll during the processing with a heated roll under heat and pressure.

In the above (B), it is preferred to make the average fiber diameter of the main synthetic fiber contained in the semipermeable membrane application surface layer smaller than the average fiber diameter of the main synthetic fiber contained in the non-application surface layer. The non-woven fabric may be a multiple-layer-structured non-woven fabric in which the semipermeable membrane application surface layer contains a fine fiber and a binder fiber and the non-application surface layer contains a thick fiber and a binder fiber. It may be also a multiple-layer-structured non-woven fabric in which both the semipermeable membrane application surface layer and the non-application surface layer contain a thick fiber, a fine fiber and a binder fiber and the average fiber diameter of the main synthetic fibers in the semipermeable membrane application surface layer is adjusted to be smaller than that of the non-application surface layer.

When both the semipermeable membrane application surface and the non-application surface contain a thick fiber, a fine fiber and a binder fiber, the fiber diameter of the thick fiber in the semipermeable membrane application surface layer is preferably 8.0 to 20.0 $\mu$m, more preferably 9.0 to 19.0 $\mu$m, still more preferably 10.0 to 18.0 $\mu$m. The aspect ratio is preferably 200 to 1,000, more preferably 200 to 9000, still more preferably 250 to 800. The fiber length is preferably 1 to 12 mm, more preferably 2 to 10 mm, still more preferably 3 to 8 mm. The content of the thick fiber in the semipermeable membrane application surface layer is preferably 10 to 80 mass%, more preferably 20 to 70 mass%, still more preferably 30 to 60 mass%.

The fiber diameter of the fine fiber in the semipermeable membrane application surface layer is preferably 2.0 to 18.0 $\mu$m, more preferably 3.0 to 15.0 $\mu$m, still more preferably 5.0 to 12.0 $\mu$m. The aspect ratio is preferably 200 to 2,000, more preferably 250 to 1,500, still more preferably 300 to 1,000. The fiber length is preferably 1 to 12 mm, more preferably 2 to 10 mm, still more preferably 3 to 6 mm. The content of the fine fiber in the semipermeable membrane application surface layer is preferably 10 to 80 mass%, more preferably 20 to 70 mass%, still more preferably 30 to 60 mass%.

The fiber diameter of the binder synthetic fiber in the semipermeable membrane application surface layer is preferably 2.0 to 20.0 $\mu$m, more preferably 5.0 to 17.0 $\mu$m, still more preferably 7.0 to 15.0 $\mu$m. The aspect ratio is preferably 200 to 1,000, more preferably 300 to 800, still more preferably 400 to 700. The fiber length is preferably 1 to 12 mm, more preferably 2 to 10 mm, still more preferably 3 to 6 mm. The content of the binder synthetic fiber in the semipermeable membrane application surface layer is preferably 10 to 60 mass%, more preferably 15 to 50 mass%, still more preferably 20 to 40 mass%.

The fiber diameter of the thick fiber in the non-application surface layer is preferably 9.0 to 20.0 $\mu$m, more preferably 10.0 to 19.0 $\mu$m, still more preferably 10.0 to 18.0 $\mu$m. The aspect ratio is preferably 200 to 1,000, more preferably 200 to 900, still more preferably 250 to 800. The fiber length is preferably 1 to 12 mm, more preferably 2 to 10 mm, still more preferably 3 to 6 mm. The content of the thick fiber in the non-application surface layer is preferably 10 to 80 mass%, more preferably 20 to 70 mass%, still more preferably 30 to 60 mass%.

The fiber diameter of the fine fiber in the non-application surface layer is preferably 5.0 to 18.0 $\mu$m, more preferably 6.0 to 15.0 $\mu$m, still more preferably 7.0 to 13.0 $\mu$m. The aspect ratio is preferably 200 to 1,000, more preferably 250 to 900, still more preferably 300 to 800. The fiber length is preferably 1 to 12 mm, more preferably 2 to 10 mm, still more preferably 3 to 6 mm. The content of the fine fiber in the non-application surface layer is preferably 10 to 80 mass%, more preferably 20 to 70 mass%, still more preferably 30 to 60 mass%.

The fiber diameter of the binder synthetic fiber in the non-application surface layer is preferably 2.0 to 20.0 $\mu$m, more preferably 5.0 to 17.0 $\mu$m, still more preferably 7.0 to 15.0 $\mu$m. The aspect ratio is preferably 200 to 1,000, more preferably 300 to 800, still more preferably 400 to 700. The fiber length is preferably 1 to 12 mm, more preferably 2 to 10 mm, still more preferably 3 to 6 mm. The content of the binder synthetic fiber in the non-application surface layer is preferably 10 to 60 mass%, more preferably 15 to 50 mass%, still more preferably 20 to 40 mass%.

When the semipermeable membrane supporting material is a two-layer-structured non-woven fabric composed of a semipermeable membrane application surface layer and a non-application surface layer, the amount ratio of the semipermeable membrane application surface layer based on the non-woven fabric is preferably 10 to 90 mass%, more preferably 20 to 80 mass%, still more preferably 30 to 70 mass%. When the amount ratio of the semipermeable membrane application surface layer is less than 10 mass%, a semipermeable membrane solution is liable to strike through the semipermeable membrane supporting material to reach the opposite surface when the semipermeable membrane solution is applied. Further, when the amount ratio of the semipermeable membrane application surface layer exceeds 90 mass%, the capability of adhesion between non-application surfaces of supporting materials is sometimes decreased.

In the semipermeable membrane supporting material of this invention, the non-woven fabric may have a multiple-layered structure in which each layer has the same fiber amount. In this case, the basis weight of each layer is decreased, and hence the fiber concentration of a slurry can be decreased, so that the formation of the non-woven fabric is improved. As a result, the semipermeable membrane application surface is improved in smoothness and uniformity. Further, even when the formation of each layer is not uniform, such can be covered by stacking them. Further, the sheet making speed can be increased, and the operability is improved.

In the semipermeable membrane supporting material of this invention, preferably, a fibrillated organic fiber is further incorporated. The striking through of the semipermeable membrane solution can be prevented owing to a fiber structure that is formed by the fibrillated organic fiber and the main synthetic fibers. Further, the semipermeable membrane application can be improved in smoothness when the fibrillated organic fiber is incorporated. Further, when the fibrillated organic fiber is incorporated, there can be obtained a semipermeable membrane supporting material that is excellent in adhesion between the semipermeable membrane and the semipermeable membrane supporting material and that has the semipermeable membrane application surface which is kept from fluffing.

The first fibrillated organic fiber includes a liquid-crystalline polymer pulp, and it is product obtained by treating a liquid-crystalline polymer in the form of a pulp. When the liquid-crystalline polymer pulp is incorporated, there can be obtained a semipermeable membrane supporting material in which the occurrence of a creasing and a dimensional change in the steps of washing with water and drying after the application of a semipermeable membrane solution are inhibited owing to its heat resistance. The liquid-crystalline polymer includes wholly aromatic polyamide, semiaromatic polyamide, wholly aromatic polyester, semiaromatic polyester, wholly aromatic polyester amide, semiaromatic polyester amide, wholly aromatic polyether, semiaromatic polyether, wholly aromatic polycarbonate, semiaromatic polycarbonate, wholly aromatic polyazomethine, semiaromatic polyazomethine, polyphenylene sulfide (PPS) and poly-p-phenylenebenzobisthiazole (PBZT).

The above "semiaromatic" refers to a polymer having, for example, an aliphatic chain in part of its main chain. Of these, wholly aromatic polyamide and wholly aromatic polyester which is easily uniformly fibrillated are preferred. Concerning the wholly aromatic polyamide, p-aramid is preferred.

The liquid-crystalline polymer pulp can be produced by using a high pressure homogenizer, a refiner, a beater, a mill and a pulverization apparatus singly or in combination. Of these, a high pressure homogenizer is used singly or a high pressure homogenizer is used in combination with other apparatus to produce a liquid-crystalline polymer pulp, which is preferred since the fiber length distribution and the fiber diameter distribution come to be relatively narrow, and since the fiber easily becomes fine and uniform.

The liquid-crystalline polymer pulp refers to a liquid-crystalline polymer fiber having the form of a fiber having a portion very finely divided mainly in the direction parallel to the fiber axis, and at least partly having a fiber diameter of 1 $\mu$m or less. In this invention, a liquid-crystalline polymer pulp having a mass average fiber length in the range of 0.20 to 2.00 mm is used. Therefore, the fibril in this invention differs from fibrids. As is clearly described in US Patent No. 5,833,807 and US Patent No. 5,026,456, the fibrids are film-like particles having an average length of 0.2 mm to 1 mm and a length and width aspect ratio of 5:1 to 10:1 and are not any fibrous material. The fibril in this invention has a length and width aspect ratio in the range of 20:1 to 100,000:1 and a Canadian standard freeness in the range of 0 ml to 500 ml. Further, a fibril having a mass average fiber length in the range of 0.20 to 2.00 mm is preferred.

The second fibrillated organic fiber includes a fibrillated acrylic fiber. It is a fiber obtained by splitting and fibrillating a splitable acrylic fiber that can be split and fibrillated, with a beater, a PFI mill, a single disc refiner (SDR) or a double disc refiner (DDR), or with a beating/dispersing apparatus used for dispersing or pulverizing a pigment such as ball mill, a dyno mill, a mixer or a high-pressure homogenizer. The polymer for constituting the splitable acrylic fiber is not specially limited so long as it can be fibrillated with the above beating/dispersing apparatus. That is, it may be composed of only an acrylonitrile polymer that is used for a general acrylic fiber, or may be composed of an acrylonitrile polymer and an additive polymer. When the easiness of splitting and fibrillating is taken into account, a splittable acrylic fiber composed of an acrylonitrile polymer and an additive polymer is more preferred.

When a splittable acrylic fiber is spun, micro-phase separation takes place between the acrylonitrile polymer and additive polymer which constitute the above fiber, and when the domain size of the phase separation is of the order of a micron size to a submicron size, the splitting or fibrillating is successfully performed by the subsequent beating treatment. For materializing the domain size of the above phase separation, importantly, the acrylonitrile polymer and the additive polymer are not compatibilized but are miscible during spinning.

The comonomer of acrylonitrile is not specially limited so long as it is a comonomer that constitutes a normal acrylic fiber, and it includes the following monomers. That is, it includes acrylic esters typified by methyl acrylate, ethyl acrylate, isopropyl acrylate and n-butyl acrylate, methacrylic esters typified by methyl methacrylate, ethyl methacrylate, isopropyl methacrylate, n-butyl methacrylate and isobutyl methacrylate, and unsaturated monomers such as acrylic acid, methacrylic acid, maleic acid, acrylamide, styrene, vinyltoluene, vinyl acetate, vinyl chloride, vinylidene chloride and vinylidene fluoride.

Further, the additive polymer is not specially limited, while it includes an acrylic polymer and some polymers other than the acrylic polymer. The monomer that constitutes the acrylic polymer is not specially limited. For example, it includes the following monomers, and at least one of these can be used. That is, it includes acrylic esters typified by methyl acrylate, ethyl acrylate, isopropyl acrylate and n-butyl acrylate, methacrylic esters typified by methyl methacrylate, ethyl methacrylate, isopropyl methacrylate, n-butyl methacrylate and isobutyl methacrylate, and unsaturated monomers such as acrylic acid, methacrylic acid, maleic acid, acrylamide, styrene, vinyltoluene, vinyl acetate, vinyl chloride, vinylidene chloride and vinylidene fluoride. The polymers other than the acrylic polymer include polyvinyl chloride, polyalkylene glycol, a polyether compound, a polyether ester compound, cellulose acetate, cellulose diacetate, polysulfone, polyvinyl alcohol, polyamide, polyester and polypeptide. Chitin and chitosan may be added for imparting antibacterial and deodorizing activities.

When the fibrillated acrylic fiber is incorporated, the semipermeable membrane application surface is improved in smoothness, and the fluffing is inhibited. Further, when the softening point or glass transition point of the additive polymer used in the splittable acrylic fiber is lower than the treatment temperature in the step of producing a semipermeable membrane supporting material, a temperature of the softening point or glass transition point or higher is applied, so that the additive polymer is partly or wholly melted to work to increase the strength of the semipermeable membrane application surface, and it further performs the prevention of the fiber fluffing of the semipermeable membrane application surface, or the defect of the semipermeable membrane is inhibited.

The cross-sectional form of the splittable acrylic fiber that is used in the semipermeable membrane supporting material is not specially limited, and the splittable acrylic fiber may be any one of those which have so-called special cross-sectional forms such as a circle, an oval, a flatted form, Y-form, T-form, U-form, the form of a star and the form of a dog bone, or which are hollow and branched. However, from the viewpoint of easiness of fiber splitting, a splittable acrylic fiber of which the cross-sectional form is circular or oval is the most preferred. Further, the cross-sectional form of the split fiber is not specially limited, and it includes not only the forms of a circle and an oval, but also includes the special cross-sectional forms such as a flattened form, a form of streaks, an asterisk and a form of a triangle.

The fibrillation degree of the splittable acrylic fiber is not specially limited. However, when two acrylic fibers in fibrillated states such as (A) a fibrillated acrylic fiber having an average fiber diameter of 1 $\mu$m or less and (B) a fibrillated acrylic fiber having a branch portion having an average fiber diameter of 1 $\mu$m or less branched from a stalk portion having an average fiber diameter of 2 $\mu$m or more are incorporated, the features of the fibrillated acrylic fibers are exhibited to the fullest extent, and the smoothness of the semipermeable membrane application surface, the inhibition of fluffing, the uniformity of the semipermeable membrane supporting material, the uniformity of the semipermeable membrane during the application of the semipermeable membrane, the prevention of breaking through of a semipermeable membrane solution and the adhesion between the semipermeable membrane and the semipermeable membrane supporting material can be well-balancedly improved.

In order to make certain of a fibrillated state where the fibrillated acrylic fibers (A) and (B) are present, preferably, the fibrillated acrylic fibers are fully diluted with water, etc., then dried and observed through a microscope or preferably an electron microscope. After the fibrillating conditions are determined, there is required no observation on a case-by-case basis. Concerning the fiber diameters of the fibrillated acrylic fibers, 20 filaments of each of the fibers (A) and (B) are arbitrarily selected on an electron microscope photograph and measured, to determine an arithmetic average of the fiber diameters for each.

For achieving well-balanced exhibition of uniformity of the semipermeable membrane supporting material, uniformity of the semipermeable membrane during application, prevention of the striking through of a semipermeable membrane solution and adhesion between the semipermeable membrane and the semipermeable membrane supporting material, the aspect ratio (fiber length/fiber diameter) of the fibrillated acrylic fiber (A) is preferably 10 to 100,000, more preferably 100 to 50,000. In the fibrillated acrylic fiber (B), the aspect ratio of the stalk portion thereof is preferably 10 to 50,000, more preferably 50 to 30,000. Further, the aspect ratio of the branch portion is preferably 10 to 100,000, more preferably 100 to 50,000. These fibrillated states can be made certain of by the above observation through a microscope.

The third fibrillated organic fiber includes a fibrillated lyocell fiber. "Lyocell" is a term for a fiber determined in ISO Standards and JIS of Japan and said to be "a cellulose fiber obtained by spinning directly from a solution in an organic solvent not through a cellulose derivative". The lyocell fiber has features that it is excellent in wet strength, that it is easily fibrillated, and that it can be easily imparted with strength as a sheet owing to a hydrogen bond derived from a cellulose fiber.

The lyocell fiber can be fibrillated by exerting shear force with a beater, a PFI mill, a single disc refiner (SDR), a double disc refiner (DDR) or a beating/dispersing apparatus used for dispersing or pulverizing a pigment, such as a ball mill or a dyno mill. The lyocell fiber is expected to have a fiber-fiber bond due to a hydrogen bond after its fibrillation since a cellulose fiber is a raw material therefor, and as a result, there are produced effects on strength of the semipermeable membrane supporting material, uniformity of the semipermeable membrane supporting material, smoothness of the semipermeable membrane application surface and an improvement in capability of preventing the striking through of a semipermeable membrane solution.

The fibrillation degree of the lyocell fiber is not specially limited. However, when two lyocell fibers in fibrillated states such as (A) a fibrillated lyocell fiber having a average fiber diameter of 1 $\mu$m or less and (B) a fibrillated lyocell fiber having a branch portion having an average fiber diameter of 1 $\mu$m or less branched from a stalk portion having an average fiber diameter of 2 $\mu$m or less are incorporated, the features of the fibrillated lyocell fibers are exhibited to the fullest extent, and the uniformity of the semipermeable membrane supporting material, the smoothness of the semipermeable membrane application surface and the capability of preventing the striking through of a semipermeable membrane solution can be improved.

In order to make certain of a fibrillated state where the fibrillated lyocell fibers (A) and (B) are present, preferably, the fibrillated lyocell fibers are fully diluted with water, etc., then dried and observed through a microscope or preferably an electron microscope. After the fibrillating conditions are determined, there is required no observation on a case-by-case basis. Concerning the fiber diameters of the fibrillated lyocell fibers, 20 filaments of each of the fibers (A) and (B) are arbitrarily selected on an electron microscope photograph and measured, to determine an arithmetic average of the fiber diameters for each.

For achieving well-balanced exhibition of uniformity of the semipermeable membrane supporting material, smoothness of the semipermeable membrane application surface and capability of preventing the striking through of the semipermeable membrane solution, the aspect ratio (fiber length/fiber diameter) of the fibrillated lyocell fiber is preferably 10 to 100,000, more preferably 100 to 50,000. In the fibrillated lyocell fiber (B), further, the aspect ratio of the stalk portion thereof is preferably 10 to 50,000, more preferably 50 to 30,000. The aspect portion of the branch portion thereof is preferably 10 to 100,000, more preferably 100 to 50,000. These fibrillated states can be made certain of by the above observation through a microscope.

The amount ratio of the fibrillated organic fiber is not specially limited, while the amount ratio thereof based on the semipermeable membrane supporting material is preferably 0.5 to 20.0 mass%, more preferably 0.5 to 10.0 mass%. When the content of the fibrillated organic fiber is less than 0.5 mass%, the fibrillated organic fiber cannot be uniformly distributed in the semipermeable membrane supporting material, and hence the semipermeable membrane supporting material sometimes cannot be improved in uniformity. Further, the fibrillated organic fiber sometimes fails to contribute to capability of preventing the striking through of a semipermeable membrane solution, inhibition of the fluffing, adhesion between the semipermeable membrane and the semipermeable membrane supporting material and dimensional stability. When the content of the fibrillate organic fiber exceeds 20.0 mass%, sufficient uniformity of the semipermeable membrane supporting material and sufficient capability of preventing the striking through of a semipermeable membrane solution can be obtained, while the resistance to a liquid is increased to excess, and the lifetime of the semipermeable membrane is sometimes decreased. Further, the adhesion between the semipermeable membrane and the semipermeable membrane supporting material is sometimes insufficient. When the fibrillated organic fiber is a liquid-crystalline polymer pulp, the content thereof is adjusted to 0.5 to 20.0 mass%, and in this case, there can be obtained a semipermeable membrane supporting material that inhibits the occurrence of creasing and a dimensional change in the step of washing with water and drying after the application of the semipermeable membrane solution owing to the heat resistance characteristic of the liquid-crystalline polymer pulp.

When the semipermeable membrane supporting material has a multiple-layered structure, the fibrillated organic fiber can be incorporated into both the semipermeable membrane application surface layer and the non-application surface layer. Preferably, it is incorporated into the semipermeable membrane application surface layer alone, or a large amount of it is incorporated into the semipermeable membrane application surface layer when it is incorporated into both of the layers. When it is incorporated into the semipermeable membrane application surface layer alone, or a large amount of it is incorporated thereinto, the semipermeable membrane application surface can be improved in smoothness and uniformity, and the smoothness of the non-application surface can be rendered lower than that of the application surface. As a result, both the infiltration of the semipermeable membrane and the adhesion capability of the non-application surface can be satisfied.

The basis weight of the semipermeable membrane supporting material is not specially limited, while it is preferably 20 to 150 $g/m^2$, more preferably 50 to 100 $g/m^2$. When it is less than 20 $g/m^2$, sufficient tensile strength cannot be obtained in some cases. Further, when it exceeds 150 $g/m^2$, the resistance to a liquid is sometimes increased, or the thickness is so increased that a predetermined amount of the semipermeable membrane sometimes cannot be encased in a unit or a module.

Further, the density of the semipermeable membrane supporting material is preferably 0.5 to 1.0 $g/cm^3$, more preferably 0.6 to 0.9 $g/cm^3$. When the density of the semipermeable membrane supporting material is less than 0.5 $g/cm^3$, the thickness is increased, and the area of the semipermeable membrane that can be incorporated into a unit is decreased. As a result, the life of the semipermeable membrane is decreased. When it exceeds 1.0 $g/cm^3$, the capability of passing a liquid is sometimes decreased, and the life of the semipermeable membrane is sometimes decreased.

The thickness of the semipermeable membrane supporting material is preferably 50 to 150 $\mu$m, more preferably 60 to 130 $\mu$m, still more preferably 70 to 120 $\mu$m. When thickness of the semipermeable membrane supporting material exceeds 150 $\mu$m, the area of the semipermeable membrane that can be incorporated into a unit is decreased, and as a result, the life of the semipermeable membrane is decreased. On the other hand, when it is less than 50 $\mu$m, no sufficient tensile strength can be obtained in some cases, or the capability of passing a liquid is decreased, and the life of the semipermeable membrane is sometimes decreased.

The arithmetic average roughness (Ra) can be analyzed, for example, by means of a surface roughness analyzer, Surfcom E-RM-S27A supplied by Tokyo Seimitus Co., Ltd., or a trade name VK8510 supplied by KEYENCE Corporation. Ra is a value that is obtained by dividing a total sum of areas of portions surrounded by an average line and a cross-sectional curve in a portion that is extracted from the cross-sectional curve of a semipermeable membrane application surface by the length of the extracted portion and that is expressed by micrometer ($\mu$m), and it is defined in JIS B0601-1994 (Japan Industrial Standards).

In this invention, preferably, the semipermeable membrane application side surface has an Ra of 5.0 to 15.0 $\mu$m. When Ra is less than 5.0 $\mu$m, the smoothness of the semipermeable membrane application surface is increased, and a uniform semipermeable membrane can be obtained, while the contact area of the semipermeable membrane and the semipermeable membrane supporting material is decreased, the anchor effect is decreased, and the semipermeable membrane is sometimes easily peeled off the semipermeable membrane supporting material. Further, when the Ra of the semipermeable membrane application side surface is over 15.0 $\mu$m, it is sometimes difficult to obtain any semipermeable membrane having a uniform thickness. The Ra of the semipermeable membrane application side surface is preferably in the range of 5.0 to 12.0 $\mu$m, more preferably in the range of 5.0 to 9.0 $\mu$m. When the Ra value of the semipermeable membrane application side surface is brought into the specified range, the uniformity of the semipermeable membrane can be maintained, and at the same time the adhesion between the supporting material and the semipermeable membrane can be satisfied.

The ten-point average roughness (Rz) can be analyzed, for example, by means of a surface roughness analyzer, Surfcom E-RM-S27A supplied by Tokyo Seimitus Co., Ltd., or a trade name VK8510 supplied by KEYENCE Corporation like the above Ra. In the calculation method, according to JIS B0601-1994 (Japanese Industrial Standards), a sampling length in the average line direction is extracted from a roughness profile of the semipermeable membrane application side surface, and a total sum of an average of absolute values of heights (Yp) of the highest peak to fifth peak and an average value of absolute values of heights (Yv) of the lowest valley to the fifth valley, measured in the longitudinal magnification from the average line, is determined. And, the ten-point average roughness (Rz) refers to the above value expressed in micrometer ($\mu$m).

In this invention, when the Rz of the semipermeable membrane application side surface is 150 $\mu$m or less, a uniform semipermeable membrane can be obtained. When it exceeds 150 $\mu$m, the adhesion between the semipermeable membrane supporting material and the semipermeable membrane is improved owing to an anchor effect, while a uniform semipermeable membrane is not obtained in some cases. The Rz of the semipermeable membrane application side surface is preferably in the range of 50 to 150 $\mu$m, more preferably in the range of 70 to 130 $\mu$m.

In this invention, the absorption coefficient of the semipermeable membrane application side surface measured with a Bristow tester using a solution of 15 mass% of polysulfone in n-methylpyrrolidone at 25°C-60 %RH is preferably 5 to 100 $ml/m^2 \cdot msec^{1/2}$. Further, the dynamic liquid transition amount of the semipermeable membrane application side surface measured with a Bristow tester using a solution of 15 mass% of polysulfone resin in n-methylpyrrolidone for a contact time period of 0.2 second at 25°C-60 %RH is preferably 5 to 30 $ml/m^2$

The absorption coefficient and dynamic liquid transition amount of the semipermeable membrane application side surface are determined using a Bristow tester shown in JAPAN TAPPI paper pulp test method No. 51. The Bristow tester makes it possible to accurately test the capability of absorbing a liquid for an instantaneous contact time of a few seconds or less. The dynamic liquid transition amount V (ml/m$^2$) with a Bristow tester is measured according to JAPAN TAPPI paper pulp test method No. 51, and defined by the following expression in which X ($\mu$l) is an amount of a liquid added to a head box and A (mm) is a length of a transition mark that the liquid leaves until it completely transits to a paper surface.

$$\texttt{Dynamic liquid transition amount V}$$
$$\texttt{= X x 1,000/(A x slit length (mm))}$$

In the measurement of the absorption coefficient, the dynamic liquid transition amount to a test piece is plotted versus a square root of a contact time and an inclination of a straight line portion of the obtained absorption curve is calculated according to JAPAN TAPPI paper pulp test method No. 51. A head box containing a known amount of a liquid is brought into contact with a test piece that is moving at an arbitrary constant speed, and the paper surface is caused to completely absorb the liquid through a slit. In this case, a contact time T (msec) is defined on the basis of the slit width and the moving speed by the following expression.

$$\texttt{Contact time T = Slit width (mm) x 1,000/moving}$$
$$\texttt{speed of paper (mm/sec)}$$

The semipermeable membrane solution used with a Bristow tester will be explained below. When the semipermeable membrane is applied onto the semipermeable membrane supporting material, there is employed a method in which a synthetic resin including cellulose resins such as cellulose acetate, polysulfone resins such as polyether sulfone, polyphenylene sulfone and polyphenylene sulfide, a polyacrylonitrile resin, fluorine resins such as plyvinylidene fluoride, polyester resins, polyamide resins and polyimide resins is dissolved in an organic solvent such as n-methylpyrrolidone or dimethylformamide (DMF), the resultant solution is applied onto the semipermeable membrane supporting material, the applied solution is solidified to form a layer and the layer is gelled in a water vessel.

When the semipermeable membrane solution is prepared, it is prepared by adjusting the concentration of the synthetic resin for constituting the semipermeable membrane in the organic solvent to 12 to 20 mass%, for example, as is described in JP 2003-245530A or "New Experimental Chemical Course" (Shin-Jikken Kagaku Koza), Vol. 9, Polymer II" compiled by the Chemical Society of Japan, Maruzen Co., Ltd., pages 969-998.

In this invention, 15 mass% of polysulfone (supplied by SIGMA-ALDRICH Corporation, weight average molecular weight $M_w$<35,000, number average molecular weight $M_n$<16,000, Commercial Product No. 428302) was dissolved in n-methylpyrrolidone to prepare a semipermeable membrane solution, and the above semipermeable membrane solution was measured for an absorption coefficient or a dynamic liquid transfer amount with a Bristow tester, whereby the properties of the supporting material that have influences on the uniformity of the semipermeable membrane, the striking through of the semipermeable membrane solution and the peel strength between the semipermeable membrane and the semipermeable membrane supporting material have been made clear.

The absorption coefficient of the semipermeable membrane application side surface is preferably 5 to 100 ml/m$^2$•msec$^{1/2}$, more preferably 10 to 90 ml/m$^2$•msec$^{1/2}$, still more preferably 10 to 80 ml/m$^2$•msec$^{1/2}$. When the absorption coefficient of the semipermeable membrane supporting material is smaller than 5 ml/m$^2$•msec$^{1/2}$, the amount of the semipermeable membrane solution that infiltrates into the supporting material fiber is small, the semipermeable membrane easily peels off the semipermeable membrane supporting material, it is difficult to obtain a uniform semipermeable membrane, and good filtration performances cannot be obtained in some cases. Further, when the absorption coefficient is over 100 ml/m$^2$•msec$^{1/2}$, the striking through to the opposite surface of the supporting material takes place heavily, and when semipermeable membranes are formed into a module, no good adhesion can be accomplished after the non-application surfaces of semipermeable membrane supporting materials are bonded to each other to form the module, and further, a uniform semipermeable membrane can be no longer obtained, and as a result, no good filtration performances can be obtained in some cases.

The method of adjusting the absorption coefficient of the semipermeable membrane application side surface to the range of 5 to 100 ml/m$^2$•msec$^{1/2}$ includes

a) a method in which the fiber diameters of the main synthetic fibers for constituting the semipermeable membrane supporting material are adjusted,

b) a method in which the amount of the binder synthetic resin for constituting the semipermeable membrane supporting material is adjusted,

c) a method in which the semipermeable membrane supporting material is made, and then the heating temperature during heat calendering is adjusted, and

d) a method in which the semipermeable membrane supporting material is made, and then the nip pressure during heat calendering is adjusted.

When the fiber diameters of the main synthetic fibers exceed 20.0 $\mu$m, it is difficult to keep the absorption coefficient in the range of 5 to 100 ml/m$^2$•msec$^{1/2}$. When the fiber diameter of the binder synthetic fiber is different from the fiber diameters of the main synthetic fibers, it is easy to keep the absorption coefficient in the range of 5 to 100 Ml/M$^2$•msec$^{1/2}$.

With a decrease in smoothness of the semipermeable membrane application side surface or with an increase in absorption capability, the dynamic liquid transition amount of the semipermeable membrane solution tends to increase. Therefore, the roughness and absorption capability of the semipermeable membrane application side surface are involved in the dynamic liquid transfer amount, and although no clear reason is known, when the dynamic liquid transfer amount of the semipermeable membrane application side surface measured for a contact time period of 0.2 second with a Bristow tester using a solution of 15 mass% of polysulfone resin in n-methylpyrrolidone at 25˚C-60 %RH is 5 to 30 ml/m$^2$, the semipermeable membrane solution is free from striking through, a semipermeable membrane having a uniform thickness can be obtained, and there can be easily provided a semipermeable membrane supporting material excellent in adhesion between the semipermeable membrane and the semipermeable membrane supporting material.

When the dynamic liquid transfer amount is calculated, it is determined that the time period for which the semipermeable membrane solution and the semipermeable membrane application side surface are in contact is 0.2 second, and a reason therefor is explained. When the semipermeable membrane is applied to the semipermeable membrane supporting material, the synthetic resin for constituting the semipermeable membrane is dissolved in an organic solvent, the solution is applied to the semipermeable membrane supporting material with a gap coater, and immediately thereafter, the applied solution is heat-treated with hot air in the initial step of causing phase separation of the resin constituting the semipermeable membrane and the organic solvent to provide fine pores within the semipermeable membrane. It is assumed that at this stage the viscosity of the semipermeable membrane solution is increased by volatilization of the organic solvent and that the infiltration thereof into the semipermeable membrane supporting material is almost terminated. The time period for which the organic solvent in which the synthetic resin for constituting the semipermeable membrane is applied onto the semipermeable membrane supporting material and then heated with an air dryer, etc., is approximately 0.2 to 10 seconds, and in this invention, it is determined that the contact time period when the dynamic liquid transfer amount is measured is 0.2 second.

When the dynamic liquid transfer amount of the semipermeable membrane application side surface measured for a contact time period of 0.2 second with a Bristow tester using a solution of 15 mass% of polysulfone resin in n-methylpyrrolidone at 25˚C-60 %RH is smaller than 5 ml/m$^2$, a semipermeable membrane having a uniform thickness is easily obtained, and the striking through to the semipermeable membrane is decreased, while the adhesion between the semipermeable membrane and the semipermeable membrane supporting material is sometimes degraded. Further, when the dynamic liquid transfer amount is over 30 ml/m$^2$, it is sometimes difficult to obtain a semipermeable membrane having a uniform thickness, and the striking through also takes place in some cases. The dynamic liquid transfer amount is preferably in the range of 10 to 25 ml/m$^2$, more preferably in the range of 15 to 25 ml/m$^2$.

The method of adjusting the dynamic liquid transfer amount of the semipermeable membrane application side surface measured for a contact time period of 0.2 second with a Bristow tester using a solution of 15 mass% of polysulfone resin in n-methylpyrrolidone at 25˚C-60 %RH to 5 to 30 ml/m$^2$ includes

(a) a method in which the fiber diameters of the main synthetic fibers for constituting the semipermeable membrane supporting material is adjusted,

(b) a method in which the amount of the binder synthetic fiber for constituting the semipermeable membrane supporting material is adjusted,

(c) a method in which the semipermeable membrane supporting material is made, and then the heating temperature during heat calendering is adjusted, and

(d) a method in which the semipermeable membrane supporting material is made, and then the nip pressure during heat calendering is adjusted.

When the fiber diameter of the binder synthetic fiber is different from the fiber diameters of the main synthetic fibers, it is easy to keep the dynamic liquid transfer amount in the range of 5 to 30 ml/m$^2$. When the main synthetic fibers have an average fiber diameter of less than 2.0 $\mu$m, the dynamic liquid transfer amount of the semipermeable membrane solution on the semipermeable membrane application side surface for a contact time period of 0.2 second is sometimes smaller than 5 ml/m$^2$, and the adhesion between the semipermeable membrane and the semipermeable membrane supporting material may be degraded. When the average fiber diameter exceeds 20.0 $\mu$m, the dynamic liquid transfer amount of the semipermeable membrane solution on the semipermeable membrane application side surface for a contact time period of 0.2 second is sometimes over 30 ml/m$^2$, no semipermeable membrane having a uniform thickness is obtained in some cases, and the striking through sometimes takes place,

The second feature of this invention is that "a semipermeable membrane supporting material formed of a non-woven fabric comprising a main synthetic resin and a binder synthetic resin, having a breaking length of less than 4.0 km in the machine direction (MD) and the cross direction (CD) at an elongation by 5 % and having a dimensional change ratio, measured under heat in the cross direction (CD), of -0.3 to +1.0 %."

In this invention, it has been found that in the step of applying the semipermeable membrane, the braking length of the semipermeable membrane supporting material at an elongation by 5 % and the dimensional change ratio thereof under heat constitute very important requirements. And, in particular, it has been found that it is very important that the average value of breaking lengths of the non-woven fabric constituting the semipermeable membrane supporting material in the machine direction (MD) and the cross direction (CD) at an elongation by 5 % (to be referred to as "an average breaking length (at 5 % elongation)" hereinafter) is less than 4.0 km, and that the dimensional change ratio that the semipermeable membrane supporting material has under heat in the cross direction (CD) after it is immersed in a hot bath at 90˚C is -0.3 to +1.0 %.

In the semipermeable membrane supporting material of this invention, it is important that the breaking length (at 5 % elongation) is less than 4.0 km. When the average braking length (at 50 % elongation) of the semipermeable membrane supporting material is 4.0 km or more, the strength is excessive, and the gas permeability is decreased. In the semipermeable membrane supporting material of this invention, the average breaking length (at 5 % elongation) is less than 4.0 km, preferably 3.8 km or less, more preferably 3.6 km or less. Further, the dimensional change ratio of the semipermeable membrane supporting material under heat in the cross direction (CD) is -0.3 to +1.0 %, preferably -0.2 to +0.8 %, more preferably -0.1 to +0.6 %. When the dimensional change ratio of the supporting material in the cross direction (CD) is less than -0.3 %, the shrinkage in the cross direction is excessive, and a creasing takes place by curling in a non-application portion of the semipermeable membrane in a semipermeable membrane supporting material edge portion. When it exceeds +1.0 %, a creasing takes place by curling in the entire width direction toward the semipermeable membrane application surface.

For adjusting the average breaking length (at 5 % elongation) to less than 4.0 km, the elongation percentage (JIS L1013-2010) of the main synthetic fiber is preferably 25 to 150 %, and the tensile strength (JIS L1013-2010) of the main synthetic fiber is preferably 0.08 to 0.80 N/tex. When the elongation percentage of the main synthetic fiber is less than 25 %, the average breaking length (at 5 % elongation) sometimes exceeds 4.0 km, or the semipermeable membrane supporting material sometimes breaks due to insufficient elongation of the non-woven fabric during the process under heat and pressure. When it exceeds 150 %, a creasing is sometimes caused to take place due to excess shrinkage of the non-woven fabric during the processing under heat and pressure. Therefore, the elongation percentage of the main synthetic fiber is preferably 25 to 150 %, more preferably 30 to 120 %, still more preferably 35 to 100 %. Further, the tensile strength of the main synthetic fiber is preferably 0.08 to 0.80 N/tex, more preferably 0.1 to 0.70 N/tex, still more preferably 0.2 to 0.60 N/tex. When it is less than 0.08 N/tex, the strength is insufficient, and hence a sheet is sometimes caused to break in the step of wet sheet making for forming the non-woven fabric or in the step of processing under heat and pressure. Further, when it exceeds 0.80 N/tex, an obtained non-woven fabric is hard, and hence a smoothness sometimes cannot be obtained after the processing under heat and pressure, and the semipermeable membrane supporting material sometimes has a breaking length of over 4.0 km.

For keeping the dimensional change ratio of the semipermeable membrane supporting material under heat in the cross direction (CD) in the range of -0.3 to +1.0 %, it is important to dry a wet sheet by keeping it in intimate contact with a heated roll such as a Yankee dryer when the wet sheet is dried in the step of making a wet sheet, or optimally combine a roll temperature during the processing under heat and pressure, the number of times of the processing under heat and pressure and the heat treatment after the processing under heat and pressure.

The breaking length refers to a value obtained by measurement according to JIS P 8113-1976, and is an index for that tensile strength of a non-woven fabric per se which is not affected by the basis weight and width of a sample of the non-woven fabric. The "average breaking length (at 5 % elongation)" of the non-woven fabric of the semipermeable membrane supporting material of this invention is determined by the method which is explained in detail in Examples.

The dimensional change ratio under heat is the numerical conversion of the dimensional change caused on the semipermeable membrane supporting material by heat (e.g., heat exerted in a washing step and a drying step) that is exerted on the semipermeable membrane supporting material in the step of forming the semipermeable membrane on the semipermeable membrane supporting material. Keeping the above value in the specified range is important for the inhibition of a creasing and the inhibition of a curving.

In the second feature of this invention, preferably, the smoothness of the semipermeable membrane application surface is higher than that of the non-application surface. The smoothness ratio of the semipermeable membrane application surface and the non-application surface is preferably 5.0:1.0 to 1.1:1.0, more preferably 4.0:1.0 to 1.3:1.0, still more preferably 3.0:1.0 to 1.1:1.0. The smoothness can be measured with a BEKK smoothness tester according to JIS P 8119. When the smoothness ratio of the semipermeable membrane application surface and the non-application surface exceeds 5.0:1.0, a curling or creasing sometimes takes place in the step of applying the semipermeable membrane, or the adhesion between the semipermeable membrane and the semipermeable membrane supporting material is decreased in some cases. When the smoothness ratio of the semipermeable membrane application surface and the non-application surface is less than 1.1:1.0, it is sometimes difficult to satisfy the adhesion between the semipermeable membrane and the semipermeable membrane supporting material and the adhesion between the non-application surface and another non-application surface at the same time. The method of adjusting the smoothness ratio of the semipermeable membrane application surface and the non-application surface includes those methods which are explained in the first feature of this invention.

The main synthetic fiber is a fiber that forms the network of the semipermeable membrane supporting material. As the main synthetic fiber, a synthetic fiber is used. For example, it includes polyolefin, polyamide, polyacrylic, vinylon, vinylidene, polyvinyl chloride, polyester, benzoate, polychlarl and phenolic fibers, while a polyester fiber having high heat resistance is more preferred. Further, semisynthetic fibers such as acetate, triacetate and promix and regenerated fibers such as rayon, cupra and lyocell fiber may be incorporated so long as they do not impair performances.

The aspect ratio (fiber length/fiber diameter) of the main synthetic fiber is preferably 200 to 2,000, more preferably 220 to 1,500, still more preferably 280 to 1,000. When the aspect ratio is less than 200, the fiber has good dispersibility, while the fiber sometimes comes off a forming fabric during sheet making, or the fiber is caught in a forming fabric and its separability from the forming fabric is sometimes deteriorated. When it exceeds 2,000, the fiber contributes to the formation of three-dimensional network of the fiber, while the fiber is entwined or entangled to sometimes cause a detrimental effect on the uniformity of the non-woven fabric or the smoothness of the semipermeable membrane application surface.

The fiber diameter of the main synthetic fiber is preferably 20.0 $\mu$m or less, more preferably 2.0 to 20.0 $\mu$m, still more preferably 5.0 to 20.0 $\mu$m, particularly preferably 10.0 to 20.0 $\mu$m. When it is less than 2.0 $\mu$m, the adhesion between non-application surfaces is sometimes degraded. When the fiber diameter of the main synthetic fiber exceeds 20.0 $\mu$m, the smoothness of the semipermeable membrane application surface is decreased, and the striking through of the semipermeable membrane solution also takes place. Further, undesirably, the surface of the non-woven fabric is liable to undergo a fluffing. The main synthetic fiber preferably contains two or more fibers having different fiber diameters.

The fiber length of the main synthetic fiber is not specially limited, while it is preferably 1 to 12 mm, more preferably 3 to 10 mm, still more preferably 3 to 6 mm, particularly preferably 4 to 6 mm. The cross-sectional form of the main synthetic fiber is preferably circular, while fibers having special cross-sectional forms such as T-form, Y-form and the form of a triangle can be incorporated for prevention of the striking-through, surface smoothness and adhesion between the non-application surfaces so long as they do not impair other properties.

The content of the main synthetic fiber based on the non-woven fabric is preferably 40 to 90 mass%, more preferably 50 to 85 mass%, still more preferably 55 to 80 mass%. When the content of the main synthetic fiber is less than 40 mass%, the hardness of the non-woven fabric may be insufficient. Further, when it exceeds 90 mass%, the non-woven fabric may break due to insufficient strength.

The amount ratio of the main synthetic fiber having an elongation ratio of 25 to 150 % and a tensile strength of 0.08 to 0.80 N/tex based on all of the main synthetic fibers is preferably 10 mass% or more, more preferably 20 mass% or more, still more preferably 30 mass% or more. When it is less than 10 mass%, the average breaking length (at 5 % elongation) sometimes exceeds 4.0 km, or the non-woven fabric may break due to its insufficient elongation during the processing under heat and pressure.

The binder synthetic fiber is a fiber that is intended to achieve melting and adhering by incorporating the step of increasing the temperature to a softening point or melting temperature (melting point) or higher into the step of producing the semipermeable membrane supporting material, and it improves the mechanical strength of the semipermeable membrane supporting material. For example, the semipermeable membrane supporting material is produced by a wet sheet making method, and the binder synthetic fiber can be softened or melted in the subsequent drying step or processing under heat and pressure.

The binder synthetic fiber includes composite fibers such as a core-sheath fiber (core-shell type), a parallel fiber (side by side type) and a radially divided fiber and a non-drawn fiber. More specifically, it includes a combination of polypropylene (core) and polyethylene (sheath), a combination of polypropylene (core) and ethylene vinyl alcohol (sheath), a combination of a high-melting-point polyester (core) and a low-melting-point polyester and a non-drawn fiber of polyester. The composite fiber has difficulty in forming a coating film, and hence can improve the mechanical strength of the semipermeable membrane supporting material while maintaining spaces thereof. Monofilaments (entirely meltable) composed of only low-melting-point resins such as polyethylene and polypropylene and hot-water-soluble binders such as polyvinyl alcohol are liable to form coating films in the step of drying the semipermeable membrane supporting material, while they may be used so long as they impair the properties. In this invention, a combination of a high-melting-point polyester (core) and a low-melting-point polyester (sheath) and a non-drawn fiber of polyester can be preferably used since they serve to exhibit the strength when a non-woven fabric is formed by a wet sheet making method and since the strength in the second stage can be exhibited during the processing under heat and pressure.

Preferably, the fiber diameter of the binder synthetic fiber is different from the fiber diameter of the main synthetic fiber. It is preferably 2.0 to 20.0 $\mu$m, more preferably 5.0 to 15.0 $\mu$m, still more preferably 7.0 to 12.0 $\mu$m. Further, the binder synthetic fiber preferably has a smaller fiber diameter than the thickest fiber of the main synthetic fiber. Having a fiber diameter different from that of the main synthetic fiber, the binder synthetic fiber not only plays a role in improving the mechanical strength of the semipermeable membrane supporting material but also plays a role in forming the fiber structure composed of a complicated and uniform three-dimensional network together with the main synthetic fiber. Further, in the step of increasing the temperature to the softening temperature or melting temperature of the binder synthetic fiber or higher, the smoothness of the semipermeable membrane supporting material surface can be also improved, and it is more effective to keep a pressure exerted in the above step.

The aspect ratio (fiber length/fiber diameter) of the binder synthetic fiber is preferably 200 to 1,000, more preferably 300 to 800, still preferably 400 to 700. When the aspect ratio is less than 200, the fiber has good dispersibility, while the fiber sometimes comes off a forming fabric during sheet making, or the fiber is caught in a forming fabric and its separability from the forming fabric is sometimes deteriorated. When it exceeds 1,000, the fiber contributes to the formation of three-dimensional network of the fiber, while the fiber is entwined or entangled to sometimes cause a detrimental effect on the uniformity of the non-woven fabric or the smoothness of the semipermeable membrane application surface.

The fiber length of the binder synthetic fiber is not specially limited, while it is preferably 1 to 12 mm, more preferably 3 to 10 mm, still more preferably 4 to 6 mm. The cross-sectional form of the binder synthetic fiber is preferably circular, while fibers having special cross-sectional forms such as T-form, Y-form and the form of a triangle can be incorporated for prevention of the striking-through, smoothness of the semipermeable membrane application surface and adhesion between the non-application surfaces so long as they do not impair other properties.

The content of the binder synthetic fiber based on the non-woven fabric is preferably 10 to 60 mass%, more preferably 15 to 50 mass%, still more preferably 20 to 45 mass%. When the content of the binder synthetic fiber is less than 10 mass%, the non-woven fabric may break due to insufficient strength. Further, when it exceeds 60 mass%, the capability of passing a liquid is sometimes decreased.

The process for producing a semipermeable membrane supporting material, provided by this invention, will be explained. In the semipermeable membrane supporting material of this invention, a sheet formed by a wet sheet making method is processed under heat and pressure with heated roll or rolls.

In the wet sheet making method, first, the main synthetic fiber and the binder synthetic fiber are uniformly dispersed in water, then, the dispersion is subjected to the step of screening (removal of a foreign matter, mass, etc.), and a sheet is made from a slurry prepared so as to have a final fiber concentration of 0.01 to 0.50 mass% with a sheet making machine to give a wet sheet. For rendering the dispersibility of the fibers uniform, chemicals such as a dispersing agent, an anti-foaming agent, a hydrophilic-nature-imparting agent, an antistatic agent, a polymer thickener, a releasing agent, an antifungus agent, a bacteriocide, etc., are sometimes added during the step.

The sheet making machine is selected, for example, from Fourdrinier machine, a cylinder machine or an inclined-wire machine. These sheet making machines can be used singly, or a combination sheet making machine that is a combination of the same or different machines can be also used. When the non-woven fabric has a multiple-layered structure of two or more layers, there may be employed any method such as a sheet stacking method in which sheets obtained with sheet making machines are stacked or a method in which one sheet is made and then a slurry of dispersed fibers is cast on the above sheet.

The wet sheet produced by means of a sheet making machine is dried with a Yankee dryer, an air dryer, a cylinder dryer, a suction drum type dryer, an infrared type dryer, etc., to obtain a sheet. When the wet sheet is dried, it is dried under heat and pressure by bring it into intimate contact with heated rolls of a Yankee dryer, etc., whereby the intimately contacted surface is improved in smoothness. The drying under heat and pressure refer to drying the wet sheet by pressing it to a heated roll with a touch roll, etc. The surface temperature of the heated roll is preferably 100 to 180˚C, more preferably 100 to 160˚C, still more preferably 110 to 160˚C. The pressure is preferably 50 to 1,000 N/cm, more preferably 100 to 800 N/cm.

The processing under heat and pressure with a heated roll will be explained below, while this invention shall not be limited to the following. The sheet produced by a wet sheet making method is caused to pass between rolls of an apparatus for processing under heat and pressure with being nipped, to carry out the processing under heat and pressure. A combination of rolls includes two metal rolls, a combination of a metal roll and an elastic (resin) roll and a combination of a metal roll and a cotton roll. As required, the front and back of the sheet are reversed, and the sheet may be caused to pass through the nip twice or more. One or both of the two rolls is/are heated. In this case, the surface temperature of the heated roll, the nip pressure between the rolls and the speed of processing the sheet are controlled, whereby the desired semipermeable membrane supporting material is obtained. The surface temperature of the heated roll is not specially limited, while it is preferably 150 to 260˚C, more preferably 180 to 240˚C.

The wet sheet is brought into intimate contact with the heated roll to produce a sheet, and the sheet is processed under heat and pressure within 10 minutes, whereby the processing under heat and pressure can be carried out while the thermal plasticization of the binder synthetic fiber by the drying under heat and pressure is enhanced. As a result, it is assumed that the plasticization of the binder synthetic fiber under heat is promoted, and the semipermeable membrane supporting material is improved in smoothness and is inhibited from fluffing. Further, when a sheet produced by wet sheet making is once taken up and the taken up sheet is processed under heat and pressure, the temperature of the sheet surface is once decreased, and not only the effect of thermal conduction to the sheet in the processing under heat and pressure is decreased, but also the fallen main synthetic fiber on the sheet surface is nipped from a reverse side, so that a fluffing can sometimes take place. In contrast, when the sheet formed by a wet sheet making method is continuously processed under heat and pressure without taking it up, it follows that the sheet is processed under heat and pressure in the same direction as that in the wet sheet making method, and that the main synthetic fiber fallen by the drying under heat and pressure is again fallen in the same direction, so that a fluffing can be inhibited.

The melting point of the binder synthetic fiber can be measured by differential scanning calorimetry (JIS K0129 2005). In the process for producing the semipermeable membrane supporting material, provided by this invention, preferably, the processing under heat and pressure is carried out in such a manner that the heated roll having a temperature of -50˚C to +10˚C relative to the melting point of the binder synthetic fiber comes in contact with the binder synthetic fiber. The surface temperature is more preferably -40˚C to $\pm 0$˚C relative to the melting point of the binder synthetic fiber, still more preferably -30˚C to $\pm 0$˚C relative to the melting point of the binder synthetic fiber.

When the temperature of the heated roll during the processing of the semipermeable membrane supporting material under heat and pressure is decreased by more than 50˚C relative to the melting point of the binder synthetic fiber, a fluffing is easily liable to take place even under any condition. Further, an air permeability profile cannot be uniform, and as a result, the striking through of the semipermeable membrane solution is sometimes liable to take place. When the temperature of the heated roll during the processing of the semipermeable membrane supporting material under heat and pressure is increased by more than 10˚C relative to the melting point of the binder synthetic fiber, a melted part of the fiber adheres to the heated roll, and the air permeability is sometimes rendered non-uniform.

Concerning the roll temperature during the processing under heat and pressure, for example, when the main synthetic fiber having a melting temperature of 260˚C and the binder synthetic fiber having a crystallization temperature of 120˚C and a melting point of 260˚C are used with setting the roll temperature during the processing under heat and pressure at approximately 220 to 230˚C, or when the main synthetic fiber having a melting temperature of 260˚C and the binder synthetic fiber having a crystallization temperature of 125˚C and a melting point of 238˚C are used with setting the roll temperature during the processing under heat and pressure at approximately 190 to 200˚C, it is easy to keep Ra of the semipermeable membrane application side surface within 5.0 to 15.0 $\mu$m and to keep the absorption coefficient of the semipermeable membrane application surface within 5 to 100 ml/m$^2$•msec$^{1/2}$, while this invention shall not be limited to the above temperature ranges.

The nip pressure of the roll is not specially limited, while it is preferably 190 to 2,500 N/cm, more preferably 390 to 2,000 N/cm. The processing speed is not specially limited, while it is preferably 5 to 150 m/minute, more preferably 10 to 80 m/minute.

When the processing under heat and pressure is carried out, the method of adjusting the surface temperature of the heated roll includes a method in which the inside of a metal roll is provided with a multiple-layered structure and steam or hot oil is internally circulated and a method in which an internally embedded electrically heated wire is used for heating. When a metal roll adapted for temperature adjustment by induced heat generation is used, the air permeability profile in the width direction and machine direction of the semipermeable membrane supporting material can be rendered uniform. Further, when a jacket roll having a jacked inside a roll is used, the surface temperature in the width direction and circumferential direction of the metal roll can be rendered more uniform, and the air permeability profile in the width direction and machine direction of the semipermeable membrane supporting material can be rendered further uniform.

In the processing under heat and pressure, preferably, there is used an apparatus having first and second heat and pressure roll nips set continuously, and the sheet comes out from the first heat and pressure roll nip and is continuously processed with the second heat and pressure roll nip.

The combination of the first heat and pressure processing rolls includes a combination of two metal rolls, a combination of a metal roll and a resin roll, and a combination of a metal roll and a cotton roll, while the combination of two metal rolls is preferred. One or both of the two rolls is/are heated. In this case, the desired semipermeable membrane supporting material is obtained by controlling the surface temperature of the heated roll(s), the roll/roll nip pressure and the speed of processing the sheet. The surface temperature of the heated roll(s) is preferably 150 to 260˚C, more preferably 180 to 240˚C. The roll/roll nip pressure is preferably 190 to 2,500 N/cm, more preferably 390 to 2,000 N/cm.

The combination of the second heat and pressure processing rolls includes a combination of two metal rolls, a combination of a metal roll and a resin roll and a combination of a metal roll and a cotton roll. One or both of the two rolls is/are heated, while none of the rolls is heated in some cases. In this case, the desired semipermeable membrane supporting material is obtained by controlling the surface temperature of the heated roll(s), the roll/roll nip pressure and the speed of processing the sheet. The surface temperature of the heated roll(s) is preferably 20 to 260˚C, more preferably 40 to 240˚C. The roll/roll nip pressure is preferably 190 to 2,500 N/cm, more preferably 390 to 2,000 N/cm.

With regard to combinations of the first heat and pressure processing rolls and the second heat and pressure processing rolls, an apparatus having 4 or more rolls in a multistage combination like a supercalender normally used in paper making may be used. Since, however, the thickness of the semipermeable membrane supporting material is decreased with an increase in the number of times of nipping, employing three nips or less in a vertical combination of 4 or less rolls is preferred, and employing two nips is more preferred, for each combination of the first heat and pressure processing rolls and the second heat and pressure processing rolls.

The sheet is continuously processed with the first heat and pressure roll nip and the second heat and pressure roll nip, whereby the sheet can be moved past the second heat and pressure roll nip while the thermal plasticization of the binder synthetic fiber contained in the sheet that moves past the first heat and pressure roll nip is enhanced. And, as a result, it is assumed that the plasticization of the binder synthetic fiber under heat is further promoted, and the semipermeable membrane supporting material is improved in smoothness and is inhibited from fluffing. When the sheet is once taken up after the first heat and pressure roll nip and then caused to pass the second heat and pressure roll nip, the temperature of the sheet surface is decreased, and the heat conduction effect on the sheet during the nipping with the second heat and pressure roll is degraded. Moreover, the main synthetic fiber on the sheet surface is nipped from the reverse side, so that it is assumed that the fluffing inhibition effect is also degraded. In contrast, when the sheet is continuously processed with the first and second heat and pressure roll nips, the sheet is processed in the same direction, and the main synthetic fiber that is laid when it passes through the first heat and pressure roll nip is again laid in the same direction, so that the fluffing can be inhibited.

Therefore, it is important that the time period which the sheet that moves past the first heat and pressure roll nip takes before it reaches the second heat and pressure roll nip be small, and it is preferred to adjust it to 60 seconds or less. It is more preferably 30 seconds or less, still more preferably 20 seconds or less. When it takes more than 60 seconds, the crystallinity of the binder synthetic fiber is decreased, and the effect on the inhibition of fluffing is sometimes degraded. The processing speed is not specially limited, while it is preferably 5 to 150 m/minute, more preferably 10 to 100 m/minute.

In the heat and pressure processing, when the step of heating the sheet with a heating apparatus is added between the processing with the first heat and pressure roll nip and the processing with the second heat and pressure roll nip when the sheet is passed through the first heat and pressure roll nip and the second heat and pressure roll nip, the sheet can be moved past the second heat and pressure roll nip while it maintains a state where the thermal plasticization of the binder synthetic fiber contained in the sheet is enhanced after it moves past the first heat and pressure roll nip. As a result, the plasticization of the binder synthetic fiber can be further accelerated. When the heating apparatus is a heating apparatus having the form of a roll, the sheet can be heated while its plane is in contact with the heated roll for a long time, so that the sheet can be also improved in smoothness. Further, when the sheet is heated while it is in contact with the heating apparatus having the form of a roll after it passes through the first heat and pressure roll nip, the sheet can be also improved in dimensional stability.

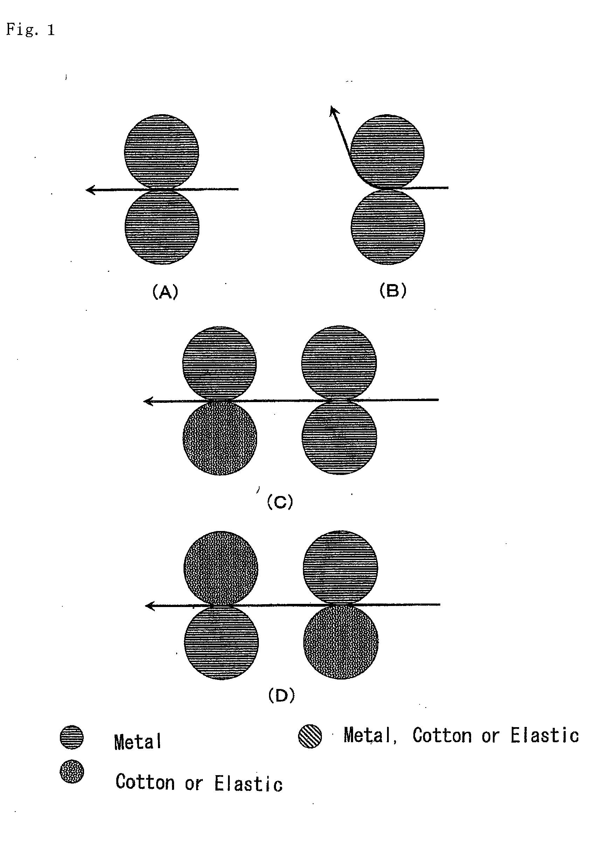

Figs. 1 to 7 are schematic drawings of combinations and arrangements of rolls used in the heat and pressure processing, and states of the sheet that is passed, in this invention. Figs. 1 to 7 show only examples, and this invention shall not be limited thereto. In Figs. 1 to 7, a metal roll has the pattern of horizontal stripes, a cotton or elastic roll has the pattern of dots, and a roll that may be any one of a metal roll, a cotton roll and an elastic roll has the pattern of slating lines. Any one of a metal roll, an elastic roll and a cotton roll can be used as a heating roll, while a metal roll and an elastic roll are preferably used as heating rolls. More preferably, a metal roll is used as a heating roll.

Fig. 1A shows a combination of two metal rolls. Fig. 1(B) also shows a combination of two metal rolls, in which the sheet that moves past the roll nip is arranged such that it is in contact with one metal roll for a longer time. Fig. 1(C) shows an arrangement in which the first roll nip composed of two metal rolls and the second roll nip composed of a metal roll and a cotton or elastic roll are continuously arranged. Fig. 1(D) shows an arrangement in which the first and second roll nips each composed of a metal roll and a cotton or elastic roll are continuously arranged and the sheet is passed in such a manner that the surface which is in contact with the metal roll in the first nip comes in contact with the cotton or elastic roll in the second roll nip.

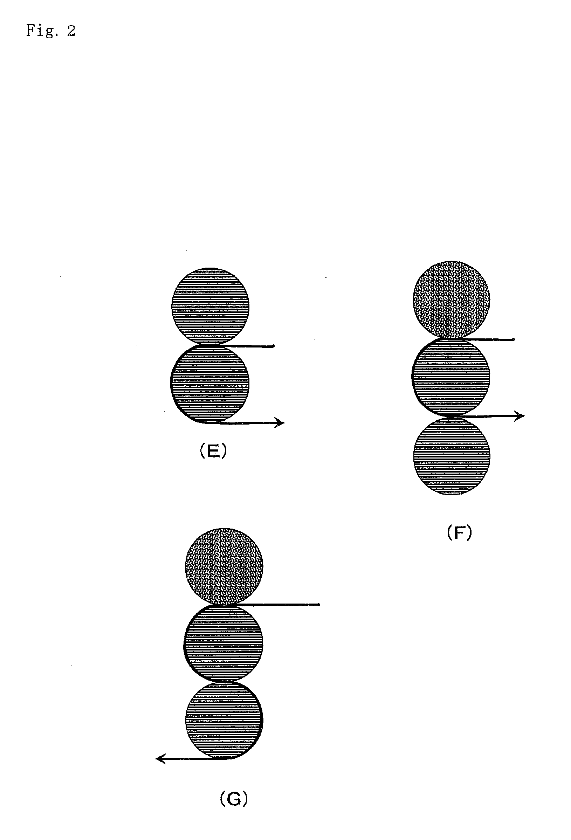

Fig. 2(E) shows a combination of two metal rolls in which the sheet that moves past the roll nip is passed like it embraces one metal roll. Fig. 2(F) and Fig. 2(G) shows vertical combinations of a cotton or elastic roll and two metal rolls. In Fig 2(F), the sheet moves past the first roll nip between the upper and middle rolls, is passed like it embraces the middle roll and moves past the second roll nip between the middle and lower rolls. In Fig. 2(G), the sheet moves past the first roll nip between the upper and middle rolls, is then passed like it embraces the middle roll, moves past the second roll nip between the middle and lower rolls and further is passed like it embraces the lower roll.

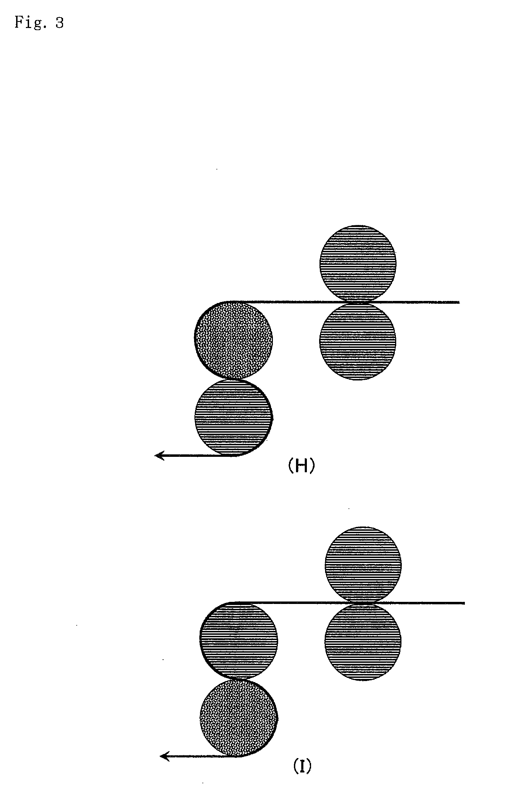

Figs. 3(H) and 3(I) shows continuous arrangements of the first roll nip composed of two metal rolls and the second roll nip composed of a metal roll and a cotton or elastic roll. In Fig. 3(H), the sheet that moves past the first roll nip is passed through the second roll nip in the state of moving along the cotton or elastic roll and then is passed like it embraces the metal roll. In Fig. 3(I), the sheet that moves past the first roll nip is passed through the second roll nip in the state of being along the metal roll and then is passed like it embraces the cotton or elastic roll.

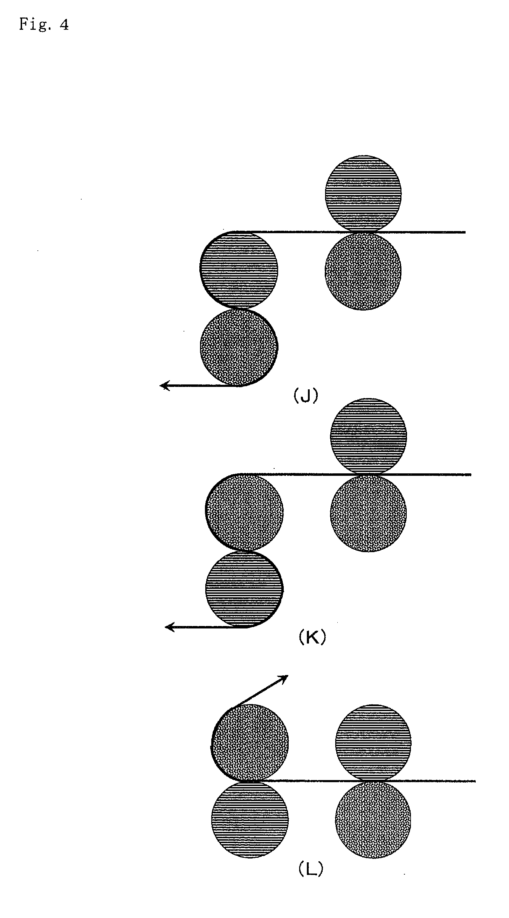

Figs. 4(J), 4(K) and 4(L) show continuous arrangements of the first and second roll nip composed of a metal roll and a cotton or elastic roll. In Fig 4(J), the sheet that moves past the first roll nip is passed through the second roll nip in the state of being along the metal roll, and then is passed like it embraces the cotton or elastic roll. Further, the sheet is passed like the surface that moves in contact with the metal roll in the first roll nip comes in contact with the cotton or elastic roll in the second roll nip. In Fig. 4(K), the sheet that moves past the first roll nip is moved past the second roll nip in the state of being along the cotton or elastic roll and then is passed like it embraces the metal roll. Further, the sheet is passed like the surface that moves in contact with the metal roll in the first roll nip comes in contact with the metal roll in the second roll nip. In Fig. 4(L), the sheet that moves past the first roll nip is moved past the second roll nip and then is passed like it embraces the cotton or elastic roll. Further, the sheet is passed like the surface that moves in contact with the metal roll in the first roll nip comes in contact with the cotton or elastic roll in the second roll nip.

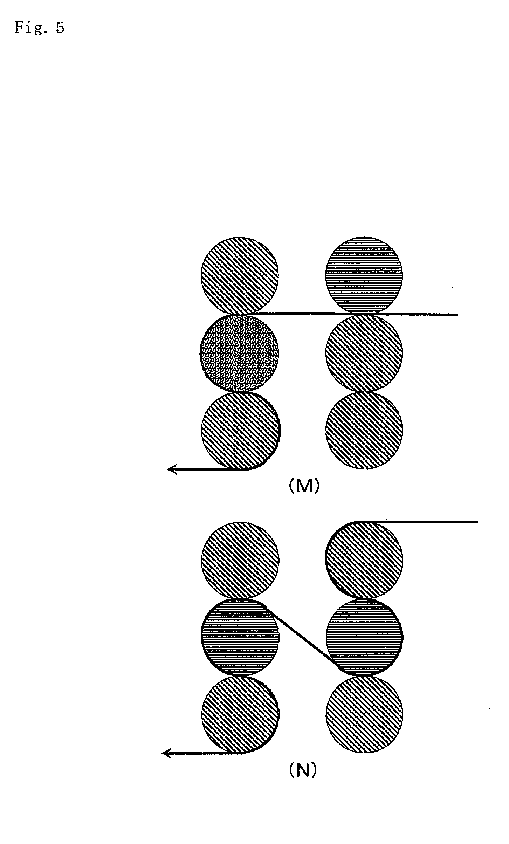

Fig. 5(M) shows a continuous arrangement of the first apparatus formed by vertically combining a metal roll, a metal, cotton or elastic roll and a metal, cotton or elastic roll and the second apparatus formed by vertically combining a meal, cotton or elastic roll, a cotton or elastic roll and a metal, cotton or elastic roll. The sheet is moved past the first roll nip between the upper and middle rolls in the first apparatus, and then in the second apparatus, it is moved past the second roll nip between the upper and middle rolls, and is passed like it embraces the middle roll, and is moved past the third roll nip between the middle and lower rolls and is passed like it embraces the lower roll. Fig. 5(N) shows a continuous arrangement of the first and second apparatuses each composed of a vertical combination of a metal, cotton or elastic roll, a meal roll and a metal, cotton or elastic roll. In the first apparatus, the sheet is moved past the first roll nip between the upper and middle rolls like it embraces the upper roll, is passed like it embraces the middle roll, and is moved past the second roll nip between the middle and lower rolls, and then in the second apparatus, it is moved past the third roll nip between the upper and middle rolls, is passed like it embraces the middle roll, is moved past the fourth roll nip between the middle and lower rolls and is passed like it embraces the lower roll.

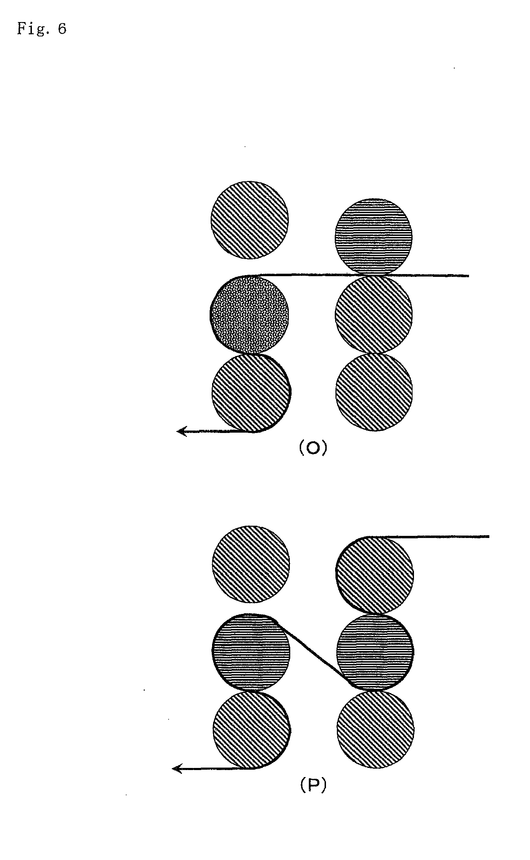

Fig. 6(O) shows a continuous arrangement of the first apparatus formed by vertically combining a metal roll, a metal, cotton or elastic roll and a metal, cotton or elastic roll and the second apparatus formed by vertically combining a metal, cotton or elastic roll, a cotton or elastic roll and a metal, cotton or elastic roll. The sheet is moved past the first roll nip between the upper and middle rolls in the first apparatus, and then in the second apparatus, it is passed between the upper and middle rolls in the where no nip pressure is exerted, is passed like it embraces the middle roll, is moved past the second roll nip between the middle and lower rolls, and is passed like it embraces the lower roll. Fig. 6(P) shows a continuous arrangement of the first and second apparatuses each formed by vertically combining a metal, cotton or elastic roll, a metal roll and a metal, cotton or elastic roll. In the first apparatus, the sheet is moved past the first roll nip between the upper and middle rolls like it embraces the upper roll, is passed like it embraces the middle roll and is moved past the second roll nip between the middle and lower rolls, and then in the second apparatus, it is moved past between the upper and middle rolls where no nip pressure is exerted, is passed like it embraces the middle roll, is moved past the third roll nip between the middle and lower rolls and is passed like it embraces the lower roll.

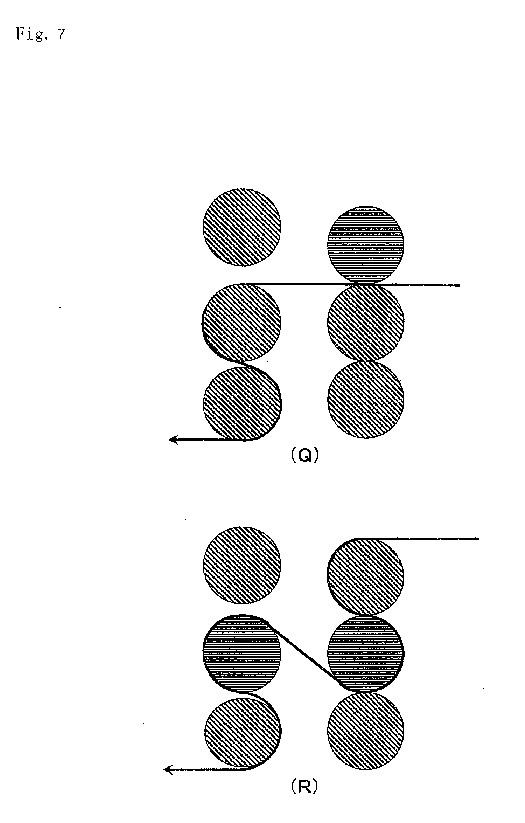

Fig. 7(Q) shows a continuous arrangement of the first apparatus formed by vertically combining a metal roll and two metal, cotton or elastic rolls and the second apparatus formed by vertically combining three metal, cotton or elastic rolls. The sheet is moved past the first roll nip between the upper and middle rolls in the first apparatus, and then in the second apparatus, it is passed between the upper and middle rolls where no nip pressure is exerted, is passed like it embraces the middle roll, it is passed between the middle and lower rolls where no nip pressure is exerted, and is passed like it embraces the lower roll. Fig. 7(R) shows a continuous arrangement of the first and second apparatuses each formed by vertically combining a metal, cotton or elastic roll, a metal roll and a metal, cotton or elastic roll. In the first apparatus, the sheet is moved past the first roll nip between the upper and middle rolls like it embraces the upper roll, is passed like it embraces the middle roll and is moved past the second roll nip between the middle and lower rolls, and then in the second apparatus, it is passed between the upper and middle rolls where no nip pressure is exerted, is passed like it embraces the middle roll, is passed between the middle and lower rolls where no nip pressure is exerted, and it passed like it embraces the lower roll.

The semipermeable membrane supporting material of this invention can be used in the fields of water clarification, food concentration, wastewater treatment, seawater desalination, the separation of microorganisms such as bacteria, yeast and virus, medical uses typified by blood filtering, and the production of ultrapure water for washing semiconductors. That is, it is used as a supporting material for separating membranes such as an ultrafiltration membrane, a reverse osmosis membrane and a microfiltration membrane. The semipermeable membrane supporting material provided with the semipermeable membrane is used in the form of a flat plate frame type element, a pleated type element or a spiral type element, while it is preferred to use the semipermeable membrane supporting material of this invention in the spiral type semipermeable membrane element. A semipermeable membrane module is formed by connecting these elements in series or in parallel.

**EP 2 492 001 A1**

In the spiral type element, the semipermeable membrane supporting material provided with the semipermeable membrane is arranged between a raw liquid side spacer and a permeation liquid side spacer. The raw liquid side spacer is provided with a passage space for supplying a raw liquid. The permeation liquid side spacer is provided with a passage space for passing a permeation liquid. The raw liquid permeates the semipermeable membrane to give a permeation liquid. The semipermeable membrane supporting material provided with the semipermeable membrane is spirally wound around a water collecting tube together with the raw liquid side spacer and the permeation liquid side spacer.

Examples

This invention will be explained further in detail with reference to Examples. "Part" and "percentage" described in Examples are based on a mass unless otherwise specified.

Test 1 (thickness)

A thickness was measured according to JIS P 8118.

Test 2 (Smoothness)

Measured with a Bekk smoothness tester according to JIS P 8119.

Test 3 (Average pore diameter and maximum pore diameter)

Measured with an automatic pore diameter distribution measuring apparatus (trade name: Perm-Poremeter, supplied by Porous Materials, Inc.) according to the bubble point method of ASTMF 316-86 and JIS K 3832.

Test 4 (Infiltration of semipermeable membrane)

A DMF solution (concentration: 18 %) of polysulfone (supplied by SIGMA-ALDRICH Corporation, weight average molecular weight $M_w$<35,000, number average molecular weight $M_n$<16, 000, Commodity No. 428302) was applied to the semipermeable membrane application surface of a semipermeable membrane supporting material with a constant-speed application apparatus having a constant clearance (trade name: Automatic Film Applicator, supplied by Yasuda Seiki Seisakusho K.K.), and the applied solution was washed with water and dried to form a polysulfone film on the semipermeable membrane application surface of the semipermeable membrane supporting material. An SEM photograph of cross-section of the semipermeable membrane was taken, and the polysulfone was evaluated for a degree of infiltration into the semipermeable membrane supporting material.
◎: polysulfone infiltrates only up to an area near the center of a semipermeable membrane supporting material. It is the level of being remarkably good.
o:No polysulfone bleeds on the non-application surface of a semipermeable membrane supporting material. It is the level of being good.
Δ: Polysulfone bleeds partly on the non-application surface of a semipermeable membrane supporting material. It is the level of being practically usable.
x: Polysulfone bleeds on the non-application surface of a semipermeable membrane supporting material. It is the level of not being practically usable.

Test 5 (Adhesion of semipermeable membrane)

The semipermeable membrane prepared in Test 4 was evaluated for an adherence degree between the semipermeable membrane formed of a polysulfone resin and the semipermeable membrane supporting material on the basis of a resisting degree when they were peeled off each other.
◎: The adhesion between a semipermeable membrane and a semipermeable membrane supporting material is very high, and the semipermeable membrane cannot be peeled off. It is the level of being remarkably good.
o: A portion that is easily peeled off is partly present. It is the level of being good.
Δ: A semipermeable membrane and a semipermeable membrane supporting material adhere to each other, while the semipermeable membrane is easily peeled off as a whole. It is the lowest-limit level of practical use.

x: The peeling of a semipermeable membrane takes place in the step of washing with water or drying after the application of the semipermeable membrane. It is the level of not being usable.

Test 6 (Adhesion of non-application surface)

A vinyl acetate adhesive melted by heating was applied to the non-application surfaces of semipermeable membrane supporting materials each on which the semipermeable membrane was formed in Test 4, and the non-application surfaces were immediately bonded to each other under pressure. After the bonding, a sample having a width of 25 mm and a length of 200 mm was taken, and it was evaluated for an adhesion between the non-application surfaces by carrying out a peel test of the bonded portion at a peel angle of 180 degrees and at a peel speed of 100 mm/minute by means of a tensile tester (trade name: STA-1150 TENSILON tensile tester supplied by ORIENTEC Co., LTD.).
⊚: The peel strength is remarkably high, and a peeling occurs inside a semipermeable membrane supporting material.
o: The peel strength is high, and a peeling occurs partly between the adhesive and a semipermeable membrane supporting material, while most of the peeling occurs inside the semipermeable membrane supporting material.
Δ: The peel strength is high to some extent, and a peeling occurs between the adhesive and a semipermeable membrane supporting material, while a peeling is recognized inside the semipermeable membrane supporting material. It is the lowest-limit level in practical use.
x: The peel strength is low, and a peeling occurs as a whole between the adhesive and the semipermeable membrane supporting material. It is the level of not being usable.

Test 7 (Uniformity of thickness of semipermeable membrane)

A DMF solution (concentration: 18 %) of polysulfone (supplied by SIGMA-ALDRICH Corporation, weight average molecular weight $M_w$<35,000, number average molecular weight $M_n$<16,000, Commodity No. 428302) was applied to the semipermeable membrane application surface of a semipermeable membrane supporting material with a constant-speed application apparatus having a constant clearance (trade name: Automatic Film Applicator, supplied by Yasuda Seiki Seisakusho K.K.), and the applied solution was washed with water and dried to form a 50 μm thick polysulfone film on the semipermeable membrane application surface of the semipermeable membrane supporting material. An SEM photograph of its cross-section was taken. Then, the semipermeable membrane was measured for a thickness in each of arbitrary 10 points on the SEM photograph, and a difference (μm) between the thickness in the largest thickness portion and the thickness in the smallest thickness portion was determined. When the above difference is within 8 μm, the semipermeable membrane is in an acceptable range.

Test 8 (Thermal shrinkage)

Before and after a semipermeable membrane supporting material having a cross direction length of 40 cm and a machine direction length of 30 cm was immersed in hot water at 90°C for 10 minutes, it was measured for dimensions in the width direction in 4 points, and a dimensional change was calculated.
x: A dimensional change is less than -0.3 %.
Δ: A dimensional change is -0.1 to -0.3 %.
o: A dimensional change is over -0.1 %.

Test 9 (Fluffing)

A semipermeable membrane supporting material having a width of 30 cm was folded in the direction that crossed the machine direction with the semipermeable membrane application surface as a hill, a cylindrical roll formed of stainless steel having a diameter of 5 cm and a length of 40 cm was rolled over the folded line, and the number of fibers that fluffed in the folded line was counted. The measurement was made under n=4, and an average value is shown.
0-10 fibers: The fluffing is few, and it is the level of being very good.
11-20 fibers: The level of being good.
21-30 fibers: The lowest-limit level of practical use.

31 fibers or more: The level of not being practically usable.

Example 1

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 2

A main synthetic fiber (thick fiber, drawn polyester fiber, fiber diameter 14.3 $\mu$m, fiber length 5 mm, aspect ratio 351), a binder synthetic fiber (non-drawn polyester fiber, fiber diameter 6.8 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 3

A main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 8.6 $\mu$m, fiber length 5 mm, aspect ratio 582) were mixed and dispersed in water in an amount ratio of 40:30:30, and a wet sheet was made therefrom with a cylinder machine. Then, the wet sheet was dried under heat and pressure with a Yankee dryer having a surface temperature of 130˚C to give a sheet having a basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 4

A main synthetic fiber (thick fiber, drawn polyester fiber, fiber diameter 17.5 $\mu$m, fiber length 5 mm, aspect ratio 286), a main synthetic fiber (thick fiber, drawn polyester fiber, fiber diameter 12.5 $\mu$m, fiber length 5 mm, aspect ratio 399), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 7.4 $\mu$m, fiber length 5 mm, aspect ratio 672) were mixed and dispersed in water in an amount ratio of 15:20:30:35, and a wet sheet was made therefrom with a cylinder machine. Then, the wet sheet was dried under heat and pressure with a Yankee dryer having a surface temperature of 130˚C to give a sheet having a basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 5

A main synthetic fiber (thick fiber, drawn polyester fiber, fiber diameter 12.5 $\mu$m, fiber length 10 mm, aspect ratio 798), a binder synthetic fiber (non-drawn polyester fiber, fiber diameter 14.3 $\mu$m, fiber length 5 mm, melting point 230˚C) and a main synthetic fiber (fine fiber, drawn polyester fiber, fiber diameter 6.4 $\mu$m, fiber length 5 mm, aspect ratio 785) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 6

A main synthetic fiber (thick fiber, drawn polyester fiber, fiber diameter 17.5 $\mu$m, fiber length 5 mm, aspect ratio 286), a main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C), a main synthetic fiber (fine fiber, drawn polyester fiber, fiber diameter 7.4 $\mu$m, fiber length 5 mm, aspect ratio 672) and a main synthetic fiber (fine fiber, drawn polyester fiber, fiber diameter 3.0 $\mu$m, fiber length 5 mm, aspect ratio 1,646) were mixed and dispersed in water in an amount ratio of 15:20:30:30:5, and a wet sheet was made therefrom with a cylinder machine. Then, the wet sheet was dried under heat and pressure with a Yankee dryer having a surface temperature of 130˚C to give a sheet having a basis weight of 80 g/m$^2$

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 7

A two-layer-structured sheet was produced with a combination machine of an inclined-wire machine and a cylinder machine. A main synthetic fiber (thick fiber, drawn polyester fiber, fiber diameter 14.3 $\mu$m, fiber length 5 mm, aspect ratio 351), a binder synthetic fiber (non-drawn polyester fiber, fiber diameter 6.8 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with the inclined-wire machine. A main synthetic fiber (thick fiber, drawn polyester fiber, fiber diameter 14.3 $\mu$m, fiber length 5 mm, aspect ratio 351), a binder synthetic fiber (non-drawn polyester fiber, fiber diameter 6.8 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with the cylinder machine. Then, the two wet layers were combined and the resultant sheet was dried under heat and pressure with a Yankee dryer having a surface temperature of 130˚C to give a sheet having a layer basis weight ratio of 1:1 and having a total basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 8

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 3 mm, aspect ratio 259) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 9

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, and then processed with a calender apparatus formed of a combination of a heating metal roll and a cotton roll under the conditions of a temperature of 200˚C, a pressure of 850 N/cm and a processing speed of 20 m/minute, to give a semipermeable membrane supporting material. The surface that came in contact with the heating metal roll in the second calender apparatus was used as a semipermeable membrane application surface.

Example 10

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and an elastic roll under the conditions of a heating roll temperature of 200˚C, a pressure of 785 N/cm and a processing speed of 30 m/minute, and then processed with a calender apparatus formed of a combination of a heating metal roll and an elastic roll in such a manner that the surface that had come in contact with the heating metal roll in the first calender apparatus came in contact with the elastic roll, under the conditions of a heating roll temperature of 200˚C, a pressure of 785 N/cm and a processing speed of 30 m/minute, to give a semipermeable membrane supporting material. The surface that came in contact with the Yankee dryer was used as a semipermeable membrane application surface.

Example 11

A two-layer-structured sheet was produced with a combination machine of an inclined-wire machine and a cylinder machine. A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet to constitute a non-application surface layer was made therefrom with the inclined-wire machine. A main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 8.6 $\mu$m, fiber length 5 mm, aspect ratio 583) were mixed and dispersed in water in an amount ratio of 40:30:30, and a wet sheet to constitute a semipermeable membrane application surface layer was made therefrom with the cylinder machine. Then, the two wet layers were combined and the resultant sheet was dried under heat and pressure with a Yankee dryer having a surface temperature of 130˚C to give a sheet having a semipermeable membrane application surface layer and non-application surface layer basis weight ratio of 1:1 and having a total basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 12

A two-layer-structured sheet was produced with a combination machine of an inclined-wire machine and a cylinder machine. A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet to constitute a non-application surface layer was made therefrom with the inclined-wire machine. A main synthetic fiber (thick fiber, drawn polyester fiber, fiber diameter 12.5 $\mu$m, fiber length 10 mm, aspect ratio 798), a binder synthetic fiber (non-drawn polyester fiber, fiber diameter 14.3 $\mu$m, fiber length 5 mm, melting point 230˚C) and a main synthetic fiber (fine fiber, drawn polyester fiber, fiber diameter 6.4 $\mu$m, fiber length 5 mm, aspect ratio 785) were mixed and dispersed in water in an amount ratio of 30:30:40, and a wet sheet to constitute a semipermeable membrane application surface layer was made therefrom with the cylinder machine. Then, the two wet layers were combined and the resultant sheet was dried under heat and pressure with a Yankee dryer having a surface temperature of 130˚C to give a sheet having a semipermeable membrane application surface layer and non-application surface layer basis weight ratio of 1:1 and having a total basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 13

A two-layer-structured sheet was produced with a combination machine of an inclined-wire machine and a cylinder machine. A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet to constitute a non-application surface layer was made therefrom with the inclined-wire machine. A main synthetic fiber (thick fiber, drawn polyester fiber, fiber diameter 17.5 $\mu$m, fiber length 5 mm, aspect ratio 286), a main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C), a main synthetic fiber (fine fiber, drawn polyester fiber, fiber diameter 7.4 $\mu$m, fiber length 5 mm, aspect ratio 672) and a main synthetic fiber (fine fiber, drawn polyester fiber, fiber diameter 3.0 $\mu$m, fiber length 5 mm, aspect ratio 1,646) were mixed and dispersed in water in an amount ratio of 15:20:30:30:5, and a wet sheet to constitute a semipermeable membrane application surface layer was made therefrom with the cylinder machine. Then, the two wet layers were combined and the resultant sheet was dried under heat and pressure with a Yankee dryer having a surface temperature of 130˚C to give a sheet having a semipermeable membrane application surface layer and non-application surface layer basis weight ratio of 1:1 and having a total basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 14

A two-layer-structured sheet was produced with a combination machine of an inclined-wire machine and a cylinder machine. A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet to constitute a non-application surface layer was made therefrom with the inclined-wire machine. A main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 8.6 $\mu$m, fiber length 5 mm, aspect ratio 583) were mixed and dispersed in water in an amount ratio of 40:30:30, and a wet sheet to constitute a semipermeable membrane application surface layer was made therefrom with the cylinder machine. Then, the two wet layers were combined and the resultant sheet was dried under heat and pressure with a Yankee dryer having a surface temperature of 130˚C to give a sheet having a semipermeable membrane application surface layer and non-application surface layer basis weight ratio of 1:1 and having a total basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 50 m/minute, and further processed with a calender apparatus formed of a combination of a heating metal roll and a cotton roll under the conditions of a temperature of 200˚C, a pressure of 785 N/cm and a processing speed of 30 m/minute in a manner that the semipermeable membrane application surface layer came in contact with the heating metal roll, to give a semipermeable membrane supporting material.

Example 15

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet to constitute a non-application surface layer was made therefrom with the cylinder machine. Then, the wet sheet was dried under heat and pressure with a Yankee dryer having a surface temperature of 130˚C to give a sheet A of the non-application surface layer having a basis weight of 20 g/m$^2$.

A two-layer-structured sheet was produced with a combination machine of an inclined-wire machine and a cylinder machine. A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet to constitute an intermediate layer was made therefrom with the inclined-wire machine. A main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 8.6 $\mu$m, fiber length 5 mm, aspect ratio 583) were mixed and dispersed in water in an amount ratio of 40:30:30, and a wet sheet to constitute a semipermeable membrane application surface layer was made therefrom with the cylinder machine. Then, the two wet layers were combined and the resultant sheet was dried under heat and pressure with a Yankee dryer having a surface temperature of 130˚C to give a sheet B having a semipermeable membrane application surface layer and intermediate layer basis weight ratio of 1:1 and having a total basis weight of 60 g/m$^2$.

The sheet A was stacked on the intermediate layer surface of the sheet B, and the resultant set was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material having a semipermeable membrane application surface layer, intermediate layer and non-application surface layer basis weight ratio of 3:3:2 and a total basis weight of 80 g/m$^2$.

Example 16

A main synthetic fiber (thick fiber, drawn polyester fiber, fiber diameter 39.6 $\mu$m, fiber length 5 mm, aspect ratio 126), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 17

A main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 2.4 $\mu$m, fiber length 5 mm, aspect ratio 2,125) were mixed and dispersed in water in an amount ratio of 40:30:30, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 18

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 14.3 $\mu$m, fiber length 2 mm, aspect ratio 140) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 19

A main synthetic fiber (thick fiber, drawn polyester fiber, fiber diameter 12.5 $\mu$m, fiber length 13 mm, aspect ratio 1,040), a binder synthetic fiber (non-drawn polyester fiber, fiber diameter 14.3 $\mu$m, fiber length 5 mm, melting point 230˚C) and a main synthetic fiber (fine fiber, drawn polyester fiber, fiber diameter 6.4 $\mu$m, fiber length 5 mm, aspect ratio 785) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained non-woven fabric was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with the Yankee dryer was used as a semipermeable membrane application surface.

Example 20

A two-layer-structured sheet was produced with a combination machine of an inclined-wire machine and a cylinder machine. A main synthetic fiber (fine fiber, drawn polyester fiber, fiber diameter 11.6 $\mu$m, fiber length 5 mm, aspect ratio 432) and a binder synthetic fiber (non-drawn polyester fiber, fiber diameter 10.5 $\mu$m, fiber length 5 mm, melting point 260˚C) were mixed and dispersed in water in an amount ratio of 55:45, and a wet sheet to constitute a semipermeable membrane application surface layer was made therefrom with the inclined-wire machine. A main synthetic fiber (thick fiber, drawn polyester fiber, fiber diameter 20.2 $\mu$m, fiber length 10 mm, aspect ratio 495) and a binder synthetic fiber (non-drawn polyester fiber, fiber diameter 10.5 $\mu$m, fiber length 5 mm, melting point 260˚C) were mixed and dispersed in water in an amount ratio of 55:45, and a wet sheet to constitute a non-application surface layer was made therefrom with the cylinder machine. Then, the two wet sheets were combined and the resultant sheet was dried under heat and pressure with a Yankee dryer having a surface temperature of 130˚C to give a sheet having a semipermeable membrane application surface layer and non-application surface layer basis weight ratio of 1:1 and having a total basis weight of 103 g/m$^2$.

The thus-obtained sheet was processed with a calender apparatus formed of a combination of a heating metal roll and a cotton roll under the conditions of a heating metal roll temperature of 230˚C, a pressure of 785 N/cm and a processing speed of 10 m/minute, and then processed with a calender apparatus formed of a combination of a heating metal roll and a cotton roll in a manner that the surface that came in contact with the heating metal roll in the first calender apparatus came in contact with the cotton roll, under the conditions of a heating metal roll temperature of 200˚C, a pressure of 785 N/cm and a processing speed of 10 m/minute, to give a semipermeable membrane supporting material. In addition, it was arranged that the semipermeable membrane application surface layer came in contact with the heating metal roll in the first calender apparatus.

Example 21

A main synthetic fiber (thick fiber, drawn polyester fiber, fiber diameter 12.5 $\mu$m, fiber length 10 mm, aspect ratio 798), a binder synthetic fiber 1 (non-drawn polyester fiber, fiber diameter 14.3 $\mu$m, fiber length 5 mm, melting point 230˚C), a binder synthetic fiber 2 (non-drawn polyester fiber, fiber diameter 14.3 $\mu$m, fiber length 5 mm, melting point 255˚C) and main synthetic fiber (fine fiber, drawn polyester fiber, fiber diameter 6.4 $\mu$m, fiber length 5 mm, aspect ratio 785) were mixed and dispersed in water in an amount ratio of 30:15:15:40, and a wet sheet was made therefrom with the cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute in a manner that one surface was more heated like it embraced one heating metal roll after nipped, to give a semipermeable membrane supporting material. The surface that came in contact with the metal roll and embraced it was used as a semipermeable membrane application surface.

Comparative Example 1

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet was made therefrom with a cylinder machine. Then, the wet sheet was dried with an air dryer having a hot air temperature of 150˚C to give a sheet having a basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Comparative Example 2

A main synthetic fiber (thick fiber, drawn polyester fiber, fiber diameter 24.7 $\mu$m, fiber length 10 mm, aspect ratio 405), a binder synthetic fiber (non-drawn polyester fiber, fiber diameter 10.5 $\mu$m, fiber length 5 mm, melting point 260˚C) and a main synthetic fiber (fine fiber, drawn polyester fiber, fiber diameter 12.5 $\mu$m, fiber length 5 mm, aspect ratio 399) were mixed and dispersed in water in an amount ratio of 25:45:30, and a wet sheet was made therefrom with a cylinder machine. Then, the wet sheet was dried under heat and pressure with a Yankee dryer having a surface temperature of 130˚C to give a sheet having a basis weight of 104 g/m$^2$.
The thus-obtained sheet was processed with a calender apparatus formed of a combination of a heating metal roll and a cotton roll under the conditions of a heating metal roll temperature of 230˚C, a pressure of 785 N/cm and a processing speed of 10 m/minute, and then processed with a calender apparatus formed of a combination of a heating metal roll and a cotton roll in a manner that the surface that came in contact with the heating metal roll in the first calender apparatus came in contact with the cotton roll, under the conditions of a heating metal roll temperature of 240˚C, a pressure of 1,470 N/cm and a processing speed of 10 m/minute, to give a semipermeable membrane supporting material. The surface that came in contact with the heating metal roll in the second calender apparatus was used as a non-application surface.

Comparative Example 3

A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 260˚C) and a main synthetic fiber (fine fiber, drawn polyester fiber, fiber diameter 12.5 $\mu$m, fiber length 5 mm, aspect ratio 399) were mixed and dispersed in water in an amount ratio of 30:40:30, and a wet sheet was made therefrom with a cylinder machine. Then, the wet sheet was dried under heat and pressure with a Yankee dryer having a surface temperature of 130˚C to give a sheet having a basis weight of 68 g/m$^2$.
The thus-obtained sheet was processed with a calender apparatus formed of a combination of a heating metal roll and an elastic roll under the conditions of a temperature of 255˚C, a pressure of 588 N/cm and a processing speed of 25 m/minute, and then processed with a calender apparatus formed of a combination of a heating metal roll and an elastic roll in a manner that the surface that came in contact with the heating metal roll in the first calender apparatus came in contact with the elastic roll, under the conditions of a heating metal roll temperature of 225˚C, a pressure of 588 N/cm and a processing speed of 25 m/minute, to give a semipermeable membrane supporting material. The surface that came in contact with a Yankee dryer was used as a semipermeable membrane application surface.

Comparative Example 4

A two-layer-structured sheet was produced with a combination machine of an inclined-wire machine and a cylinder machine. A main synthetic fiber (thick fiber, drawn polyester fiber, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 11.6 $\mu$m, fiber length 5 mm, aspect ratio 432) were mixed and dispersed in water in an amount ratio of 30:30:40, and a wet sheet to constitute a non-application surface layer was made therefrom with the inclined-wire machine. A main synthetic fiber (thick fiber, drawn polyester fiber, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C) and a main synthetic fiber (fine fiber, drawn polyester fiber, fiber diameter 8.6 $\mu$m, fiber length 5 mm, aspect ratio 583) were mixed and dispersed in water in an amount ratio of 40:30:30, and a wet sheet to constitute a semipermeable membrane application surface layer was made therefrom with the cylinder machine. Then, the two wet sheets were combined and the resultant sheet was dried under heat and pressure with a Yankee dryer having a surface temperature of 130˚C to give a sheet having a semipermeable membrane application surface layer and non-application surface layer basis weight ratio of 1:1 and having a total basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 50 m/minute, further processed with a calender apparatus formed of a combination of a heating metal roll and a cotton roll in a manner that the semipermeable membrane application surface came in contact with the heating metal roll under the conditions of a temperature of 200˚C, a pressure of 785 N/cm and a processing speed of 30 m/minute, and further processed with a calender apparatus formed of a combination of a heating metal roll and a cotton roll in a manner that the semipermeable membrane application surface came in contact with the heating metal roll under the conditions of a temperature of 200˚C, a pressure of 785 N/cm and a processing speed of 30 m/minute, to give a semipermeable membrane supporting material.

Comparative Example 5

In the semipermeable membrane supporting material of Example 14, the semipermeable membrane supporting material used the non-application surface as a semipermeable membrane application surface, and used the semipermeable membrane application surface as a non-application surface.

Comparative Example 6

A main synthetic fiber (thick fiber, drawn polyester fiber, fiber diameter 17.5 μm, fiber length 5 mm, aspect ratio 286), a binder synthetic fiber (non-drawn polyester fiber, fiber diameter 10.5 μm, fiber length 5 mm, melting point 260˚C) and a main synthetic fiber (fine fiber, drawn polyester fiber, fiber diameter 12.5 μm, fiber length 5 mm, aspect ratio 399) were mixed and dispersed in water in an amount ratio of 30:40:30, and a wet sheet was made therefrom with a cylinder machine. Then, the wet sheet was dried under heat and pressure with a Yankee dryer having a surface temperature of 130˚C to give a sheet C having a basis weight of 34 g/m$^2$.

The thus-obtained sheet was processed with a calender apparatus formed of a combination of a heating metal roll and an elastic roll under the conditions of a temperature of 225˚C, a pressure of 588 N/cm and a processing speed of 25 m/minute, to give a non-woven fabric C.

Then, a main synthetic fiber (thick fiber, drawn polyester fiber, fiber diameter 17.5 μm, fiber length 5 mm, aspect ratio 286) and a binder synthetic fiber (non-drawn polyester fiber, fiber diameter 10.5 μm, fiber length 5 mm, melting point 260˚C) were mixed and dispersed in water in an amount ratio of 60:40, and a wet sheet was made therefrom with a cylinder machine. Then, the wet sheet was dried under heat and pressure with a Yankee dryer having a surface temperature of 130˚C to give a sheet D having a basis weight of 34 g/m$^2$.

The non-woven fabric C was used as a semipermeable membrane application surface layer, the sheet D was used as a non-application surface layer, and the non-woven fabric C and the sheet D were stacked. The thus-obtained set was processed with a calender apparatus formed of a combination of a heating metal roll and an elastic roll in a manner that the sheet D came in contact with the heating metal roll, under the conditions of a heating metal temperature of 225˚C, a pressure of 588 N/cm and a processing speed of 25 m/minute, to give a semipermeable membrane supporting material having a semipermeable membrane application surface layer and non-application surface layer basis weight ratio of 1:1 and a total basis weight of 70 g/m$^2$.

Comparative Example 7

A main synthetic fiber (fine fiber, drawn polyester fiber, fiber diameter 12.5 μm, fiber length 5 mm, aspect ratio 399) and a binder synthetic fiber (non-drawn polyester fiber, fiber diameter 10.5 μm, fiber length 5 mm, melting point 260˚C) were mixed and dispersed in water in an amount ratio of 60:40, and a wet sheet was made therefrom with a cylinder machine. Then, the wet sheet was dried under heat and pressure with a Yankee dryer having a surface temperature of 130˚C to give a sheet E having a basis weight of 40 g/m$^2$.

A main synthetic fiber (thick fiber, drawn polyester fiber, fiber diameter 22.5 μm, fiber length 5 mm, aspect ratio 222) and a binder synthetic fiber (non-drawn polyester fiber, fiber diameter 10.5 μm, fiber length 5 mm, melting point 260˚C) were mixed and dispersed in water in an amount ratio of 60:40, and a wet sheet was made therefrom with a cylinder machine. Then, the wet sheet was dried under heat and pressure with a Yankee dryer having a surface temperature of 130˚C to give a sheet F having a basis weight of 50 g/m$^2$.

The sheet E was used as a non-application surface layer, the sheet F was used as a semipermeable membrane application surface layer, and the set E and the sheet F were stacked. The thus-obtained set was processed with a calender apparatus formed of a combination of a heating metal roll and an elastic roll under the conditions of a temperature of 226˚C, a pressure of 980 N/cm and a processing speed of 30 m/minute, and processed with a calender apparatus formed of a combination of a heating metal roll and an elastic roll in a manner that the surface that first came in contact with the metal roll came in contact with the elastic roll, under the conditions of a heating metal roll temperature of 226˚C, a pressure of 980 N/cm and a processing speed of 30 m/minute, to give a semipermeable membrane supporting material having a semipermeable membrane application surface layer and non-application surface layer basis weight ratio of 5: 4 and a total basis weight of 90 g/m$^2$.

Comparative Example 8

A main synthetic fiber (thick fiber, drawn polyester fiber, fiber diameter 12.5 $\mu$m, fiber length 10 mm, aspect ratio 798), a binder synthetic fiber 1(non-drawn polyester fiber, fiber diameter 14.3 $\mu$m, fiber length 5 mm, melting point 230˚C), a binder synthetic fiber 2(non-drawn polyester fiber, fiber diameter 14.3 $\mu$m, fiber length 5 mm, melting point 255˚C) and a main synthetic fiber (fine fiber, drawn polyester fiber, fiber diameter 6.4 $\mu$m, fiber length 5 mm, aspect ratio 785) were mixed and dispersed in water in an amount ratio of 30:15:15:40, and a wet sheet was made therefrom with a cylinder machine. Then, the wet sheet was dried under heat and pressure with a Yankee dryer having a surface temperature of 130˚C to give a sheet having a basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute in a manner that one surface was more heated like it embraced one heating metal roll after nipped, to give a semipermeable membrane supporting material. The surface that did not come in contact with the metal roll surface that the sheet embraced was used as a semipermeable membrane application surface.

Comparative Example 9

A two-layer-structured sheet was produced with a combination machine of an inclined-wire machine and a cylinder machine. A main synthetic fiber (fine fiber, drawn polyester fiber, fiber diameter 11.6 $\mu$m, fiber length 5 mm, aspect ratio 432) and a binder synthetic fiber (non-drawn polyester fiber, fiber diameter 10.5 $\mu$m, fiber length 5 mm, melting point 260˚C) were mixed and dispersed in water in an amount ratio of 55:45, and a wet sheet to constitute a non-application surface layer was made therefrom with the inclined-wire machine. A main synthetic fiber (thick fiber, drawn polyester fiber, fiber diameter 20.2 $\mu$m, fiber length 10 mm, aspect ratio 495) and a binder synthetic fiber (non-drawn polyester fiber, fiber diameter 10.5 $\mu$m, fiber length 5 mm, melting point 260˚C) were mixed and dispersed in water in an amount ratio of 55:45, and a wet sheet to constitute a semipermeable membrane application surface layer was made therefrom with the cylinder machine. Then, the two wet sheets were combined and the resultant sheet was dried under heat and pressure with a Yankee dryer having a surface temperature of 130˚C to give a sheet having a semipermeable membrane application surface layer and non-application surface layer basis weight ratio of 1:1 and having a total basis weight of 103 g/m$^2$.
The thus-obtained sheet was processed with a calender apparatus formed of a combination of a heating metal roll and a cotton roll under the conditions of a heating metal roll temperature of 230˚C, a pressure of 785 N/cm and a processing speed of 10 m/minute, and then was processed with a calender apparatus formed of a combination of a heating metal roll and a cotton roll in a manner that the surface that came in contact with the heating metal roll in the first calender apparatus came in contact with the cotton roll, under the conditions of a heating metal roll temperature of 200˚C, a pressure of 785 N/cm and a processing speed of 10 m/minute, to give a semipermeable membrane supporting material. In addition, it was arranged that the semipermeable membrane application surface layer came in contact with the cotton roll in the first calender apparatus.
The semipermeable membrane supporting materials obtained in Examples 1 to 21 and Comparative Examples 1 to 9 were evaluated in the tests 1 to 6, and Tables 1 to 6 shows the results.
[Table 1]

Table 1

|  |  | Example1 | Example2 | Example3 | Example4 | Example5 |
|---|---|---|---|---|---|---|
| Average fiber diameter [$\mu$ m] of main synthetic fiber |  | 14.1 | 12.8 | 10.3 | 11.0 | 9.0 |
| Test1 | Thickness[$\mu$m] | 105 | 95 | 94 | 100 | 98 |

(continued)

|  |  |  |  | Example1 | Example2 | Example3 | Example4 | Example5 |
|---|---|---|---|---|---|---|---|---|
| Test2 | Smoothness [sec.] | | Semipermeable membrane application surface | 7.0 | 9.0 | 14.0 | 10.0 | 12.0 |
| | | | Non-application surface | 5.0 | 7.0 | 11.0 | 8.0 | 10.0 |
| | Smoothness ratio | | Semipermeable membrane application surface: Non-application surface | 1.4:1.0 | 1.3:1.0 | 1.3:1.0 | 1.3:1.0 | 1.2:1.0 |
| Test3 | Maximum pore diameter [μ m] | | | 28.5 | 27.4 | 22.7 | 26.5 | 24.7 |
| | Average pore diameter[μ m] | | | 9.2 | 8.9 | 4.9 | 8.5 | 6.5 |
| Test4 | Infiltration of semipermeable membrane | | | △ | △ | ◎ | ○ | ◎ |
| Test5 | Adhesion of semipermeable membrane | | | ○ | ○ | ○ | ○ | ○ |
| Test6 | Adhesion of non-application surface | | | ○ | ○ | △ | ○ | △ |
| Note | | | | — | — | — | — | — |

[Table 2]

Table 2

|  |  |  | Example6 | Example7 | Example8 | Example9 | Example10 |
|---|---|---|---|---|---|---|---|
| Average fiber diameter [μ m] of main synthetic fiber | | | 10.5 | 12.8 | 14.1 | 14.1 | 14.1 |
| Test1 | Thickness[μ m] | | 95 | 96 | 96 | 103 | 98 |
| Test2 | Smoothness [sec.] | Semipermeable membrane application surface | 13.0 | 11.0 | 10.0 | 17.0 | 19.0 |
| | | Non-application surface | 10.0 | 7.0 | 7.0 | 7.0 | 14.0 |
| | Smoothness ratio | Semipermeable membrane application surface: Non-application surface | 1.3:1.0 | 1.6:1.0 | 1.4:1.0 | 2.4:1.0 | 1.4:1.0 |
| Test3 | Maximum pore diameter [μ m] | | 23.0 | 27.2 | 27.2 | 28.1 | 26.9 |
| | Average pore diameter[μ m] | | 5.1 | 8.7 | 8.8 | 8.9 | 8.3 |
| Test4 | Infiltration of semipermeable membrane | | ○ | ○ | △ | ○ | ○ |

(continued)

|  |  |  | Example6 | Example7 | Example8 | Example9 | Example10 |
|---|---|---|---|---|---|---|---|
| Test5 | Adhesion of semipermeable membrane | | ○ | ○ | ○ | ○ | ○ |
| Test6 | Adhesion of non-application surface | | Δ | ○ | ○ | ○ | Δ |
| Note | | | — | — | — | — | — |

[Table 3]

Table3

| | | | Example11 | Example12 | Example13 | Example14 | Example15 |
|---|---|---|---|---|---|---|---|
| Average fiber diameter [μ m] of main synthetic fiber | | | 12.2 | 11.6 | 12.3 | 12.2 | 12.7 |
| Test1 | Thickness[μ m] | | 101 | 103 | 101 | 97 | 102 |
| Test2 | Smoothness [sec.] | Semipermeable membrane application surface | 12.0 | 11.0 | 11.5 | 51.0 | 11.0 |
| | | Non-application surface | 7.0 | 7.0 | 7.0 | 12.0 | 5.0 |
| | Smoothness ratio | Semipermeable membrane application surface: Non-application surface | 2.1:1.0 | 1.6:1.0 | 1.6:1.0 | 4.3 : 1.0 | 2.2:1.0 |
| Test3 | Maximum pore diameter [μ m] | | 25.6 | 26.3 | 25.2 | 25.6 | 26.8 |
| | Average pore diameter[μ m] | | 7.0 | 7.3 | 6.9 | 7.0 | 7.5 |
| Test4 | Infiltration of semipermeable membrane | | ◎ | ◎ | ○ | ◎ | ○ |
| Test5 | Adhesion of semipermeable membrane | | ○ | ○ | ○ | ○ | ○ |
| Test6 | Adhesion of non-application surface | | ○ | ○ | ○ | Δ | ◎ |
| Note | | | — | — | — | — | — |

[Table 4]

Table 4

| | | | Example 16 | Example17 | Example18 | Example19 | Example20 |
|---|---|---|---|---|---|---|---|
| Average fiber diameter [μ m] of main synthetic fiber | | | 23.6 | 7.7 | 15.7 | 9.0 | 15.9 |
| Test1 | Thickness[μ m] | | 118 | 90 | 105 | 98 | 128 |
| Test2 | Smoothness [sec.] | Semipermeable membrane application surface | 3.7 | 20.0 | 5.0 | 12.0 | 22.0 |
| | | Non-application surface | 3.2 | 16.0 | 4.0 | 10.0 | 18.0 |
| | Smoothness ratio | Semipermeable membrane application surface: Non-application surface | 1.2:1.0 | 1.3:1.0 | 1.3:1.0 | 1.2:1.0 | 1.2:1.0 |
| Test3 | Maximum pore diameter [μ m] | | 32.5 | 10.9 | 28.5 | 24.7 | 26.4 |
| | Average pore diameter[μ m] | | 13.2 | 1.9 | 9.2 | 6.5 | 8.4 |
| Test4 | Infiltration of semipermeable membrane | | × | ○ | × | ◎ | ○ |
| Test5 | Adhesion of semipermeable membrane | | ◎ | × | ○ | ○ | ○ |
| Test6 | Adhesion of non-application surface | | × | × | ◎ | Δ | Δ |
| Note | | | - | - | Failure in separation from wire | Defective texture | Defective texture |

[Table 5]

Table 5

| | | | Example21 | Comparative Example1 | Comparative Example2 | Comparative Example3 | Comparative Example4 |
|---|---|---|---|---|---|---|---|
| Average fiber diameter [μm] of main synthetic fiber | | | 9.0 | 14.1 | 18.0 | 15.0 | 12.2 |
| Test1 | Thickness [μm] | | 96 | 125 | 125 | 85 | 93 |
| | Smoothness [sec.] | Semipermeable membrane application surface | 16.0 | 5.0 | 9.5 | 5.0 | 76.0 |
| | | Non-application surface | 9.0 | 5.0 | 10.2 | 7.0 | 14.0 |
| Test2 | Smoothness ratio | Semipermeable membrane application surface: Non-application surface | 1.8:1.0 | 1.0:1.0 | 0.9:1.0 | 0.7:1.0 | 5.4:1.0 |
| Test3 | Maximum pore diameter [μm] | | 24.3 | 29.8 | 27.5 | 30.4 | 23.4 |
| | Average pore diameter [μm] | | 6.4 | 12.5 | 8.8 | 10.2 | 6.1 |
| Test4 | Infiltration of semipermeable membrane | | ◎ | × | × | × | ◎ |
| Test5 | Adhesion of semipermeable membrane | | △ | ○ | △ | △ | × |
| Test6 | Adhesion of non-application surface | | ○ | △ | ○ | △ | △ |
| Note | | | — | — | — | — | — |

[Table 6]

Table 6

| | | | Comparative Example5 | Comparative Example6 | Comparative Example7 | Comparative Example8 | Comparative Example9 |
|---|---|---|---|---|---|---|---|
| Average fiber diameter [μm] of main synthetic fiber | | | 12.2 | 16.3 | 18.0 | 9.0 | 15.9 |
| Test1 | Thickness[μm] | | 97 | 86 | 105 | 96 | 128 |
| Test2 | Smoothness [sec.] | Semipermeable membrane application surface | 12.0 | 5.0 | 8.0 | 9.0 | 18.0 |
| | | Non-application surface | 51.0 | 9.0 | 12.0 | 16.0 | 22.0 |
| | Smoothness ratio | Semipermeable membrane application surface: Non-application surface | 0.2:1.0 | 0.7:1.0 | 0.7:1.0 | 1.0:1.8 | 1.0:1.2 |
| Test3 | Maximum pore diameter [μm] | | 25.6 | 32.2 | 28.5 | 24.3 | 26.4 |
| | Average pore diameter[μm] | | 7.0 | 10.8 | 9.2 | 6.4 | 8.4 |
| Test4 | Infiltration of semipermeable membrane | | ○ | × | × | △ | ○ |
| Test5 | Adhesion of semipermeable membrane | | ○ | △ | △ | ○ | ○ |
| Test6 | Adhesion of non-application surface | | × | △ | ○ | △ | × |
| Note | | | — | — | — | — | Defective texture |

EP 2 492 001 A1

The semipermeable membrane supporting materials of Examples 1 to 10 accomplished the level of being practically usable in the evaluations of the infiltration of semipermeable membrane, the adhesion of semipermeable membrane and the adhesion of non-application surface.

When Examples 2 and 7 which were equivalent in fiber composition and amount are compared, the semipermeable membrane supporting material that had a two-layer structure in Example 7 had a high smoothness and exhibited excellent infiltration of a semipermeable membrane as compared with the semipermeable membrane supporting material that had a single-layer structure in Example 2.

The semipermeable membrane supporting materials of Examples 11 to 15 were multiple-layer structured nonwoven fabrics in which the semipermeable membrane application surface layer and the non-application surface layer were different in fiber composition and amount, and they were well-balanced in the evaluations of the infiltration of semipermeable membrane, the adhesion of semipermeable membrane and the adhesion of non-application surface and accomplished the level of being practically usable.

The supporting material of Example 16 uses a thick fiber having an aspect ratio of less than 200, and the fiber diameter of the thick fiber is over 20.0 $\mu$m, so that the semipermeable membrane application surface is poor in smoothness, and the semipermeable membrane slightly bled on to the non-application surface. In the supporting material of Example 17, the fine fiber has an aspect ratio of over 2,000, the entangling of fibers hence occurred, and the supporting material was poor in formation, while it was excellent in the infiltration of semipermeable membrane.

The supporting material of Example 18 used the fine fiber having an aspect ratio of less than 200, so that it was poor in the capability of separating from a forming fabric, while the infiltration of semipermeable membrane was at the level of being practically usable. The supporting material of Example 19 used the thick fiber having an aspect ratio of over 1,000, so that it was poor in formation, while the infiltration of semipermeable membrane was at the level of being practically usable, and the adhesion of non-application surface was also at the level of being practically usable.

In the supporting material of Example 20, none of the semipermeable membrane application surface layer and the non-application layer surface contained any fine fiber, and the thick fiber had a fiber diameter of over 20.0 $\mu$m, so that it was observed that the formation tended to be poor.

In the semipermeable membrane supporting material of Example 21, the thick fiber and the fine fiber were incorporated, and two binder synthetic fibers having different melting points were incorporated. The semipermeable membrane application surface was in contact with the heating metal roll for a longer period of time to achieve a higher smoothness, and the semipermeable membrane supporting material was excellent in both the infiltration of semipermeable membrane and the adhesion of non-application surface.

The semipermeable membrane supporting material of Comparative Example 1 was the same as the semipermeable membrane supporting material of Example 1 in fiber composition and amount, while it was poor in the infiltration of semipermeable membrane and the adhesion of non-application surface as compared to that of Example 1 since the semipermeable membrane application surface and the non-application surface were not different in smoothness.

In the semipermeable membrane supporting material of Comparative Example 2, the thick fiber had a fiber diameter of over 20.0 $\mu$m, so that the smoothness of the semipermeable membrane application surface was low, which resulted in a semipermeable membrane application surface and non-application surface smoothness ratio of 0.9:1.0 and in much infiltration of the semipermeable membrane solution. In the supporting material of Comparative Example 3, the smoothness of the non-application surface was higher than that of the semipermeable membrane application surface, so that the infiltration of semipermeable membrane was poor, and the adhesion of the semipermeable membrane and the adhesion of the non-application surface were at the lowest-limit level in practical use.

The semipermeable membrane supporting material of Comparative Example 4 had the same layer structure as that of the semipermeable membrane supporting material of Example 11, while it had the processing under heat and pressure three times, and the heating metal roll came in contact with the semipermeable membrane application surface three times, so that the smoothness each of the semipermeable membrane application surface and the non-application surface was higher than that in Example 11, and that the smoothness ratio of the semipermeable membrane application and the non-application surface was also over 5.0:1.0. As compared with Example 11, therefore, the adhesion of semipermeable membrane was degraded, and the adhesion of non-application surface was also degraded.

The semipermeable membrane supporting material of Comparative Example 5 had front and back surfaces that were opposite to those of the semipermeable membrane supporting material of Example 14. As a result, the smoothness of the non-application surface was too high, and the adhesive did not fully infiltrate, so that the adhesion of the non-application surface was poor.

In the semipermeable membrane supporting materials of Comparative Examples 6 and 7, the non-application surface had higher smoothness than the semipermeable membrane application surface, so the infiltration of the semipermeable membrane was poor.

The semipermeable membrane supporting material of Comparative Example 8 had front and back surfaces that were opposite to those of the semipermeable membrane supporting material of Example 21. As a result, the smoothness of the non-application surface was too high, and the adhesive did not fully infiltrate, so that the adhesion of the non-application surface was poor.

The semipermeable membrane supporting material of Comparative Example 9 had front and back surfaces that were opposite to those of the semipermeable membrane supporting material of Example 20. As a result, the smoothness of the non-application surface was too high, and the adhesive did not fully infiltrate, so that the adhesion of the non-application surface was poor.

Example 22

A main synthetic fiber (fine fiber, drawn polyester fiber, fiber diameter 7.8 $\mu$m, fiber length 5 mm), a main synthetic fiber (thick fiber, drawn polyester fiber, fiber diameter 12.4 $\mu$m, fiber length 5 mm), a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230°C) were mixed and dispersed in water in an amount ratio of 25:25:20:30, and a wet sheet was made therefrom with a cylinder machine. Then, the wet sheet was dried under heat and pressure with a Yankee dryer having a surface temperature of 130°C to give a sheet having a main synthetic fiber average fiber diameter of 12.2 $\mu$m and having a basis weight of 80 g/m$^2$.

The thus-obtained sheet was processed with a calender apparatus formed of a combination of a heating metal roll and a heating metal roll under the conditions of a temperature of 200°C, a pressure of 800 N/cm and a processing speed of 20 m/minute. The surface that came in contact with a Yankee dryer was used as a semipermeable membrane application surface, and measured for a surface roughness with a surface roughness tester (trade name: VK8510, supplied by KEYENCE Corporation) to obtain a semipermeable membrane supporting material having a semipermeable membrane application surface having an Ra of 8.5 $\mu$m and an Rz of 100 $\mu$m, determined by the method described in JIS B0601.

Example 23

A semipermeable membrane supporting material having a main synthetic fiber average fiber diameter of 14.7 $\mu$m was obtained in the same manner as in Example 22 except that a main synthetic fiber (fine fiber, drawn polyester fiber, fiber diameter 7.8 $\mu$m, fiber length 5 mm), a main synthetic fiber (thick fiber, drawn polyester fiber, fiber diameter 12.4 $\mu$m, fiber length 5 mm), a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230°C) was used in an amount ratio of 10:20:40:30 and that the semipermeable membrane application surface was adjusted to have an Ra of 10.6 $\mu$m and an Rz of 114 $\mu$m.

Example 24

A semipermeable membrane supporting material having a main synthetic fiber average fiber diameter of 9.1 $\mu$m was obtained in the same manner as in Example 22 except that a main synthetic fiber (fine fiber, drawn polyester fiber, fiber diameter 7.8 $\mu$m, fiber length 5 mm), a main synthetic fiber (drawn polyester fiber, fiber diameter 12.4 $\mu$m, fiber length 5 mm) and a binder synthetic fiber (non-drawn polyester fiber, fiber diameter 10.5 $\mu$m, fiber length 5 mm, melting point 230°C) were used in an amount ratio of 50:20:30 and that the semipermeable membrane application surface was adjusted to have an Ra of 6.0 and an Rz of 50 $\mu$m.

Example 25

A semipermeable membrane supporting material having a main synthetic fiber average fiber diameter of 15.4 $\mu$m was obtained in the same manner as in Example 22 except that a main synthetic fiber (fine fiber, drawn polyester fiber, fiber diameter 7.8 $\mu$m, fiber length 5 mm), a main synthetic fiber (thick fiber, drawn polyester fiber, fiber diameter 12.4 $\mu$m, fiber length 5 mm), a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230°C) were used in an amount ratio of 10:10:50:30 and that the semipermeable membrane application surface was adjusted to have an Ra of 11.0 $\mu$m and an Rz of 123 $\mu$m.

Example 26

A semipermeable membrane supporting material having a main synthetic fiber average fiber diameter of 10.6 $\mu$m was obtained in the same manner as in Example 22 except that a main synthetic fiber (fine fiber, drawn polyester fiber, fiber diameter 7.8 $\mu$m, fiber length 5 mm), a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length

5 mm, melting point 230°C) were used in an amount of 50:20:30 and that the semipermeable membrane application surface was adjusted to have an Ra of 7.9 μm and an Rz of 85 μm.

Example 27

A semipermeable membrane supporting material having a main synthetic fiber average fiber diameter of 13.0 μm was obtained in the same manner as in Example 22 except that a main synthetic fiber (fine fiber, drawn polyester fiber, fiber diameter 7.8 μm, fiber length 5 mm), a main synthetic fiber (thick fiber, drawn polyester fiber, fiber diameter 17.5 μm, fiber length 5 mm), a main synthetic fiber (thick fiber, drawn polyester fiber, fiber diameter 24.7 μm, fiber length 5 mm) and a binder synthetic fiber (non-drawn polyester fiber, fiber diameter 10.5 μm, fiber length 5 mm, melting point 230°C) were used in an amount ratio of 40:10:10:30 and that the semipermeable membrane application surface was adjusted to have an Ra of 8.2 μm and an Rz of 90 μm.

Example 28

A semipermeable membrane supporting material having a main synthetic fiber average fiber diameter of 16.2 μm was obtained in the same manner as in Example 22 except that a main synthetic fiber (fine fiber, drawn polyester fiber, fiber diameter 12.4 μm, fiber length 5 mm), a main synthetic fiber (thick fiber, drawn polyester fiber, fiber diameter 17.5 μm, fiber length 5 mm) and a binder synthetic fiber (non-drawn polyester fiber, fiber diameter 10.5 μm, fiber length 5 mm, melting point 230°C) were used in an amount ratio of 20:60:20, that the sheet was processed under the conditions of a temperature of 160°C, a pressure of 1,200 N/cm and a processing speed of 20 m/minute and that the semipermeable membrane application surface was adjusted to have an Ra of 14.0 μm and an Rz of 160 μm.

Comparative Example 10

A semipermeable membrane supporting material having a main synthetic fiber average fiber diameter of 24.7 μm was obtained in the same manner as in Example 22 except that a main synthetic fiber (thick fiber, drawn polyester fiber, fiber diameter 24.7 μm, fiber length 5 mm) and a binder synthetic fiber (non-drawn polyester fiber, fiber diameter 10.5 μm, fiber length 5 mm, melting point 230°C) were used in an amount ratio of 70:30 and that the semipermeable membrane application surface was adjusted to have an Ra of 17.5 μm and an Rz of 180 μm.

Comparative Example 11

A semipermeable membrane supporting material having a main synthetic fiber average fiber diameter of 12.4 μm was obtained in the same manner as in Comparative Example 10 except that a main synthetic fiber (drawn polyester fiber, fiber diameter 17.5 μm, fiber length 5 mm) and a binder synthetic fiber (non-drawn polyester fiber, fiber diameter 10.5 μm, fiber length 5 mm, melting point 230°C) were used in an amount ratio of 70:30 and that the semipermeable membrane application surface was adjusted to have an Ra of 15.2 μm and an Rz of 155 μm.

Comparative Example 12

A semipermeable membrane supporting material having a main synthetic fiber average fiber diameter of 7.8 μm was obtained in the same manner as in Comparative Example 10 except that a main synthetic fiber (drawn polyester fiber, fiber diameter 7.8 μm, fiber length 5 mm) and a binder synthetic fiber (non-drawn polyester fiber, fiber diameter 10.5 μm, fiber length 5 mm, melting point 230°C) were used in an amount ratio of 60:40, that the sheet was processed under the conditions of a temperature of 200°C, a pressure of 1,200 N/cm and a processing speed of 20 m/minute and that the semipermeable membrane application surface was adjusted to have an Ra of 4.5 μm and an Rz of 45 μm.
The semipermeable membrane supporting materials obtained in Examples 22 to 28 and Comparative Examples 10 to 12 were subjected to evaluations in the tests 2, 5 and 7, and Table 7 shows the results.

[Table 7]

Table 7

| | Average fiber diameter [$\mu$m] of main synthetic fiber | Ra [$\mu$m] | Rz [$\mu$m] | Test2 | | | Test5 | Test7 |
|---|---|---|---|---|---|---|---|---|
| | | | | Smoothness [sec.] | | Smoothness ratio | Adhesion of semipermeable membrane | Thickness uniformity of semipermeabl e membrane [$\mu$m] |
| | | | | Semiperm eable membrane application surface | Non-application surface | Semipermeable membrane application surface:Non-application surface | | |
| Example 22 | 12.2 | 8.5 | 100 | 10.3 | 8.4 | 1.2:1.0 | ◎ | 4 |
| Example 23 | 14.7 | 10.6 | 114 | 7.0 | 5.2 | 1.3:1.0 | ◎ | 5 |
| Example 24 | 9.1 | 6.0 | 50 | 13.0 | 10.3 | 1.3:1.0 | ○ | 4 |
| Example 25 | 15.4 | 11.0 | 123 | 6.0 | 4.6 | 1.3:1.0 | ◎ | 7 |
| Example 26 | 10.6 | 7.9 | 85 | 12.2 | 9.3 | 1.3:1.0 | ◎ | 6 |
| Example 27 | 13.0 | 8.2 | 90 | 11.0 | 7.2 | 1.5:1.0 | ○ | 6 |
| Example 28 | 16.2 | 14.0 | 160 | 5.0 | 4.2 | 1.2:1.0 | ○ | 8 |
| Comparative Example 10 | 24.7 | 17.5 | 180 | 3.9 | 3.2 | 1.2:1.0 | ◎ | 16 |
| Comparative Example 11 | 17.5 | 15.2 | 155 | 4.6 | 3.8 | 1.2:1.0 | ○ | 10 |
| Comparative Example 12 | 7.8 | 4.5 | 45 | 20.1 | 16.5 | 1.2:1.0 | × | 5 |

The semipermeable membrane supporting materials of Examples 22 to 28 accomplished the level of being practically usable with regard to the thickness uniformity of semipermeable membrane and the peel strength of supporting material-semipermeable membrane. Further, in Examples 22 to 27 in which the semipermeable membrane application surface had an Rz of 150 $\mu$m or less, the thickness uniformity of semipermeable membrane and the peel strength of supporting material-semipermeable membrane were more excellent. In the semipermeable membrane supporting materials of Comparative Examples 10 to 12 in which only one main synthetic fiber was contained and the semipermeable membrane application side surface had an Ra of less than 5.0 $\mu$m or over 15.0 $\mu$m, the thickness uniformity of semipermeable membrane was outside the allowed range, or the adhesion of semipermeable membrane was at the lowest-limit level of practical use or at the level of being unusable.

Example 29

A main synthetic fiber (fine fiber, drawn polyester fiber, fiber diameter 7.9 $\mu$m, fiber length 5 mm), a main synthetic fiber (thick fiber, drawn polyester fiber, fiber diameter 12.1 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 50:20:30, and a wet sheet was made therefrom with a cylinder machine. Then, the wet sheet was dried under heat and pressure with a Yankee dryer having a surface temperature of 130˚C to give a sheet having a basis weight of 80 g/m$^2$ and a main synthetic fiber average fiber diameter of 9.1 $\mu$m.

The thus-obtained sheet was processed with a calender apparatus formed of a combination of a heating metal roll and a heating metal roll under the conditions of a temperature of 200˚C, a pressure of 785 N/cm and a processing speed of 20 m/minute in a manner that one surface was more heated like it embraced one heating metal roll after nipped, to give a semipermeable membrane supporting material having a semipermeable membrane application surface having an absorption coefficient, measured with a Bristow tester, of 25 ml/m$^2$•msec$^{1/2}$. The sheet was processed in a manner that the surface that came in no contact with the Yankee dryer came in contact with the metal roll like it embraced the metal roll, and the surface that came in contact with the metal roll like the sheet embraced it was used as a semipermeable membrane application surface.

Example 30

A semipermeable membrane supporting material having a main synthetic fiber average fiber diameter of 6.2 $\mu$m was obtained in the same manner as in Example 29 except that a main synthetic fiber (fine fiber, drawn polyester fiber, fiber diameter 5.3 $\mu$m, fiber length 5 mm), a main synthetic fiber (thick fiber, drawn polyester fiber, fiber diameter 7.9 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 45:25:30, that the processing was carried out with a calender apparatus formed of a combination of a heating metal roll and a heating metal roll under the conditions of a temperature of 200˚C, a pressure of 820 N/cm and a processing speed of 10 m/minute and that the absorption coefficient of the semipermeable membrane application surface was adjusted to 7 ml/m$^2$•msec$^{1/2}$.

Example 31

A semipermeable membrane supporting material having a main synthetic fiber average fiber diameter of 14.7 $\mu$m was obtained in the same manner as in Example 29 except that a main synthetic fiber (fine fiber, drawn polyester fiber, fiber diameter 7.9 $\mu$m, fiber length 5 mm), a main synthetic fiber (thick fiber, drawn polyester fiber, fiber diameter 12.1 $\mu$m, fiber length 5 mm), a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 15:10:45:30 and that the absorption coefficient of the semipermeable membrane application surface was adjusted to 75 ml/m$^2$•msec$^{1/2}$.

Example 32

A semipermeable membrane supporting material having a main synthetic fiber average fiber diameter of 16.0 $\mu$m was obtained in the same manner as in Example 29 except that a main synthetic fiber (fine fiber, drawn polyester fiber, fiber diameter 12.1 $\mu$m, fiber length 5 mm), a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 20:50:30, that the processing was carried out with a calender apparatus formed of a combination of a heating metal roll and a heating metal roll under the conditions of a pressure of 820 N/cm and a processing speed of 10 m/minute and that the absorption coefficient of the semipermeable membrane application surface was adjusted to 70 ml/m$^2$•msec$^{1/2}$.

Comparative Example 13

A semipermeable membrane supporting material having a main synthetic fiber average fiber diameter of 24.7 $\mu$m was obtained in the same manner as in Example 29 except that a main synthetic fiber (drawn polyester fiber, fiber diameter 24.7 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 70:30 and that the absorption coefficient of the semipermeable membrane application surface was adjusted to 111 ml/m$^2$•msec$^{1/2}$.

Comparative Example 14

A semipermeable membrane supporting material having a main synthetic fiber average fiber diameter of 5.3 $\mu$m was obtained in the same manner as in Example 29 except that a main synthetic fiber (drawn polyester fiber, fiber diameter 5.3 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 50:50 and that the absorption coefficient of the semipermeable membrane application surface was adjusted to 4 ml/m$^2$•msec$^{1/2}$.
The semipermeable membrane supporting materials obtained in Examples 29 to 32 and Comparative Examples 13 and 14 were subjected to evaluations in the tests 2, 4, 6 and 7, and Table 8 shows the results.
[Table 8]

Table 8

| | Average fiber diameter [$\mu$ m] of main synthetic fiber | Absorption coefficient [ml/m$^2$. msec$^{1/2}$] | Test2 | | | Test4 | Test6 | Test7 |
|---|---|---|---|---|---|---|---|---|
| | | | Smoothness [sec.] | | Smoothness ratio | Infiltration of semipermeable membrane | Adhesion of non-application surface | Thickness uniformity of semipermeable membrane [$\mu$ m] |
| | | | Semipermeable membrane application surface | Non-application surface | Semipermeable membrane application surface:Non-application surface | | | |
| Example 29 | 9.1 | 25 | 18.2 | 11 | 1.7:1.0 | ◎ | ◎ | 5 |
| Example 30 | 6.2 | 7 | 21.8 | 13..5 | 1.6:1.0 | ◎ | ○ | 4 |
| Example 31 | 14.7 | 75 | 12.3 | 6 | 2.1:1.0 | ○ | ◎ | 6 |
| Example 32 | 16.0 | 70 | 10.7 | 5.3 | 2.0:1.0 | ○ | ◎ | 6 |
| Comparative Example 13 | 24.7 | 111 | 7.6 | 3.9 | 1.9:1.0 | × | × | 16 |
| Comparative Example 14 | 5.3 | 4 | 23.8 | 16.2 | 1.5:1.0 | ◎ | × | 3 |

The semipermeable membrane supporting materials of Examples 29 to 32 accomplished the level of being practically usable in the evaluations of the infiltration of semipermeable membrane, the adhesion of non-application surface and the thickness uniformity of semipermeable membrane. In contrast, the semipermeable membrane supporting materials of Comparative Examples 13 and 14 which contained only one main synthetic fiber and had an absorption coefficient of less than 5 ml/m$^2$•msec$^{1/2}$ or over 100 m ml/m$^2$•msec$^{1/2}$ failed to satisfy the infiltration of semipermeable membrane, the adhesion of non-application surface and the thickness uniformity of semipermeable membrane at the same time.

Example 33

A main synthetic fiber (fine fiber, drawn polyester fiber, fiber diameter 7.9 μm, fiber length 5 mm), a main synthetic fiber (thick fiber, drawn polyester fiber, fiber diameter 12.1 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 40:30:30, and a wet sheet was made therefrom with a cylinder machine. Then, the wet sheet was dried under heat and pressure with a Yankee dryer having a surface temperature of 130˚C to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute in a manner that one surface was more heated like it embraced one heating metal roll after nipped, to give a semipermeable membrane supporting material having a main synthetic fiber average fiber diameter of 9.7 μm and having an application side surface having a dynamic liquid transition amount of 19 ml/m$^2$ for a contact time period of 0.2 second when measured with a Bristow tester. The sheet was processed in a manner that the surface that came in contact with a Yankee dryer came in contact with the metal roll like it embraced the metal roll, and the surface that came in contact with the metal roll like the sheet embraced it was used as a semipermeable membrane application surface.

Example 34

A semipermeable membrane supporting material having a main synthetic fiber average fiber diameter of 15.8 μm was obtained in the same manner as in Example 33 except that a main synthetic fiber (fine fiber, drawn polyester fiber, fiber diameter 7.9 μm, fiber length 5 mm), a main synthetic fiber (thick fiber, drawn polyester fiber, fiber diameter 17.5 μm, fiber length 5 mm), a main synthetic fiber (thick fiber, drawn polyester fiber, fiber diameter 24.7 μm, fiber length 5 mm) and a binder synthetic fiber (non-drawn polyester fiber, fiber diameter 10.5 μm, fiber length 5 mm, melting point 230˚C) were used in an amount ratio of 20:40:10:30, and that the dynamic liquid transition amount of the semipermeable membrane application surface for a contact time period of 0.2 second when measured with a Bristow tester was adjusted to 22 ml/m$^2$.

Example 35

A semipermeable membrane supporting material having a main synthetic fiber average fiber diameter of 5.8 μm was obtained in the same manner as in Example 33 except that a main synthetic fiber (fine fiber, drawn polyester fiber, fiber diameter 5.3 μm, fiber length 5 mm), a main synthetic fiber (thick fiber, drawn polyester fiber, fiber diameter 7.9 μm, fiber length 5 mm) and a binder synthetic fiber (non-drawn polyester fiber, fiber diameter 10.5 μm, fiber length 5 mm, melting point 230˚C) were used in an amount ratio of 55:15:30, and that the dynamic liquid transition amount of the semipermeable membrane application surface for a contact time period of 0.2 second when measured with a Bristow tester was adjusted to 16 ml/m$^2$.

Example 36

A semipermeable membrane supporting material having a main synthetic fiber average fiber diameter of 15.8 μm was obtained in the same manner as in Example 33 except that a main synthetic fiber (fine fiber, drawn polyester fiber, fiber diameter 7.9 μm, fiber length 5 mm), a main synthetic fiber (thick fiber, drawn polyester fiber, fiber diameter 17.5 μm, fiber length 5 mm), a main synthetic fiber (thick fiber, drawn polyester fiber, fiber diameter 24.7 μm, fiber length 5 mm) and a binder synthetic fiber (non-drawn polyester fiber, fiber diameter 10.5 μm, fiber length 5 mm, melting point 230˚C) were used in an amount ratio of 20:40:10:30, that the processing conditions were changed to a temperature of 200˚C, a pressure of 700 N/cm and a speed of 20 m/minute and that the dynamic liquid transition amount of the semipermeable membrane application surface for a contact time period of 0.2 second when measured with a Bristow tester was adjusted to 30 ml/m$^2$.

Example 37

A semipermeable membrane supporting material having a main synthetic fiber average fiber diameter of 9.7 $\mu$m was obtained in the same manner as in Example 33 except that a main synthetic fiber (fine fiber, drawn polyester fiber, fiber diameter 7.9 $\mu$m, fiber length 5 mm), a main synthetic fiber (thick fiber, drawn polyester fiber, fiber diameter 12.1 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 40:30:30, that the processing conditions were changed to a temperature of 200˚C, a pressure of 900 N/cm and a speed of 20 m/minute and that the dynamic liquid transition amount of the semipermeable membrane application surface for a contact time period of 0.2 second when measured with a Bristow tester was adjusted to 6 ml/m$^2$.

Comparative Example 15

A semipermeable membrane supporting material having a main synthetic fiber average fiber diameter of 17.5 $\mu$m was obtained in the same manner as in Example 33 except that a main synthetic fiber (drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 70:30 and that the dynamic liquid transition amount of the semipermeable membrane application surface for a contact time period of 0.2 second when measured with a Bristow tester was adjusted to 32 ml/m$^2$.

Comparative Example 16

A semipermeable membrane supporting material having a main synthetic fiber average fiber diameter of 5.3 $\mu$m was obtained in the same manner as in Example 33 except that a main synthetic fiber (drawn polyester fiber, fiber diameter 5.3 $\mu$m, fiber length 5 mm) and a binder synthetic fiber (non-drawn polyester fiber, fiber diameter 10.5 $\mu$m, fiber length 5 mm, melting point 230˚C) were used in an amount ratio of 50:50 and that the dynamic liquid transition amount of the semipermeable membrane application surface for a contact time period of 0.2 second when measured with a Bristow tester was adjusted to 4 ml/m$^2$.

The semipermeable membrane supporting materials obtained in Examples 33 to 37 and Comparative Examples 15 and 16 were subjected to evaluations in the tests 2, 4, 5 and 7, and Table 9 shows the results.

[Table 9]

Table 9

| | | Example 33 | Example 34 | Example 35 | Example 36 | Example 37 | Comparative Example 15 | Comparative Example 16 |
|---|---|---|---|---|---|---|---|---|
| Average fiber diameter [μm] of main synthetic fiber | | 9.7 | 15.8 | 5.8 | 15.8 | 9.7 | 17.5 | 5.3 |
| Dynamic liquid transition amount [ml/m²] for a contact time period of 0.2 second | | 19 | 22 | 16 | 30 | 6 | 32 | 4 |
| Test2 | Smoothness [sec.] — Semipermeable membrane application surface | 14.0 | 9.0 | 24.0 | 7.0 | 31.0 | 5 | 33.0 |
| | Smoothness [sec.] — Non-application surface | 10.0 | 7.0 | 18.0 | 6.0 | 20.0 | 4 | 25.0 |
| | Smoothness ratio — Semipermeable membrane application surface: Non-application surface | 1.4:1.0 | 1.3:1.0 | 1.3:1.0 | 1.2:1.0 | 1.6:1.0 | 1.3:1.0 | 1.3:1.0 |
| Test4 | Infiltration of semipermeable membrane solution | ◎ | ○ | ◎ | △ | ◎ | × | ◎ |
| Test5 | Adhesion of semipermeable membrane | ◎ | ◎ | ○ | ◎ | △ | ◎ | × |
| Test7 | Thickness uniformity of semipermeable membrane [μm] | 5 | 6 | 4 | 7 | 4 | 10 | 4 |

The semipermeable membrane supporting materials of Examples 33 to 37 permitted the formation of semipermeable membranes having a uniform thickness and were free from the striking through of semipermeable membrane, and they accomplished the level of being practically usable in the evaluation of the adhesion between semipermeable membrane and semipermeable membrane supporting material. In contrast, in the semipermeable membrane supporting material of Comparative Example 15 in which only one main synthetic fiber was contained and the dynamic liquid transition amount exceeded 30 ml/m$^2$, no semipermeable membrane having a uniform thickness could be formed. In the semipermeable membrane supporting material of Comparative Example 16 in which only one main synthetic fiber was contained and the dynamic liquid transition amount was less than 5 ml/m$^2$, no good adhesion between the semipermeable membrane and the semipermeable membrane supporting material was attained.

Table 10 shows the arithmetic average roughness (Ra), ten-point average roughness (Rz), absorption coefficient measured with a Bristow tester and dynamic liquid transition amount for a contact time period of 0.2 second when measured with a Bristow tester with regard to each of the semipermeable membrane application side surfaces of the semipermeable membrane supporting materials obtained in Examples 1 to 21 and Comparative Examples 1 to 9.

The semipermeable membrane supporting materials of Examples 1 to 15 and 17 to 21 and Comparative Examples 5, 8 and 9 had an Ra of 5.0 to 15.0 $\mu$m, an Rz of 150 $\mu$m or less, an absorption coefficient of 5 to 100 ml/m$^2$•msec$^{1/2}$ and a dynamic liquid transition amount of 5 to 30 ml/m$^2$, and they were excellent in semipermeable membrane uniformity. The semipermeable membrane supporting materials of Example 16 and Comparative Example 6 had an Ra of over 15.0 $\mu$m, an absorption coefficient of over 100 ml/m$^2$•msec$^{1/2}$ and a dynamic liquid transition amount of over 30 ml/m$^2$, and hence they had low semipermeable membrane thickness uniformity. The semipermeable membrane supporting material of Comparative Example 1 had an Ra of over 15.0 $\mu$m and a dynamic liquid transition amount of over 30 ml/m$^2$, and hence it had low semipermeable membrane thickness uniformity. The semipermeable membrane supporting materials of Comparative Examples 2 and 7 had an absorption coefficient of over 100 ml/m$^2$•msec$^{1/2}$ and also had a dynamic liquid transition amount of over 30 ml/m$^2$, and hence they had low semipermeable membrane thickness uniformity. The semipermeable membrane supporting material of Comparative Example 3 had an Ra of over 15.0 $\mu$m and an absorption coefficient of over 100 ml/m$^2$•msec$^{1/2}$ and also had a dynamic liquid transition amount of over 30 ml/m$^2$, and hence it had low semipermeable membrane thickness uniformity. The semipermeable membrane supporting material of Comparative Example 4 had an Ra of less than 5.0 $\mu$m, so that it had low adhesion to a semipermeable membrane as shown in Table 5.

[Table 10]

Table 10

| | | Ra [$\mu$m] | Rz [$\mu$m] | Absorption coefficient [ml/m$^2$·msec$^{1/2}$] | Dynamic liquid transition amount for a contact time period of 0.2 sec. [ml/m$^2$] | Test7 |
| --- | --- | --- | --- | --- | --- | --- |
| | | | | | | Thickness uniformity of semipermeable membrane [$\mu$m] |
| | Example1 | 10.0 | 99 | 72 | 29 | 8 |
| | Example2 | 8.1 | 89 | 60 | 27 | 7 |
| | Example3 | 7.5 | 80 | 45 | 23 | 6 |
| | Example4 | 7.8 | 83 | 50 | 25 | 7 |
| | Example5 | 6.5 | 65 | 25 | 21 | 6 |
| | Example6 | 7.5 | 78 | 46 | 22 | 7 |
| | Example7 | 8.0 | 96 | 57 | 26 | 7 |
| | Example8 | 9.8 | 89 | 73 | 27 | 7 |
| | Example9 | 5.9 | 76 | 69 | 21 | 6 |
| | Example10 | 5.8 | 70 | 65 | 23 | 6 |
| | Example11 | 7.8 | 83 | 70 | 25 | 6 |
| | Example12 | 8.1 | 94 | 57 | 20 | 6 |
| | Example13 | 8.0 | 93 | 58 | 21 | 7 |
| | Example14 | 5.1 | 38 | 49 | 20 | 3 |

(continued)

| | Ra [μ m] | Rz [μ m] | Absorption coefficient [ml/m²·msec$^{1/2}$] | Dynamic liquid transition amount for a contact time period of 0.2 sec. [ml/m²] | Test7 |
|---|---|---|---|---|---|
| | | | | | Thickness uniformity of semipermeable membrane [μ m] |
| Example15 | 8.0 | 92 | 57 | 20 | 6 |
| Example16 | 16.2 | 102 | 114 | 32 | 15 |
| Example17 | 5.3 | 55 | 17 | 18 | 5 |
| Example18 | 11.2 | 97 | 87 | 30 | 8 |
| Example 19 | 8.1 | 87 | 25 | 17 | 8 |
| Example20 | 6.8 | 70 | 68 | 21 | 6 |
| Example21 | 7.5 | 82 | 25 | 17 | 6 |
| Comparative Example1 | 15.3 | 110 | 98 | 33 | 16 |
| Comparative Example2 | 10.8 | 112 | 101 | 31 | 9 |
| Comparative Example3 | 15.1 | 80 | 112 | 32 | 10 |
| Comparative Example4 | 4.7 | 35 | 40 | 12 | 3 |
| Comparative Example5 | 8.3 | 91 | 58 | 27 | 7 |
| Comparative Example6 | 15.2 | 80 | 101 | 31 | 12 |
| Comparative Example7 | 9.3 | 102 | 107 | 34 | 10 |
| Comparative Example8 | 8.2 | 91 | 40 | 29 | 9 |
| Comparative Example9 | 7.5 | 80 | 70 | 24 | 6 |

A para-aramid fiber (fineness 2.5 dtex, fiber length 3 mm) was dispersed in water such that the dispersion had an initial concentration of 5 %, the fiber was refined 15 times with a double disc refiner while decreasing a clearance each time, and then it was repeatedly treated 35 times with a high-pressure homogenizer under the condition of 50 MPa to produce a liquid crystalline polymer pulp having a mass average fiber length of 0.24 mm.

Example 38

For a semipermeable membrane application surface layer, the liquid crystalline polymer pulp, a main synthetic fiber (fine fiber, drawn polyester fiber, fiber diameter 12.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 0.5:79.5:20.0, and the dispersion was stored in a stock tank having a stirrer. For a non-application surface layer, then, a main synthetic fiber (thick fiber, drawn polyester fiber, fiber diameter 17.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m² of a semipermeable membrane application surface layer

and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 39

For a semipermeable membrane application surface layer, the liquid crystalline polymer pulp, a main synthetic fiber (fine fiber, drawn polyester fiber, fiber diameter 12.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 10.0:70.0:20.0, and the dispersion was stored in a stock tank having a stirrer. For a non-application surface layer, then, a main synthetic fiber (thick fiber, drawn polyester fiber, fiber diameter 17.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 40

For a semipermeable membrane application surface layer, the liquid crystalline polymer pulp, a main synthetic fiber (fine fiber, drawn polyester fiber, fiber diameter 12.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 20.0:60.0:20.0, and the dispersion was stored in a stock tank having a stirrer. For a non-application surface layer, then, a main synthetic fiber (thick fiber, drawn polyester fiber, fiber diameter 17.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 15 g/m$^2$ of a semipermeable membrane application surface layer and 65 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 41

For a semipermeable membrane application surface layer, the liquid crystalline polymer pulp, a main synthetic fiber (fine fiber, drawn polyester fiber, fiber diameter 12.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 0.3:79.7:20, and the dispersion was stored in a stock tank having a stirrer. For a non-application surface layer, then, a main synthetic fiber (thick fiber, drawn polyester fiber, fiber diameter 17.5 μm, fiber length 5 mm) and a binder synthetic fiber (non-drawn polyester fiber, fiber diameter 10.5 μm, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 42

For a semipermeable membrane application surface layer, the liquid crystalline polymer pulp, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 22.5:57.5:20, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 15 g/m$^2$ of a semipermeable membrane application surface layer and 65 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 43

The liquid crystalline polymer pulp, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 10.0:70.0:20.0, and a single-layered wet sheet having a weight of 80 g/m$^2$ as a dry mass was made therefrom with an inclined-wire machine. Then, the wet sheet was dried under heat and pressure to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The surface that came in contact with a Yankee dryer was used as a semipermeable membrane application surface.

Example 44

For a semipermeable membrane application surface layer, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 80.0:20.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Comparative Example 17

As a semipermeable membrane application surface, a main synthetic fiber (drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 80.0:20.0, and a wet sheet having a weight of 80 g/m$^2$ as a dry mass was made therefrom with a cylinder machine. Then, the wet sheet was dried under heat and pressure in a manner that the semipermeable membrane application surface came in contact with a Yankee dryer having a surface temperature of 130˚C, to give a sheet having a basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

The semipermeable membrane supporting materials obtained in Examples 38 to 44 and Comparative Example 17 were subjected to evaluations in the tests 1, 2, 4, 5, 6 and 8, and Table 11 shows the results.

[Table 11]

Table 11

| | | | Example 38 | Example 39 | Example 40 | Example 41 | Example 42 | Example 43 | Example 44 | Comparative Example 17 |
|---|---|---|---|---|---|---|---|---|---|---|
| Test1 | Thickness [μm] | | 98 | 96 | 95 | 99 | 95 | 95 | 101 | 104 |
| Test2 | Smoothness [sec.] | Semipermeable membrane application surface | 14.0 | 21.0 | 26.0 | 12.0 | 27.0 | 22.0 | 9.0 | 7.0 |
| | | Non-application surface | 7.0 | 8.0 | 8.0 | 7.0 | 8.0 | 17.0 | 6.0 | 6.0 |
| | Smoothness ratio | Semipermeable membrane application surface: Non-application surface | 2.0:1.0 | 2.6:1.0 | 3.3:1.0 | 1.7:1.0 | 3.4:1.0 | 1.3:1.0 | 1.5:1.0 | 1.2:1.0 |
| Test4 | Infiltration of semipermeable membrane | | ○ | ◎ | ◎ | ○ | ◎ | ◎ | △ | × |
| Test5 | Adhesion of semipermeable membrane | | ○ | ○ | ○ | ○ | △ | ○ | ○ | ○ |
| Test6 | Adhesion of non-application surface | | ○ | ○ | ○ | ○ | ○ | △ | ○ | ○ |
| Test8 | Thermal shrinkage | | ○ | ○ | ○ | △ | ○ | ○ | △ | △ |

The semipermeable membrane supporting materials of Examples 38 to 44 were excellent in adhesion between non-application surfaces since their non-application surface layers contained a main synthetic fiber and a binder synthetic fiber. The semipermeable membrane supporting material of Comparative Example 17 was poor in the evaluation of infiltration of semipermeable membrane since it contained only one main synthetic fiber and contained no liquid crystalline polymer pulp. As compared with the semipermeable membrane supporting material of Example 44, the semipermeable membrane supporting materials of Examples 38 to 43 contained the liquid crystalline polymer pulp in their semipermeable membrane application surface layers and hence had high smoothness of semipermeable membrane application surface and gave excellent results in the evaluation of infiltration of semipermeable membrane. In Examples 38 to 40 and 43 in which the content of the liquid crystalline polymer pulp in the semipermeable membrane application surface was 0.5 to 20.0 mass %, there were obtained excellent results both in the adhesion between semipermeable membrane and semipermeable membrane supporting material and the thermal shrinkage.

A splittable acrylic fiber (fineness 1.2 dtex, fiber length 6 mm, acryl/cellulose acetate composite fiber, supplied by Mitsubishi Rayon Co., Ltd.) was repeatedly treated 30 times with a single disc refiner, to prepare a fibrillated acrylic fiber having branches having an average fiber diameter of 1 $\mu$m or less generated from a stem having an average fiber diameter of 6 $\mu$m.

Example 45

For a semipermeable membrane application surface layer, the fibrillated acrylic fiber, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 0.5:79.5:20.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 46

For a semipermeable membrane application surface layer, the fibrillated acrylic fiber, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 10.0:70.0:20.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 47

For a semipermeable membrane application surface layer, the fibrillated acrylic fiber, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 20.0:60.0:20.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 15 g/m$^2$ of a semipermeable membrane application surface layer and 65 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 48

For a semipermeable membrane application surface layer, the fibrillated acrylic fiber, a main synthetic fiber (drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 0.3:79.7:20.0, and the dispersion was stored in a stock tank having a stirrer. For a non-application surface layer, then, a main synthetic fiber (drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 49

For a semipermeable membrane application surface layer, the fibrillated acrylic fiber, a main synthetic fiber (drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 22.0:58.0:20.0, and the dispersion was stored in a stock tank having a stirrer. For a non-application surface layer, then, a main synthetic fiber (drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 15 g/m$^2$ of a semipermeable membrane application surface layer and 65 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.
The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 50

For a semipermeable membrane application surface layer, a main synthetic fiber (fine fiber, acrylic fiber, fiber diameter 10.9 $\mu$m, fineness 1.1 dtex, fiber length 5 mm), a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230°C) were mixed and dispersed in water in an amount ratio of 10.0:70.0:20.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230°C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130°C, to give a sheet having a combined basis weight of 80 g/m$^2$.

The thus-obtained sheet was processed with a calender apparatus formed of a combination of a heating metal roll and a heating metal roll under the conditions of a temperature of 200°C, a pressure of 785 N/cm and a processing speed of 20 m/minute, to give a semipermeable membrane supporting material.

The semipermeable membrane supporting materials obtained in Examples 45 to 50 were subjected to evaluations in the tests 1, 2, 4, 5, 6 and 9, and Table 12 shows the results.

[Table 12]

Table 12

| | | | Example 45 | Example 46 | Example 47 | Example 48 | Example 49 | Example 50 |
|---|---|---|---|---|---|---|---|---|
| Test1 | Thickness [$\mu$ m] | | 96 | 94 | 93 | 97 | 93 | 100 |
| Test2 | Smoothness [sec.] | Semipermeable membrane application surface | 15.0 | 24.0 | 30.0 | 14.3 | 32.5 | 9.5 |
| | | Non-application surface | 7.0 | 8.0 | 8.0 | 7.0 | 8.0 | 6.3 |
| | Smoothness ratio | Semipermeable membrane application surface: Non-application surface | 2.1:1.0 | 3.0:1.0 | 3.8:1.0 | 2.0:1.0 | 4.1:1.0 | 1.5:1.0 |
| Test4 | Infiltration of semipermeable membrane | | ○ | ◎ | ◎ | ○ | ◎ | Δ |
| Test5 | Adhesion of semipermeable membrane | | ○ | ○ | ○ | ○ | Δ | ○ |
| Test6 | Adhesion of non-application surface | | ○ | ○ | ○ | ○ | ○ | ○ |
| Test9 | Fluffing | | 15 | 5 | 2 | 16 | 1 | 23 |

The semipermeable membrane supporting materials of Examples 45 to 50 were excellent in adhesion of non-application surfaces since their non-application surfaces contained the main synthetic fiber and the binder synthetic fiber. As compared with the semipermeable membrane supporting material of Example 50, the semipermeable membrane supporting materials of Examples 45 to 49 contained the fibrillated acrylic fiber in the semipermeable membrane application surfaces, so that the semipermeable membrane application surfaces were excellent in smoothness and that the striking-through of the semipermeable membranes was inhibited. Further, it was found that there was produced a high effect on the inhibition of fluffing of the semipermeable membrane application surface. In particular, in the semipermeable membrane supporting materials of Examples 45 to 47 in which the semipermeable membrane application surfaces had a fibrillated acrylic fiber content of 0.5 to 20.0 mass %, the fluffing of the semipermeable membrane application surfaces was inhibited, and the adhesion between semipermeable membrane and semipermeable membrane supporting material was also excellent.

Non-fibrillated lyocell monofilaments (1.7 dtex x 4 mm, supplied by Courtaulds PLC) were treated with a double disc refiner (DDR) to prepare a fiber mixture containing (A) a fibrillated lyocell fiber having an avarage fiber diameter of 1 $\mu$m or less and (B) a fibrillated lyocell fiber having branches having an average fiber diameter of 1 $\mu$m or less generated from a stem having an average fiber diameter of 4 $\mu$m.

Example 51

For a semipermeable membrane application surface layer, the fiber mixture of fibrillated lyocell fibers, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 0.5:69.5:30.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m² of a semipermeable membrane application surface layer and 60 g/m² of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m².

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 52

For a semipermeable membrane application surface layer, the fiber mixture of fibrillated lyocell fibers, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 10.0:60.0:30.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m² of a semipermeable membrane application surface layer and 60 g/m² of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m².

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 53

For a semipermeable membrane application surface layer, the above fiber mixture of fibrillated lyocell fibers, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 20.0:50.0:30.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 15 g/m$^2$ of a semipermeable membrane application surface layer and 65 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 54

For a semipermeable membrane application surface layer, the fiber mixture of fibrillated lyocell fibers, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 0.3:69.7:30.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 55

For a semipermeable membrane application surface layer, the above fiber mixture of fibrillated lyocell fibers, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 22.5:47.5:30.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 15 g/m$^2$ of a semipermeable membrane application surface layer and 65 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

Example 56

For a semipermeable membrane application surface layer, a main synthetic fiber (fine fiber, drawn polyester fiber, fiber diameter 12.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer. For a non-application surface layer, then, a main synthetic fiber (thick fiber, drawn polyester fiber, fiber diameter 17.5 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70.0:30.0, and the dispersion was stored in a stock tank having a stirrer separately from the dispersion for the semipermeable membrane application surface layer. With a combination machine of an inclined-wire machine and a cylinder machine, a semipermeable membrane application surface layer was made with the inclined-wire machine and a non-application surface layer was made with the cylinder machine to form a combined wet sheet having, as a dry mass, 20 g/m$^2$ of a semipermeable membrane application surface layer and 60 g/m$^2$ of a non-application surface layer, and then the wet sheet was dried under heat and pressure in a manner that the semipermeable membrane application surface layer came in contact with a Yankee dryer having a surface temperature of 130˚C, to give a sheet having a combined basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material.

The semipermeable membrane supporting materials obtained in Examples 51 to 56 were subjected to evaluations in the tests 1, 2, 4, 5 and 6, and Table 13 shows the results.

[Table 13]

Table 13

| | | | Example 51 | Example 52 | Example 53 | Example 54 | Example 55 | Example 56 |
|---|---|---|---|---|---|---|---|---|
| Test1 | Thickness [$\mu$ m] | | 97 | 95 | 94 | 98 | 93 | 100 |
| Test2 | Smoothness [sec.] | Semipermeable membrane application surface | 15.0 | 24.0 | 30.0 | 14.2 | 33.6 | 9.0 |
| | | Non-application surface | 7.0 | 8.0 | 8.0 | 6.7 | 8.8 | 6.0 |
| | Smoothness ratio | Semipermeable membrane application surface: Non-application | 2.1:1.0 | 3.0:1.0 | 3.8:1.0 | 2.1:1.0 | 4.1:1.0 | 1.5:1.0 |
| Test4 | Infiltration of semipermeable membrane | | ○ | ◎ | ◎ | Δ ~ ○ | ◎ | Δ |
| Test5 | Adhesion of semipermeable membrane | | ○ | ○ | ○ | ○ | Δ | ○ |
| Test6 | Adhesion of non-application surface | | ○ | ○ | ○ | ○ | ○ | ○ |

The semipermeable membrane supporting materials of Examples 51 to 56 were excellent in the adhesion of non-application surfaces since their non-application surface layers contained the main synthetic fiber and the binder synthetic fiber. As compared with the semipermeable membrane supporting material of Example 56, the semipermeable membrane supporting materials of Examples 51 to 56 were excellent in the smoothness of semipermeable membrane application surface since their semipermeable membrane application surface layers contained the fibrillated lyocell fibers. Further, the infiltration of the semipermeable membrane was inhibited. In the semipermeable membrane supporting material of Example 54, a polysulfone resin bled out on a very small part of the non-application surface, while the semipermeable membrane supporting material of Example 54 was good as compared with that of the Example 56. In particular, in the semipermeable membrane supporting materials of Examples 51 to 53 in which the semipermeable membrane application surface layer had a fibrillated lyocell fiber content of 0.5 to 20.0 mass %, not only the infiltration of semipermeable membrane was inhibited, and the adhesion of semipermeable membrane was excellent.

Example 57

A main synthetic fiber (drawn polyester fiber, elongation percentage 48 %, tensile strength 0.41 N/tex, fiber diameter 18.2 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m$^2$. The thus-obtained sheet was processed with a calender apparatus formed of a combination of a heating metal roll and a heating metal roll under the conditions of a temperature of 200˚C, a pressure of 980 N/cm and a processing speed of 25 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 58

A main synthetic fiber (drawn polyester fiber, elongation percentage 23 %, tensile strength 0.75 N/tex, fiber diameter 18.2 $\mu$m, fiber length 5 mm) and a binder synthetic fiber (non-drawn polyester fiber, fiber diameter 6.8 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m$^2$. The thus-obtained sheet was processed with a calender apparatus formed of a combination of a heating metal roll and a heating metal roll under the conditions of a temperature of 200˚C, a pressure of 780 N/cm and a processing speed of 20 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 59

A main synthetic fiber (drawn polyester fiber, elongation percentage 80 %, tensile strength 0.51 N/tex, fiber diameter 18.2 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m$^2$. The thus-obtained sheet was processed with a calender apparatus formed of a combination of a heating metal roll and a heating metal roll under the conditions of a temperature of 200˚C, a pressure of 780 N/cm and a processing speed of 20 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 60

A main synthetic fiber (drawn polyester fiber, elongation percentage 60 %, tensile strength 0.36 N/tex, fiber diameter 18.2 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m$^2$. The thus-obtained sheet was processed with a calender apparatus formed of a combination of a heating metal roll and a heating metal roll under the conditions of a temperature of 200˚C, a pressure of 980 N/cm and a processing speed of 25 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 61

A main synthetic fiber (drawn polyester fiber, elongation percentage 120 %, tensile strength 0.31 N/tex, fiber diameter 18.2 $\mu$m, fiber length 5 mm) and a binder synthetic fiber (non-drawn polyester fiber, fiber diameter 6.8 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m². The thus-obtained sheet was processed with a calender apparatus formed of a combination of a heating metal roll and a heating metal roll under the conditions of a temperature of 200˚C, a pressure of 780 N/cm and a processing speed of 20 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 62

A main synthetic fiber (drawn polyester fiber, elongation percentage 140 %, tensile strength 0.26 N/tex, fiber diameter 18.2 $\mu$m, fiber length 5 mm) and a binder synthetic fiber (non-drawn polyester fiber, fiber diameter 6.8 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m². The thus-obtained sheet was processed with a calender apparatus formed of a combination of a heating metal roll and a heating metal roll under the conditions of a temperature of 200˚C, a pressure of 780 N/cm and a processing speed of 20 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 63

A main synthetic fiber (drawn polyester fiber, elongation percentage 30 %, tensile strength 0.44 N/tex, fiber diameter 18.2 $\mu$m, fiber length 5 mm) and a binder synthetic fiber (non-drawn polyester fiber, fiber diameter 6.8 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m². The thus-obtained sheet was processed with a calender apparatus formed of a combination of a heating metal roll and a heating metal roll under the conditions of a temperature of 200˚C, a pressure of 785 N/cm and a processing speed of 20 m/minute in a manner that one surface of the sheet was more heated like the sheet embraced one heating metal roll after nipped in the calender apparatus, and the sheet was taken up in the form of a roll in a manner that it further embraced nipping-free two 120˚C heating metal rolls in the form of an S letter, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 64

A main synthetic fiber (thick fiber, drawn polyester fiber, elongation percentage 48 %, tensile strength 0.41 N/tex, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, elongation percentage 50 %, tensile strength 0.51 N/tex, fiber diameter 11.6 $\mu$m, fiber length 5 mm, aspect ratio 432) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to give a sheet having a basis weight of 80 g/m².
The thus-obtained sheet was processed with a calender apparatus formed of a combination of a heating metal roll and a heating metal roll under the conditions of a temperature of 200˚C, a pressure of 785 N/cm and a processing speed of 20 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Example 65

A two-layer-structured sheet was produced with a combination machine of an inclined-wire machine and a cylinder machine. A main synthetic fiber (thick fiber, drawn polyester fiber, elongation percentage 48 %, tensile strength 0.41 N/tex, fiber diameter 17.5 $\mu$m, fiber length 5 mm, aspect ratio 286), a binder synthetic fiber (non-drawn polyester fiber, fiber diameter 10.5 $\mu$m, fiber length 5 mm, melting point 230˚C) and a main synthetic fiber (fine fiber, drawn polyester fiber, elongation percentage 50 %, tensile strength 0.51 N/tex, fiber diameter 11.6 $\mu$m, fiber length 5 mm, aspect ratio 432) were mixed and dispersed in water in an amount ratio of 30:30:40, and a wet sheet for Z surface layer was made therefrom with the inclined-wire machine. A main synthetic fiber (thick fiber, drawn polyester fiber, elongation percentage 50 %, tensile strength 0.51 N/tex, fiber diameter 11.6 $\mu$m, fiber length 5 mm, aspect ratio 432), a binder synthetic fiber (non-drawn polyester fiber, fiber diameter 10.5 $\mu$m, fiber length 5 mm, melting point 230˚C) and a main synthetic fiber (fine fiber, drawn polyester fiber, elongation percentage 45 %, tensile strength 0.41 N/tex, fiber diameter 8.6 $\mu$m, fiber length 5 mm, aspect ratio 583) were mixed and dispersed in water in an amount ratio of 40:30:30, and a wet sheet for Y surface layer was made therefrom with the cylinder machine. Then, the two wet sheets were combined and the resultant sheet was dried under heat and pressure with a Yankee dryer having a surface temperature of 130˚C to give a sheet having a Y surface layer and Z surface layer basis weight ratio of 1:1 and having a total basis weight of 80 g/m$^2$.

The thus-obtained sheet was processed with a calender apparatus formed of a combination of a heating metal roll and a heating metal roll under the conditions of a temperature of 200˚C, a pressure of 785 N/cm and a processing speed of 20 m/minute, to give a semipermeable membrane supporting material. The sheet was dried under heat and pressure in a manner that the Y surface came in contact with the Yankee dryer.

Comparative Example 18

A main synthetic fiber (drawn polyester fiber, elongation percentage 23 %, tensile strength 0.90 N/tex, fiber diameter 18.2 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m$^2$. The thus-obtained sheet was processed with a calender apparatus formed of a combination of a heating metal roll and a heating metal roll under the conditions of a temperature of 200˚C, a pressure of 980 N/cm and a processing speed of 25 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Comparative Example 19

A main synthetic fiber (drawn polyester fiber, elongation percentage 170 %, tensile strength 0.07 N/tex, fiber diameter 18.2 $\mu$m, fiber length 5 mm) and a binder synthetic fiber (non-drawn polyester fiber, fiber diameter 6.8 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to give a sheet having a basis weight of 80 g/m$^2$. The thus-obtained sheet was processed with a calender apparatus formed of a combination of a heating metal roll and a heating metal roll under the conditions of a temperature of 200˚C, a pressure of 785 N/cm and a processing speed of 20 m/minute in a manner that one surface of the sheet was more heated like the sheet embraced one heating metal roll after nipped in the calender apparatus, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Comparative Example 20

A main synthetic fiber (drawn polyester fiber, elongation percentage 30 %, tensile strength 0.44 N/tex, fiber diameter 18.2 $\mu$m, fiber length 5 mm) and a binder synthetic fiber (non-drawn polyester fiber, fiber diameter 6.8 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130°C to give a sheet having a basis weight of 80 g/m$^2$. The thus-obtained sheet was processed with a calender apparatus formed of a combination of a heating metal roll and a heating metal roll under the conditions of a temperature of 200°C, a pressure of 785 N/cm and a processing speed of 20 m/minute in a manner that one surface of the sheet was more heated like the sheet embraced one heating metal roll after nipped in the calender apparatus, and the sheet was taken up in the form of a roll under high tension in a manner that it further embraced nipping-free two 120°C heating metal rolls in the form of an S letter, to give a semipermeable membrane supporting material. In addition, the sheet was processed in a manner that the surface that came in no contact with the Yankee dryer came in contact with the metal roll like it embraced the metal roll, the surface that embraced the metal roll was taken as Y surface, and the opposite surface, as Z surface.

Each main synthetic fiber was measured for an elongation percentage and tensile strength by the methods in the tests 10 and 11.

Test 10 (Elongation percentage of main synthetic fiber)

A main synthetic fiber was measured for an elongation percentage according to JIS L1013 2010.

Test 11 (Tensile strength of main synthetic fiber)

A main synthetic fiber was measured for a tensile strength according to JIS L1013 2010.

With regard to the semipermeable membrane supporting materials obtained in Examples 57 to 65 and Comparative Examples 18 to 20, the following evaluations were made, and Table 14 shows the results.

Test 2 (Smoothness)

Measured with a Bekk smoothness tester according to JIS P 8119.

Test 12 (Average breaking length at 5 % elongation)

A test piece having a length x a width = 15 mm x 250 mm was taken from a semipermeable membrane supporting material, and the test piece was set between two grips at a distance of 180 mm from each other and measured for tensile strengths in the machine direction and the cross direction according to JIS P 8113 (1976), and a load corresponding to its elongation by 5 % was read to determine a breaking length. Then, an average of breaking lengths in the length direction and the width direction {(5 % breaking length in the machine direction + 5 % breaking length in the cross direction)/2} was determined, and it was taken as an average breaking length (at 5 % elongation) of a non-woven fabric (unit: km). When a semipermeable membrane supporting material had a width of over 1,000 mm, three measurement places were sampled along the cross direction (right, middle and left), each sample was measured for breaking strengths in the machine direction and the cross direction, and an average value of a11 of values in the machine direction and the cross direction in these three places was taken as an average breaking length (at 5 % elongation). When a semipermeable membrane supporting material had a width of 500 to 1,000 mm, it was divided in the cross direction and two places were sampled (middle in the right side and middle in the left side). Each sample was measured for breaking lengths in the machine direction and the cross direction, and an average value of all of values in the machine direction and the cross direction in these two places was taken as an average breaking length (at 5 % elongation). When a semipermeable membrane supporting material had a width of 500 mm, an average of values of a middle portion in the machine direction and the cross direction was taken as such.

Test 13 (Thermal dimensional change ratio)

A semipermeable membrane supporting material was cut in the form of a rectangle measuring 200 mm in the machine direction and 1,000 mm in the cross direction, three places in the cross direction were marked, and the width was measured in a unit of 0.1 mm. The semipermeable membrane supporting material after its dimensional measurement was immersed in a hot water bath at 90°C for 10 minutes, water was wiped off, and the width in the same three places were measured in a unit of 0.1 mm. A change in dimension before and after it was immersed in the 90°C bath was calculated, and a ratio of the change in dimension under heat to the dimension before the immersion in the hot water bath was determined.

Test 14 (State in processing under heat and pressure)

A non-woven fabric was observed for a breaking or a creasing in the outlet of heating rolls in the processing under heat and pressure. When none of a breaking or a creasing occurred, it was evaluated as "o".

Test 15 (Creasing in application of semipermeable membrane)

In the step of applying a semipermeable membrane to a semipermeable membrane supporting material, a DMF solution of polysulfone (supplied by SIGMA-ALDRICH Corporation, weight average molecular weight $M_w$<35,000, number average molecular weight $M_n$<16,000, Commodity No. 428302) (concentration 18 mass %, temperature 20°C) as applied to the Y surface or Z surface, the polysulfone was caused to coagulate by immersing the material in 20°C pure water, and the material was washed in a 85°C hot water bath. Thereafter, the semipermeable membrane was observed for a creasing.

Test 16 (Infiltration of semipermeable membrane)

A DMF solution (concentration: 18 %) of polysulfone (supplied by SIGMA-ALDRICH Corporation, weight average molecular weight $M_w$<35,000, number average molecular weight $M_n$<16,000, Commodity No. 428302) was applied to the application surface of a semipermeable membrane supporting material with a constant-speed application apparatus having a constant clearance (trade name: Automatic Film Applicator, supplied by Yasuda Seiki Seisakusho K.K.), and the applied solution was washed with water and dried to form a polysulfone film on the Y surface or Z surface to produce a semipermeable membrane. An SEM photograph of cross-section of the semipermeable membrane was taken, and the polysulfone was evaluated for a degree of infiltration into the semipermeable membrane supporting material.
◎: Polysulfone infiltrates only up to an area near the center of a semipermeable membrane supporting material. It is the level of being remarkably good.
o : No polysulfone bleeds on the non-application surface of a semipermeable membrane supporting material. It is the level of being good.
Δ: Polysulfone bleeds partly on the non-application surface of a semipermeable membrane supporting material. It is the level of being practically usable.
x: Polysulfone bleeds on the non-application surface of a semipermeable membrane supporting material. It is the level of not being practically usable.

Test 17 (Adhesion of semipermeable membrane)

The semipermeable membrane prepared in Test 16 was evaluated for an adherence degree between the semipermeable membrane formed of the polysulfone resin and the semipermeable membrane supporting material on the basis of a resisting degree when they were peeled off each other.
◎: The adhesion between a semipermeable membrane and a semipermeable membrane supporting material is very high, and the semipermeable membrane cannot be peeled off. It is the level of being remarkably good.
o : A portion that is easily peeled off is partly present. It is the level of being good.
Δ: A semipermeable membrane and a semipermeable membrane supporting material adhere to each other, while the semipermeable membrane is easily peeled off as a whole. It is the lowest-limit level of practical use.
x: The peeling of a semipermeable membrane takes place in the step of washing with water or drying after the application of the semipermeable membrane. It is the level of not being usable.

Test 18 (Adhesion of non-application surface)

A vinyl acetate adhesive melted by heating was applied to the semipermeable-membrane-free surfaces (non-application surfaces) of semipermeable membrane supporting materials each on which the semipermeable membrane was formed in Test 16, and the non-application surfaces were immediately bonded to each other under pressure. After the bonding, a sample having a width of 25 mm and a length of 200 mm was taken, and it was evaluated for an adhesion between the non-application surfaces by carrying out a peel test of the bonded portion at a peel angle of 180 degrees and at a peel speed of 100 mm/minute by means of a tensile tester (trade name: STA-1150 TENSILON tensile tester supplied by ORIENTEC Co., LTD.).

◎: The peel strength is remarkably high, and a peeling occurs inside a semipermeable membrane supporting material.

o : The peel strength is high, and a peeling occurs partly between the adhesive and a semipermeable membrane supporting material, while most of the peeling occurs inside the semipermeable membrane supporting material.

Δ: The peel strength is high to some extent, and a peeling occurs between the adhesive and a semipermeable membrane supporting material, while a peeling is recognized inside the semipermeable membrane supporting material. It is the lowest-limit level in practical use.

x: The peel strength is low, and a peeling occurs as a whole between the adhesive and the semipermeable membrane supporting material. It is the level of not being usable.

[Table 14]

Table 14

| | | | Example 57 | Example 58 | Example 59 | Example 60 | Example 61 | Example 62 | Example 63 | Example 64 | Example 65 | Comparative Example 18 | Comparative Example 19 | Comparative Example 20 |
|---|---|---|---|---|---|---|---|---|---|---|---|---|---|---|
| Test10 | Elongation percentage of main synthetic fiber [%] | | 48 | 23 | 80 | 60 | 120 | 140 | 30 | 48 50 | 45 48 50 | 23 | 170 | 30 |
| Test11 | Tensile strength of main synthetic fiber [N/tex] | | 0.41 | 0.75 | 0.51 | 0.36 | 0.31 | 0.26 | 0.44 | 0.41 0.51 | 0.41 0.51 | 0.90 | 0.07 | 0.44 |
| Test2 | Smoothness [sec] | Y surface | 14.0 | 11.0 | 18.0 | 17.0 | 25.0 | 27.0 | 10.0 | 14.0 | 12.0 | 10.0 | 28.0 | 8.0 |
| | | Z surface | 7.0 | 6.0 | 8.0 | 8.0 | 9.0 | 10.0 | 5.0 | 5.0 | 7.0 | 5.0 | 11.0 | 5.0 |
| | Smoothness ratio Y surface.Z surface | | 2.0:1.0 | 1.8:1.0 | 2.3.1.0 | 2.1:1.0 | 2.8:1.0 | 2.7:1.0 | 2.0:1.0 | 2.8:1.0 | 1.7:1.0 | 2.0:1.0 | 2.5:1.0 | 1.6:1.0 |
| Test12 | Average breaking length (at 5 % elongation)[km] | | 3.4 | 3.8 | 3.2 | 3.1 | 2.9 | 2.5 | 3.9 | 3.3 | 3.4 | 4.1 | 2.3 | 4.3 |
| Test13 | Thermal dimensional change ratio [%] | | 0.0 | +0.7 | +0.4 | +0.3 | -0.1 | -0.3 | +0.9 | 0.0 | +0.3 | +0.4 | -0.4 | +1.1 |
| Test14 | State under processing under heat and pressure Broken sheet, Shrinkage in width | | ○ | ○ | ○ | ○ | ○ | ○ | ○ | ○ | ○ | Broken sheet | Shrinkage in width | ○ |
| Test15 | Creasing in application of semipermeable membrane | Application of semipermeable membrane to Y surface | ○ | ○ | ○ | ○ | ○ | △ | △ | ○ | ○ | ○ | × | × |
| | | Application of semipermeable membrane to Z surface | ○ | ○ | ○ | ○ | ○ | △ | △ | ○ | ○ | ○ | × | × |
| Test16 | Infiltration of semipermeable membrane | Application of semipermeable membrane to Y surface | ◎ | ○ | ◎ | ◎ | ◎ | ◎ | ○ | ◎ | ○ | ○ | ◎ | ○ |
| | | Application of semipermeable membrane to Z surface | ○ | ○ | ○ | ○ | ○ | ○ | △ | ○ | ○ | △ | ○ | △ |

EP 2 492 001 A1

(continued)

| | | | Example 57 | Example 58 | Example 59 | Example 60 | Example 61 | Example 62 | Example 63 | Example 64 | Example 65 | Comparative Example 18 | Comparative Example 19 | Comparative Example 20 |
|---|---|---|---|---|---|---|---|---|---|---|---|---|---|---|
| Test17 | Adhesion of semipermeable membrane | Application of semipermeable membrane to Y surface | ○ | ○ | ○ | ○ | ○ | ○ | ○ | ○ | ○ | ○ | ○ | ○ |
| | | Application of semipermeable membrane to Z surface | ○ | ○ | ○ | ○ | ○ | ○ | ○ | ○ | ○ | ○ | ○ | ○ |
| Test18 | Adhesion of non-application surface | Application of semipermeable membrane to Y surface | ○ | ○ | ○ | ○ | ○ | ○ | ○ | ○ | ○ | ○ | ○ | ○ |
| | | Application of semipermeable membrane to Z surface | ○ | ○ | ○ | ○ | Δ | Δ | ○ | ○ | ○ | ○ | Δ | ○ |

The semipermeable membrane supporting materials of Examples 57 to 65 had an average breaking length (at 5 % elongation) of less than 4.0 km, had a thermal dimensional change ratio of -0.3 to 1.0 % and were free from the occurrence of a creasing caused by the breaking and shrinking of sheet in processing under heat and pressure. The semipermeable membrane supporting material of Examples 57 to 61, 64 and 65 were also free from the occurrence of a creasing in the application of semipermeable membrane, and those of Examples 62 and 63 were at the level of being practically usable although they caused a slight creasing. The semipermeable membrane supporting material of Comparative Example 18 had an average breaking length (at 5 % elongation) of 4.0 km or more and had a fiber tensile strength of as high as 0.90/tex and a high average breaking length (at 5 % elongation), and the breaking of a sheet occurred at the outlet of heating rolls in the processing under heat and pressure. The semipermeable membrane supporting material of Comparative Example 19 had a thermal dimensional change ratio of less than -0.3 % and used the fiber having a tensile strength of as low as 0.07/tex and a high elongation percentage of 170 %, and a great shrinkage in width occurred in the processing under heat and pressure, resulting in the occurrence of a creasing on an edge. Further, in the step of washing with hot water in the application of a semipermeable membrane, an edge portion was curled and a creasing occurred. The semipermeable membrane supporting material of Comparative Example 20 had an average breaking length (at 5 % elongation) of as high as 4.0 km or more and a thermal dimensional change ratio of over 1.0 %, so that the material in the entire cross direction was curled, and a creasing occurred in the step of washing with hot water in the application of a semipermeable membrane.

In Examples 57, 59 to 62 and 64 and Comparative Examples 19 and 20, the infiltration of semipermeable membrane when the semipermeable membrane was applied to the Y surface having higher smoothness was excellent over a case where the semipermeable membrane was applied to the Z surface. In Examples 61 and 62 and Comparative Example 19, the adhesion of non-application surface when the semipermeable membrane was applied to the Y surface having a higher smoothness was excellent over a case where the semipermeable membrane was applied to the Z surface.

Example 66

A main synthetic fiber (fine fiber, elongation percentage 60 %, tensile strength 0.31 N/tex, fiber diameter 7.9 $\mu$m, drawn polyester fiber), 25 mass % of a main synthetic fiber (thick fiber, elongation percentage 50 %, tensile strength 0.51 N/tex, fiber diameter 12.1 $\mu$m, drawn polyester fiber), 20 mass % of a main synthetic fiber (thick fiber, elongation percentage 48 %, tensile strength 0.41 N/tex, fiber diameter 17.5 $\mu$m, drawn polyester fiber) and a binder synthetic fiber (non-drawn polyester fiber, melting point 230˚C) were mixed and dispersed in water in an amount ratio of 25:25:20:30, and a wet sheet was formed therefrom with a cylinder machine. Then, the wet sheet was dried under heat and pressure with a Yankee dryer having a surface temperature of 130˚C to give a fiber substrate having a basis weight of 80 g/m$^2$. All the fibers had a length of 5 mm. The surface that came in contact with the Yankee dryer was used as a semipermeable membrane application surface.

With a calender apparatus having a combination of upper and lower metal rolls that were both induction heated jacket rolls, the thus-obtained fiber substrate was processed under heat and pressure by setting the surface temperatures of both of the metal rolls at 200˚C under the conditions of a nip pressure of 700 N/cm and a processing speed of 20 m/minute, to give a semipermeable membrane supporting material.

Example 67

A semipermeable membrane supporting material was obtained in the same manner as in Example 66 except that the surface temperatures of the metal rolls were set at 190˚C.

Example 68

A semipermeable membrane supporting material was obtained in the same manner as in Example 66 except that the surface temperatures of the metal rolls were set at 180˚C.

Example 69

A semipermeable membrane supporting material was obtained in the same manner as in Example 66 except that the surface temperatures of the metal rolls were set at 230˚C.

Example 70

A semipermeable membrane supporting material was obtained in the same manner as in Example 66 except that the surface temperatures of the metal rolls were set at 240˚C.

Example 71

A semipermeable membrane supporting material was obtained in the same manner as in Example 66 except that a non-drawn polyester binder synthetic fiber having a melting point of 260°C was used in an amount of 30 mass % and that the surface temperatures of the metal rolls that were induction heated jacket rolls were set at 230°C.

Example 72

A semipermeable membrane supporting material was obtained in the same manner as in Example 71 except that the surface temperatures of the metal rolls were set at 220°C.

Example 73

A semipermeable membrane supporting material was obtained in the same manner as in Example 71 except that the surface temperatures of the metal rolls were set at 210°C.

Example 74

A semipermeable membrane supporting material was obtained in the same manner as in Example 66 except that upper and lower induction heated metal rolls were used in place of the upper and lower metal rolls that were both induction heated jacket rolls, and that the surface temperatures thereof were set at 200°C.

Example 75

A semipermeable membrane supporting material was obtained in the same manner as in Example 66 except that upper and lower oil-circulating jacket rolls were used in place of the upper and lower metal rolls that were both induction heated jacket rolls, and that the surface temperatures thereof were set at 200°C.

Example 76

A semipermeable membrane supporting material was obtained in the same manner as in Example 66 except that upper and lower oil-circulating metal rolls were used in place of the upper and lower metal rolls that were both induction heated jacket rolls, and that the surface temperatures thereof were set at 160°C.

Example 77

A semipermeable membrane supporting material was obtained in the same manner as in Example 76 except that the surface temperatures of the metal rolls were set at 250°C.

Example 78

A semipermeable membrane supporting material was obtained in the same manner as in Example 66 except that the surface temperatures of the metal rolls were set at 170°C.

Example 79

A semipermeable membrane supporting material was obtained in the same manner as in Example 66 except that the surface temperatures of the metal rolls were set at 250°C.

Example 80

A semipermeable membrane supporting material was obtained in the same manner as in Example 66 except that metal rolls according to a heating method based on electrically heated wires embedded in upper and lower rolls were used in place of the upper and lower metal rolls that were both induction heated jacket rolls and that the surface temperatures thereof were set at 170°C.
The semipermeable membrane supporting materials obtained in Examples 66 to 80 were subjected to evaluations in the tests 12, 13, 19 and 20, and Table 15 shows the results.

Test 19 (Air permeability profile)

A semipermeable membrane supporting material prepared in a width of 1 m was measured for air permeability [cc/cm$^2$•sec] in a total of 40 points consisting of 20 points at intervals of 5 cm in the width direction and 20 points at intervals of 5 cm downstream of 2 m in the flow direction with an apparatus for measuring air permeability (KFS-F8-AP1, supplied by KATO TECH CO., LTD.) according to JIS L1079, and a difference between a maximum value and a minimum value was used as an air permeability profile of the semipermeable membrane supporting material. A value of 1.0 or less represents a tolerable range.

Test 20 (Fluffing)

A semipermeable membrane supporting material prepared in a width of 1 m was cut to obtain a 30 cm wide middle portion in the width direction, the middle portion was folded with an outer folded line on the semipermeable membrane application surface, the folded line was made, a cylindrical roll formed of stainless steel having a diameter of 5 cm and a length of 40 cm was rolled over the folded line, and the number of fibers that fluffed in the folded line was counted. The measurement was made under n=4, and an average value is shown.

0-10 fibers: The fluffing is few, and it is the level of being very good.
11-20 fibers: The level of being good.
21-30 fibers: The lowest-limit level of practical use.
31 fibers or more: The level of not being practically usable.

[Table 15]

Table 15

| | Melting point of binder synthetic fiber[˚C] | Surface temperature [˚C] | Difference between surface temperature and melting point of binder synthetic fiber[˚C] | Test12 Average breaking length (at 5 % elongation) [km] | Test13 Thermal dimensional change ratio [%] | Test19 Air permeability profile | Test20 Fluffing |
|---|---|---|---|---|---|---|---|
| Example 66 | 230 | 200 | -30 | 3.3 | 0.0 | 0.5 | 3 |
| Example 67 | 230 | 190 | -40 | 3.2 | -0.1 | 0.6 | 6 |
| Example 68 | 230 | 180 | -50 | 3 | -0.2 | 0.7 | 10 |
| Example 69 | 230 | 230 | 0 | 3.5 | 0.0 | 0.4 | 1 |
| Example 70 | 230 | 240 | +10 | 3.6 | +0.4 | 0.5 | 1 |
| Example 71 | 260 | 230 | -30 | 3.5 | 0.0 | 0.5 | 2 |
| Example 72 | 260 | 220 | -40 | 3.4 | -0.1 | 0.6 | 4 |
| Example 73 | 260 | 210 | -50 | 3.3 | -0.2 | 0.7 | 8 |
| Example 74 | 230 | 200 | -30 | 3.3 | 0.0 | 0.6 | 4 |

(continued)

| | Melting point of binder synthetic fiber[°C] | Surface temperature [°C] | Difference between surface temperature and melting point of binder synthetic fiber[°C] | Test12 Average breaking length (at 5 % elongation) [km] | Test13 Thermal dimensional change ratio [%] | Test19 Air permeability profile | Test20 Fluffing |
|---|---|---|---|---|---|---|---|
| Example 75 | 230 | 200 | -30 | 3.3 | 0.0 | 0.6 | 4 |
| Example 76 | 230 | 160 | -70 | 2.7 | -0.3 | 1.5 | 42 |
| Example 77 | 230 | 250 | +20 | 3.9 | 0.0 | 1.1 | 0 |
| Example 78 | 230 | 170 | -60 | 2.9 | -0.3 | 0.9 | 25 |
| Example 79 | 230 | 250 | +20 | 3.9 | 0.0 | 1.2 | 0 |
| Example 80 | 230 | 170 | -60 | 3 | -0.3 | 1.3 | 38 |

In the semipermeable membrane supporting materials of Examples 66 to 73, the processing under heat and pressure was carried out using metal rolls that were induction heated jacket rolls while bringing rolls having a surface temperature of -50°C to +10°C relative to the melting point of the binder synthetic fiber into contact with the semipermeable membrane application surface, the fluffing was few, the semipermeable membrane supporting materials had excellent air permeability profile and accomplished the level of being practically usable. When Example 66 that used metal rolls that were induction heated jacket rolls and Example 74 that used induction heated metal rolls were compared, Example 66 was excellent in the evaluation results with regard to the air permeability profile and fluffing. When Example 66 that used metal rolls that were induction heated jacket rolls and Example 75 that used metal rolls that were oil-circulating jacket rolls were compared, Example 66 was excellent in the evaluation results with regard to the air permeability profile and fluffing.

In Example 76 in which the processing under heat and pressure was carried out using the oil-circulating metal rolls while bringing the rolls having surface temperatures of -70°C relative to the melting point of the binder synthetic fiber into contact with the semipermeable membrane application surface, the fluffing was much, and the air permeability profile was degraded. In Example 77 in which the processing under heat and pressure was carried out using the oil-circulating metal rolls while bringing the rolls having surface temperatures of +20°C relative to the melting point of the binder synthetic fiber into contact with the semipermeable membrane application surface, the semipermeable membrane supporting material was attached to the metal rolls, so that the air permeability profile was degraded.

In Example 78 in which the processing under heat and pressure was carried out using the metal rolls that were induction heated jacket rolls while bringing the rolls having surface temperatures of -60°C relative to the melting point of the binder synthetic fiber into contact with the semipermeable membrane application surface, the fluffing occurred, and the semipermeable membrane supporting material was at the lowest-limit level of being practically usable. In Example 79 in which the processing under heat and pressure was carried out using the metal rolls that were induction heated jacket rolls while bringing the rolls having surface temperatures of +20°C relative to the melting point of the binder synthetic fiber into contact with the semipermeable membrane application surface, the fluffing occurred, the semipermeable membrane supporting material was attached to the metal rolls, so that the air permeability profile was degraded. In Example 80 in which the processing under heat and pressure was carried out using the metal rolls that were caused to generate heat by electrically heated wires while bringing the rolls having surface temperatures of -60°C relative to the melting point of the binder synthetic fiber into contact with the semipermeable membrane application surface, the fluffing occurred much, and the air permeability profile was also degraded.

Example 81

A main synthetic fiber (thick fiber, drawn polyester fiber, elongation percentage 55 %, tensile strength 0.38 N/tex, a fiber diameter 17.5 $\mu$m, fiber length 5 mm), a binder synthetic fiber (non-drawn polyester fiber, fiber diameter 10.5 $\mu$m, fiber length 5 mm, melting point 230˚C) and a main synthetic fiber (fine fiber, drawn polyester fiber, elongation percentage 48 %, tensile strength 0.35 N/tex, fiber diameter 11.6 $\mu$m, fiber length 5 mm) were mixed and dispersed in water in an amount ratio of 30:30:40, and a wet sheet was made therefrom with a cylinder machine. Then, the wet sheet was dried under heat and pressure with a Yankee dryer having a surface temperature of 130˚C to produce a taken-up roll of a fiber substrate (sheet) having a basis weight of 80 g/m$^2$.

The taken-up roll of the fiber substrate was set at an unwinding apparatus, and 20 minutes after the drying under heat and pressure with the Yankee dryer, the fiber substrate was processed with an apparatus having a calender apparatus formed of a combination of a heating metal roll (200˚C) and a heating metal roll (200˚C) (first heat and pressure roll nip, roll nip pressure 1,000 N/cm) and a calender apparatus formed of a combination of a heating metal roll (200˚C) and a cotton roll (room temperature) (second heat and pressure roll nip, roll nip pressure 800 N/cm) in series, under the conditions of a heat and pressure processing speed of 30 m/minute (the fiber substrate moved through the second heat and pressure roll nip 12 seconds after it moved past the first heat and pressure roll nip), to give a semipermeable membrane supporting material. The surface that came in contact with the heating metal roll surface of the second heat and pressure roll nip was used as a semipermeable membrane application surface.

Example 82

A semipermeable membrane supporting material was obtained in the same manner as in Example 81 except that, 20 minutes after the drying under heat and pressure with the Yankee dryer, the processing was carried out with an apparatus having a calender apparatus formed of a combination of a heating metal roll (200˚C) and a heating metal roll (200˚C) (first heat and pressure roll nip, roll nip pressure 1,000 N/cm) and a calender apparatus formed of a combination of a heating metal roll (200˚C) and a cotton roll (room temperature) (second heat and pressure roll nip, roll nip pressure 800 N/cm) in series, under the conditions of a heat and pressure processing speed of 10 m/minute (the fiber substrate moved through the second heat and pressure roll nip 36 seconds after it moved past the first heat and pressure roll nip). The surface that came in contact with the heating metal roll surface of the second heat and pressure roll nip was used as a semipermeable membrane application surface.

Example 83

A semipermeable membrane supporting material was obtained in the same manner as in Example 81 except that, 20 minutes after the drying under heat and pressure with the Yankee dryer, the processing was carried out with an apparatus having a calender apparatus formed of a combination of a heating metal roll (200˚C) and a heating metal roll (200˚C) (first heat and pressure roll nip, roll nip pressure 1,000 N/cm) and a calender apparatus formed of a combination of a heating metal roll (200˚C) and a cotton roll (room temperature) (second heat and pressure roll nip, roll nip pressure 800 N/cm) in series, under the conditions of a heat and pressure processing speed of 30 m/minute (the fiber substrate moved through the second heat and pressure roll nip 60 seconds after it moved past the first heat and pressure roll nip) wherein the position of the second heat and pressure roll nip was moved backward. The surface that came in contact with the heating metal roll surface of the second heat and pressure roll nip was used as a semipermeable membrane application surface.

Example 84

A semipermeable membrane supporting material was obtained in the same manner as in Example 81 except that, 20 minutes after the drying under heat and pressure with the Yankee dryer, the processing was carried out with an apparatus having a calender apparatus formed of a combination of a heating metal roll (200˚C) and a heating metal roll (200˚C) (first heat and pressure roll nip, roll nip pressure 1,000 N/cm) and a calender apparatus formed of a vertical combination of three rolls including a cotton roll (without heating), a heating metal roll (200˚C) and a heating metal roll (200˚C) like a super calender used for making paper (both the second nip pressure of the cotton roll and the heating metal roll and the third nip pressure of the heating metal roll and the heating metal roll were 1,000 N/cm) in series, under the conditions of a processing speed of 10 m/minute (the fiber substrate moved through the second heat and pressure roll nip 36 seconds after it moved past the first heat and pressure roll nip, and it moved embracing the second (center) heating metal roll from above and moved past the third heat and pressure roll nip 6 seconds after it moved past the second heat and pressure roll nip). The surface that came in contact with the heating metal roll surface of the second (center) heating metal roll surface from above in the second heat and pressure roll nip and the third heat and pressure roll nip was used as a semipermeable membrane application surface.

Example 85

A main synthetic fiber (thick fiber, drawn polyester fiber, elongation percentage 40 %, tensile strength 0.55 N/tex, a fiber diameter 17.5 $\mu$m, fiber length 5 mm), a binder synthetic fiber (non-drawn polyester fiber, fiber diameter 10.5 $\mu$m, fiber length 5 mm, melting point 230°C) and a main synthetic fiber (fine fiber, drawn polyester fiber, elongation percentage 42 %, tensile strength 0.45 N/tex, fiber diameter 8.6 $\mu$m, fiber length 5 mm) were mixed and dispersed in water in an amount ratio of 30:30:40, and a wet sheet was made therefrom with a cylinder machine. Then, the wet sheet was dried under heat and pressure with a Yankee dryer having a surface temperature of 130°C to produce a taken-up roll of a fiber substrate (sheet) having a basis weight of 80 g/m$^2$.
The thus-obtained taken-up roll of the fiber substrate was set at an unwinding apparatus, and 20 minutes after the drying under heat and pressure with the Yankee dryer, the fiber substrate was processed with an apparatus having a calender apparatus formed of a combination of a heating metal roll (200°C) and a heating metal roll (200°C) (first heat and pressure roll nip, roll nip pressure 1,000 N/cm) and a calender apparatus formed of a combination of a heating metal roll (200°C) and a cotton roll (room temperature) (second heat and pressure roll nip, roll nip pressure 800 N/cm) in series, under the conditions of a heat and pressure processing speed of 30 m/minute (the fiber substrate moved through the second heat and pressure roll nip 12 seconds after it moved past the first heat and pressure roll nip), to give a semipermeable membrane supporting material. The surface that came in contact with the heating metal roll surface of the second heat and pressure roll nip was used as a semipermeable membrane application surface.

Example 86

A main synthetic fiber (thick fiber, drawn polyester fiber, elongation percentage 45 %, tensile strength 0.52 N/tex, a fiber diameter 24.7 $\mu$m, fiber length 5 mm), a binder synthetic fiber (non-drawn polyester fiber, fiber diameter 10.5 $\mu$m, fiber length 5 mm, melting point 230°C) and a main synthetic fiber (fine fiber, drawn polyester fiber, elongation percentage 50 %, tensile strength 0.38 N/tex, fiber diameter 17.5 $\mu$m, fiber length 5 mm) were mixed and dispersed in water in an amount ratio of 35:30:35, and a wet sheet was made therefrom with a cylinder machine. Then, the wet sheet was dried under heat and pressure with a Yankee dryer having a surface temperature of 130°C to produce a taken-up roll of a fiber substrate (sheet) having a basis weight of 80 g/m$^2$.
The thus-obtained taken-up roll of the fiber substrate was set at an unwinding apparatus, and 20 minutes after the drying under heat and pressure with the Yankee dryer, the fiber substrate was processed with an apparatus having a calender apparatus formed of a combination of a heating metal roll (200°C) and a heating metal roll (200°C) (first heat and pressure roll nip, roll nip pressure 1,000 N/cm) and a calender apparatus formed of a combination of a heating metal roll (200°C) and a cotton roll (room temperature) (second heat and pressure roll nip, roll nip pressure 800 N/cm) in series, under the conditions of a heat and pressure processing speed of 10 m/minute (the fiber substrate moved through the second heat and pressure roll nip 36 seconds after it moved past the first heat and pressure roll nip), to give a semipermeable membrane supporting material. The surface that came in contact with the heating metal roll surface of the second heat and pressure roll nip was used as a semipermeable membrane application surface.

Example 87

A semipermeable membrane supporting material was obtained in the same manner as in Example 81 except that, 20 minutes after the drying under heat and pressure with the Yankee dryer, the processing was carried out with an apparatus having a calender apparatus formed of a vertical combination of three rolls including a cotton roll (without heating), a heating metal roll (200°C) and a heating metal roll (200°C) like a super calender used for making paper (both the first nip pressure of the cotton roll and the heating metal roll and the second nip pressure of the heating metal roll and the heating metal roll were 1,000 N/cm), under the conditions of a processing speed of 30 m/minute (the fiber substrate moved through the second heat and pressure roll nip 2 seconds after it moved past the first heat and pressure roll nip and moved embracing the second (center) heating metal roll from above). The surface that came in contact with the second (center) heating metal roll surface from above was used as a semipermeable membrane application surface.

Example 88

A semipermeable membrane supporting material was obtained in the same manner as in Example 81 except that, 20 minutes after the drying under heat and pressure with the Yankee dryer, the processing was carried out with a calender apparatus formed of a combination of a heating metal roll (200°C) and a heating metal roll (200°C) under the conditions of a roll nip pressure of 1,000 N/cm and a heat and pressure processing speed of 30 m/minute to take up a roll of the fiber substrate (first pass), and that, 10 minutes after it was taken up, the first pass product was unwound and processed with a calender apparatus formed of a combination of a heating metal roll (200˚C) and a cotton roll (room temperature) under the conditions of a roll nip pressure of 800 N/cm and a heat and pressure processing speed of 30 m/minute (second pass). The surface that came in contact with the heating metal roll in the second pass was used as a semipermeable membrane application surface.

Example 89

A semipermeable membrane supporting material was obtained in the same manner as in Example 81 except that, 20 minutes after the drying under heat and pressure with the Yankee dryer, the processing was carried out with an apparatus having a calender apparatus formed of a combination of a heating metal roll (200˚C) and a heating metal roll (200˚C) (first heat and pressure roll nip, roll nip pressure 1,000 N/cm) and a calender apparatus formed of a heating metal roll (200˚C) and a cotton roll (room temperature) (second heat and pressure roll nip, roll nip pressure 800 N/cm) in series, under the conditions of a heat and pressure processing speed of 30 m/minute where the position of the second heat and pressure roll nip was moved backward. The surface that came in contact with the heating metal roll in the second heat and pressure roll nip was used as a semipermeable membrane application surface.

Example 90

A main synthetic fiber (drawn polyester fiber, elongation percentage 63 %, tensile strength 0.47 N/tex, a fiber diameter 24.7 $\mu$m, fiber length 5 mm) and a binder synthetic fiber (non-drawn polyester fiber, fiber diameter 10.5 $\mu$m, fiber length 5 mm, melting point 230˚C) were mixed and dispersed in water in an amount ratio of 70:30, and a wet sheet was made therefrom with a cylinder machine. Then, the wet sheet was dried under heat and pressure with a Yankee dryer having a surface temperature of 130˚C to produce a taken-up roll of a fiber substrate (sheet) having a basis weight of 80 $g/m^2$.

The thus-obtained taken-up roll of the fiber substrate was set at an unwinding apparatus, and 20 minutes after the drying under heat and pressure with the Yankee dryer, the fiber substrate was processed with an apparatus having a calender apparatus formed of a vertical combination of three rolls including a cotton roll (without heating), a heating metal roll (200˚C) and a heating metal roll (200˚C) like a super calender used for making paper (both the first nip pressure of the cotton roll and the heating metal roll and the second nip pressure of the heating metal roll and the heating metal roll were 1,000 N/cm), under the conditions of a processing speed of 30 m/minute (the fiber substrate moved through the second heat and pressure roll nip 2 seconds after it moved past the first heat and pressure roll nip and moved embracing the second (center) heating metal roll from above). The surface that came in contact with the second (center) heating metal roll surface from above was used as a semipermeable membrane application surface.

Example 91

A semipermeable membrane supporting material was obtained in the same manner as in Example 90 except that, 20 minutes after the drying under heat and pressure with the Yankee dryer, the processing was carried out with an apparatus having a calender apparatus formed of a combination of a heating metal roll (200˚C) and a heating metal roll (200˚C) (first heat and pressure roll nip, roll nip pressure 1,000 N/cm) and a calender apparatus formed of a heating metal roll (200˚C) and a cotton roll (room temperature) (second heat and pressure roll nip, roll nip pressure 800 N/cm) in series, under the conditions of a heat and pressure processing speed of 30 m/minute (the fiber substrate moved through the second heat and pressure roll nip 12 seconds after it moved past the first heat and pressure roll nip). The surface that came in contact with the heating metal roll in the second heat and pressure roll nip was used as a semipermeable membrane application surface.

Example 92

A semipermeable membrane supporting material was obtained in the same manner as in Example 90 except that, 20 minutes after the drying under heat and pressure with the Yankee dryer, the processing was carried out with a calender apparatus formed of a combination of a heating metal roll (200˚C) and a heating metal roll (200˚C) under the conditions of a roll nip pressure of 1,000 N/cm and a processing speed of 30 m/minute to take up a roll of the fiber substrate (first pass), and that, 10 minutes after it was taken up, the first pass product was unwound and processed with a calender apparatus formed of a combination of a heating metal roll (200˚C) and a cotton roll (room temperature) under the conditions of a roll nip pressure of 800 N/cm and a processing speed of 30 m/minute (second pass). The surface that came in contact with the heating metal roll in the second pass was used as a semipermeable membrane application surface.

Example 93

A main synthetic fiber (thick fiber, drawn polyester fiber, elongation percentage 55 %, tensile strength 0.38 N/tex, a fiber diameter 17.5 $\mu$m, fiber length 5 mm), a binder synthetic fiber (non-drawn polyester fiber, fiber diameter 10.5 $\mu$m, fiber length 5 mm, melting point 230°C) and a main synthetic fiber (fine fiber, drawn polyester fiber, elongation percentage 48 %, tensile strength 0.35 N/tex, fiber diameter 11.6 $\mu$m, fiber length 5 mm) were mixed and dispersed in water in an amount ratio of 30:30:40, and a wet sheet was made therefrom with a cylinder machine. Then, the wet sheet was dried under heat and pressure with a Yankee dryer having a surface temperature of 130°C to give a fiber substrate having a basis weight of 80 g/m$^2$. Thereafter, 90 seconds after the fiber substrate moved away from the Yankee dryer, it was continuously processed with an apparatus having a calender apparatus formed of a combination of a heating metal roll (200°C) and a heating metal roll (200°C) (first heat and pressure roll nip, roll nip pressure 1,000 N/cm) and a calender apparatus formed of a heating metal roll (200°C) and a cotton roll (room temperature) (second heat and pressure roll nip, roll nip pressure 800 N/cm) in series, under the conditions of a heat and pressure processing speed of 30 m/minute (the fiber substrate moved through the second heat and pressure roll nip 12 seconds after it moved past the first heat and pressure roll nip) to give a semipermeable membrane supporting material. The surface that came in contact with the heating metal roll surface in the second heat and pressure roll nip was used as a semipermeable membrane application surface.

Example 94

A main synthetic fiber (thick fiber, drawn polyester fiber, elongation percentage 55 %, tensile strength 0.38 N/tex, a fiber diameter 17.5 $\mu$m, fiber length 5 mm), a binder synthetic fiber (non-drawn polyester fiber, fiber diameter 10.5 $\mu$m, fiber length 5 mm, melting point 230°C) and a main synthetic fiber (fine fiber, drawn polyester fiber, elongation percentage 48 %, tensile strength 0.35 N/tex, fiber diameter 11.6 $\mu$m, fiber length 5 mm) were mixed and dispersed in water in an amount ratio of 30:30:40, and a wet sheet was made therefrom with a cylinder machine. Then, the wet sheet was dried under heat and pressure with a Yankee dryer having a surface temperature of 130°C to give a fiber substrate having a basis weight of 80 g/m$^2$. Thereafter, 270 seconds after the fiber substrate moved away from the Yankee dryer, it was continuously processed with an apparatus having a calender apparatus formed of a combination of a heating metal roll (200°C) and a heating metal roll (200°C) (first heat and pressure roll nip, roll nip pressure 1,000 N/cm) and a calender apparatus formed of a heating metal roll (200°C) and a cotton roll (room temperature) (second heat and pressure roll nip, roll nip pressure 800 N/cm) in series, under the conditions of a heat and pressure processing speed of 10 m/minute (the fiber substrate moved through the second heat and pressure roll nip 12 seconds after it moved past the first heat and pressure roll nip) to give a semipermeable membrane supporting material. The surface that came in contact with the heating metal roll surface in the second heat and pressure roll nip was used as a semipermeable membrane application surface.

Example 95

A main synthetic fiber (thick fiber, drawn polyester fiber, elongation percentage 55 %, tensile strength 0.38 N/tex, a fiber diameter 17.5 $\mu$m, fiber length 5 mm), a binder synthetic fiber (non-drawn polyester fiber, fiber diameter 10.5 $\mu$m, fiber length 5 mm, melting point 230°C) and a main synthetic fiber (fine fiber, drawn polyester fiber, elongation percentage 48 %, tensile strength 0.35 N/tex, fiber diameter 11.6 $\mu$m, fiber length 5 mm) were mixed and dispersed in water in an amount ratio of 30:30:40, and a wet sheet was made therefrom with a cylinder machine. Then, the wet sheet was dried under heat and pressure with a Yankee dryer having a surface temperature of 130°C to give a fiber substrate having a basis weight of 80 g/m$^2$. Thereafter, 600 seconds after the fiber substrate moved away from the Yankee dryer, it was continuously processed with an apparatus having a calender apparatus formed of a combination of a heating metal roll (200°C) and a heating metal roll (200°C) (first heat and pressure roll nip, roll nip pressure 1,000 N/cm) and a calender apparatus formed of a heating metal roll (200°C) and a cotton roll (room temperature) (second heat and pressure roll nip, roll nip pressure 800 N/cm) in series, under the conditions of a heat and pressure processing speed of 4.5 m/minute (the fiber substrate moved through the second heat and pressure roll nip 12 seconds after it moved past the first heat and pressure roll nip) to give a semipermeable membrane supporting material. The surface that came in contact with the heating metal roll surface in the second heat and pressure roll nip was used as a semipermeable membrane application surface.

The semipermeable membrane supporting materials obtained in Examples 81 to 95 were subjected to evaluations in the tests 1, 2, 4, 5, 6, 12, 13 and 20, and Table 16 shows the results. "Transit time" in Table 16 is a time period that the sheet took to move from the first heat and pressure roll nip to the second heat and pressure roll nip.

[Table 16]

Table 16

| | Transit time [second] | Average fiber diameter of main synthetic fiber [μm] | Test1 | Test2 | | | Test4 | Test5 | Test6 | Test12 | Test13 | Test20 |
|---|---|---|---|---|---|---|---|---|---|---|---|---|
| | | | Thickness [μm] | Smoothness [sec.] | | Smoothness ratio | Infiltration of semipermeable membrane | Adhesion of semipermeable membrane | Adhesion of non-application surface | Average breaking length (at 5 % elongation) [km] | Thermal dimensional change ratio [%] | Fluffing |
| | | | | Semipermeable membrane application surface | Non-application surface | Semipermeable membrane application surface :Non-application surface | | | | | | |
| Example 81 | 12 | 14.1 | 96 | 32.0 | 14.0 | 2.3:1.0 | ○ | ○ | ○ | 3.3 | +0.3 | 10 |
| Example 82 | 36 | 14.1 | 94 | 36.0 | 18.0 | 2.0:1.0 | ◎ | ○ | ○ | 3.6 | +0.2 | 5 |
| Example 83 | 60 | 14.1 | 97 | 25.0 | 13.0 | 1.9:1.0 | ○ | ○ | ○ | 3.3 | +0.3 | 20 |
| Example 84 | 36 | 14.1 | 91 | 40.0 | 23.0 | 1.7:1.0 | ◎ | ○ | ○ | 3.6 | +0.2 | 3 |
| Example 85 | 12 | 12.4 | 94 | 42.0 | 21.0 | 2.0:1.0 | ◎ | ○ | ○ | 3.7 | +0.2 | 10 |
| Example 86 | 36 | 21.1 | 100 | 31.0 | 11.5 | 2.7:1.0 | ○ | ○ | ○ | 3.5 | +0.1 | 20 |
| Example 87 | 2 | 14.1 | 94 | 34.0 | 16.0 | 2.1:1.0 | ○ | ○ | ○ | 3.3 | 0.0 | 8 |
| Example 88 | 600 | 14.1 | 98 | 21.0 | 10.0 | 2.1:1.0 | Δ | ○ | ○ | 3.3 | +0.2 | 25 |
| Example 89 | 70 | 14.1 | 98 | 23.0 | 11.0 | 2.1:1.0 | Δ | ○ | ○ | 3.3 | +0.2 | 23 |
| Example 90 | 2 | 24.7 | 103 | 18.0 | 10.0 | 1.8:1.0 | Δ | ○ | ○ | 3.1 | 0.0 | 15 |

(continued)

| | Transit time [second] | Average fiber diameter of main synthetic fiber [μm] | Test1 Thickness [μm] | Test2 Smoothness [sec.] Semipermeable membrane application surface | Test2 Smoothness [sec.] Non-application surface | Smoothness ratio Semipermeable membrane application surface : Non-application surface | Test4 Infiltration of semipermeable membrane | Test5 Adhesion of semipermeable membrane | Test6 Adhesion of non-application surface | Test12 Average breaking length (at 5 % elongation) [km] | Test13 Thermal dimensional change ratio [%] | Test20 Fluffing |
|---|---|---|---|---|---|---|---|---|---|---|---|---|
| Example 91 | 12 | 24.7 | 105 | 17.0 | 9.0 | 1.9:1.0 | △ | ○ | ○ | 3.1 | +0.2 | 31 |
| Example 92 | 600 | 24.7 | 107 | 15.0 | 8.0 | 1.9:1.0 | × | ○ | ○ | 3.1 | +0.2 | 35 |
| Example 93 | 12 | 14.1 | 95 | 34.2 | 15.6 | 2.2:1.0 | ○ | ○ | ○ | 3.3 | +0.1 | 6 |
| Example 94 | 12 | 14.1 | 93 | 38.5 | 19.2 | 2.0:1.0 | ○ | ○ | ○ | 3.3 | +0.1 | 2 |
| Example 95 | 12 | 14.1 | 90 | 41.2 | 22.4 | 1.8:1.0 | ◎ | ○ | △ | 3.5 | +0.1 | 1 |

The semipermeable membrane supporting materials of Examples 81 to 87 accomplished the level of being practically usable in the evaluations of adhesion of semipermeable membrane and adhesion of non-application surface and were also excellent with regard to the fiber fluffing on semipermeable membrane application surface. When Example 81 and Example 85 were compared, Example 85 in which the fine fiber having a fiber diameter of 10.0 $\mu$m or less was contained as a main synthetic fiber was excellent in the result of evaluation of infiltration of semipermeable membrane. Further, when Example 82 and Example 86 were compared, Example 82 in which the main synthetic fiber had an average fiber diameter of 20.0 $\mu$m or less was excellent in the result of evaluation of infiltration of semipermeable membrane, and in Example 82, the fiber fluffing on the semipermeable membrane application surface was inhibited. The semipermeable membrane supporting material of Example 87 was excellent in the evaluation of fluffing since the time period that the sheet took to arrive at the second heat and pressure roll nip after it moved out of the first heat and pressure roll nip was small as compared with Examples 81 and 83.

In contrast, in the semipermeable membrane supporting materials of Examples 88 and 89, the time period that the sheet took to arrive at the second heat and pressure roll nip after it moved out of the first heat and pressure roll nip was over 60 seconds, and they were inferior in the fluffing on semipermeable membrane application surface as compared with Examples 81 to 87. In the semipermeable membrane supporting materials of Examples 90 and 91, although the time period that the sheet took to arrive at the second heat and pressure roll nip after it moved out of the first heat and pressure roll nip was less than 60 seconds, they contained only one main synthetic fiber, so that they had low smoothness, and they had polysulfone resin that bled partly on their non-application surfaces. The semipermeable membrane supporting material of Example 92 had the same fiber composition as those of the semipermeable membrane supporting materials of Examples 90 and 91, while the sheet was nipped in the second heat and pressure rolls 10 minutes after it left the first heat and pressure roll nip, so that more semipermeable membrane bled on the non-application surface than the semipermeable membrane supporting materials of Examples 90 and 91, and more fluffing occurred.

In the semipermeable membrane supporting materials of Examples 93 to 95, the processing under heat and pressure was carried out online within 10 minutes after the drying in the step of forming the wet sheet, less fluffing occurred than that in the semipermeable membrane supporting material of Example 88, and they were excellent in the evaluation of fluffing.

Industrial Utility

The semipermeable membrane supporting material, the spiral type semipermeable membrane element and the process for producing a semipermeable membrane supporting material, provided by this invention, can be used in the fields of water clarification, food concentration, wastewater treatment, seawater desalination, the separation of microorganisms such as bacteria, yeast and virus, medical uses typified by blood filtering, and the production of ultrapure water for washing semiconductors.

**Claims**

1. A semipermeable membrane supporting material formed of a non-woven fabric comprising two or more main synthetic fibers having different fiber diameters and a binder synthetic fiber and having a semipermeable membrane application surface and a non-application surface having a semipermeable membrane application surface:non-application surface smoothness ratio of from 5.0:1.0 to 1.1:1.0.

2. The semipermeable membrane supporting material of claim 1, wherein the main synthetic fibers have an average fiber diameter of 20.0 $\mu$m or less.

3. The semipermeable membrane supporting material of claim 1 or 2, wherein all of the main synthetic fibers have a fiber diameter of 20.0 $\mu$m or less.

4. The semipermeable membrane supporting material of any one of claims 1 to 3, which contains at least one fiber having a fiber diameter of 10.0 $\mu$m or less as a main synthetic fiber.

5. The semipermeable membrane supporting material of any one of claims 1 to 4, which contains, as main synthetic fibers, a thick fiber having an aspect ratio of 200 to 1,000 and a fiber diameter of 2.0 $\mu$m or less and a fine fiber having a smaller fiber diameter than the thick fiber and having an aspect ratio of 200 to 2,000.

6. The semipermeable membrane supporting material of any one of claims 1 to 5, wherein the main synthetic fibers and the binder synthetic fiber have different fiber diameters.

7. The semipermeable membrane supporting material of any one of claims 1 to 6, which further comprises a fibrillated organic fiber.

8. The semipermeable membrane supporting material of any one of claims 1 to 7, wherein the non-woven fabric has a multiple-layered structure.

9. The semipermeable membrane supporting material of claim 8, wherein the main synthetic fibers contained in a semipermeable membrane application surface layer have an average fiber diameter smaller than an average fiber diameter of the main synthetic fibers contained in a non-application surface layer.

10. The semipermeable membrane supporting material of any one of claims 1 to 9, wherein the semipermeable membrane application side surface has a surface roughness arithmetic mean (Ra) of 5.0 to 15.0 $\mu$m.

11. The semipermeable membrane supporting material of any one of claims 1 to 10, wherein the semipermeable membrane application side surface has a surface ten-point average roughness (Rz) of 150 $\mu$m or less.

12. The semipermeable membrane supporting material of any one of claims 1 to 11, wherein the semipermeable membrane application side surface has an absorption coefficient of 5 to 100 ml/m$^2$•msec$^{1/2}$ when measured with a Bristow tester using a solution of a polysulfone resin having a solid concentration of 15 mass% in n-methylpyrrolidone at 25°C-60 %RH.

13. The semipermeable membrane supporting material of any one of claims 1 to 12, wherein the semipermeable membrane application side surface has a dynamic liquid transition amount of 5 to 30 ml/m$^2$ for a contact time period of 0.2 second when measured with a Bristow tester using a solution of a polysulfone resin having a solid concentration of 15 mass% in n-methylpyrrolidone at 25°C-60 %RH.

14. The semipermeable membrane supporting material formed of a non-woven fabric comprising a main synthetic fiber and a binder synthetic fiber, having an average breaking length of less than 4.0 km in the machine direction (MD) and the cross direction (CD) at an elongation by 5 % and having a dimensional change ratio, measured under heat in the cross direction (CD), of -0.3 to +1.0 %.

15. The semipermeable membrane supporting material of claim 14, which has a semipermeable membrane application surface having smoothness higher than that of a non-application surface.

16. The semipermeable membrane supporting material of claim 14 or 15, wherein the main synthetic fiber has an elongation percentage (JIS L1013 2010) of 25 to 150 % and has a tensile strength of 0.08 to 0.8 N/tex.

17. A spiral type semipermeable membrane element comprising the semipermeable membrane supporting material recited in any one of claims 1 to 16.

18. A process for producing the semipermeable membrane supporting material recited in any one of claims 1 to 16, which comprises bringing a single-layered wet sheet produced by means of one paper machine selected from the group consisting of a Fourdrinier machine, a cylinder machine and an inclined-wire machine or a multilayer-structured wet sheet produced by means of a combination paper machine that is a combination of the same or different machines selected from the said group into intimate contact with a heated roll to dry it under heat and pressure, and processing said sheet under heat and pressure.

19. The process for producing a semipermeable membrane supporting material as recited in claim 18, wherein the roll used for processing under heat and pressure is an induction heated metal roll.

20. The process for producing a semipermeable membrane supporting material as recited in claim 18 or 19, wherein the roll used for processing under heat and pressure is a jacket roll.

21. The process for producing a semipermeable membrane supporting material as recited in any one of claims 18 to 20, wherein a roll having a surface temperature of - 50°C to +10°C relative to a melting point of the binder synthetic fiber is brought into contact with a semipermeable membrane application surface in the processing under heat and pressure.

22. The process for producing a semipermeable membrane supporting material as recited in any one of claims 18 to 21, wherein the processing under heat and pressure comprises passing the sheet through a first heat and pressure roll nip and a second heat and pressure roll nip, the sheet being moved past the second heat and pressure roll nip within 60 seconds after it moves past the first heat and pressure roll nip.

23. The process for producing a semipermeable membrane supporting material as recited in any one of claims 18 to 22, wherein the processing under heat and pressure comprises passing the sheet through a first heat and pressure roll nip and a second heat and pressure roll nip, and further comprises the step of heating the sheet with a heating apparatus between the first heat and pressure roll nip and the second heat and pressure roll nip.

24. The process for producing a semipermeable membrane supporting material as recited in claim 23, wherein the heating apparatus is a roll-shaped heating apparatus.

25. process for producing a semipermeable membrane supporting material as recited in claim 18, wherein a single-layered wet sheet produced by means of one paper machine selected from the group consisting of a Fourdrinier machine, a cylinder machine and an inclined-wire machine or a multilayer-structured wet sheet produced by means of a combination paper machine that is a combination of the same or different machines selected from the said group is brought into intimate contact with a heated roll and dried under heat and pressure to produce a sheet, and then said sheet is processed under heat and pressure within 10 minutes.

Fig. 1

(A)　　　　　　　(B)

(C)

(D)

Metal

Metal, Cotton or Elastic

Cotton or Elastic

Fig. 2

(E)

(F)

(G)

Fig. 3

(H)

(I)

Fig. 4

(J)

(K)

(L)

Fig. 5

(M)

(N)

Fig. 6

(O)

(P)

Fig. 7

(Q)

(R)

**INTERNATIONAL SEARCH REPORT**

| International application No. |
|---|
| PCT/JP2010/068791 |

A. CLASSIFICATION OF SUBJECT MATTER
*B01D69/10*(2006.01)i, *D21H13/10*(2006.01)i, *D21H15/02*(2006.01)i

According to International Patent Classification (IPC) or to both national classification and IPC

B. FIELDS SEARCHED

Minimum documentation searched (classification system followed by classification symbols)
B01D69/10, D21H13/10, D21H15/02

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-95937 A (Awa Paper Mfg. Co., Ltd.),<br>02 April 2002 (02.04.2002),<br>entire text; all drawings<br>& US 2002/0056535 A1 | 1-17<br>18-25 |
| X<br>Y | JP 2008-238147 A (Hokuetsu Paper Mills, Ltd.),<br>09 October 2008 (09.10.2008),<br>claims 1, 3; examples<br>(Family: none) | 14-17<br>18-25 |
| X<br>Y | JP 2006-241631 A (Solotex Corp.),<br>14 September 2006 (14.09.2006),<br>claims 1 to 9; paragraph [0032]; examples<br>(Family: none) | 14-17<br>18-25 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 December, 2010 (21.12.10) | Date of mailing of the international search report<br>28 December, 2010 (28.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/068791 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-225630 A  (Miki Tokushu Paper Mfg. Co., Ltd.),<br>25 August 1998 (25.08.1998),<br>claims 1 to 7; paragraphs [0037] to [0042]<br>& EP 1044719 A1          & WO 2000/009246 A1 | 18-25 |
| A | JP 2009-61373 A  (Toray Industries, Inc.),<br>26 March 2009 (26.03.2009),<br>claims 1 to 4<br>(Family: none) | 1-25 |
| A | WO 2009/017086 A1  (Toray Industries, Inc.),<br>05 February 2009 (05.02.2009),<br>claims 1 to 19<br>& US 2010/0193428 A1     & EP 2174703 A1<br>& CN 101765456 A          & KR 10-2010-0037055 A | 1-25 |

Form PCT/ISA/210 (continuation of second sheet) (July 2009)

**EP 2 492 001 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001252543 A
- JP 60238103 A
- JP 2002095937 A
- US 20020056535 A
- JP 2009178915 A
- JP 2003245530 A
- WO 2003049843 A
- US 20050087070 A
- JP 10225630 A
- WO 200009246 A

- EP 1044719 A
- JP 11347383 A
- JP 2001079368 A
- US 20050176330 A
- JP 2008238147 A
- US 5851355 A
- US 6156680 A
- JP 60251904 A
- US 5833807 A
- US 5026456 A

**Non-patent literature cited in the description**

- New Experimental Chemical Course. Polymer II'' compiled by the Chemical Society of Japan. Maruzen Co., Ltd, vol. 9, 969-998